# EUROPÄISCHE PATENTSCHRIFT

(11) **EP 2 049 345 B1**
(45) Veröffentlichungstag und Bekanntmachung des Hinweises auf die Patenterteilung: **19.06.2013**
(21) Anmeldenummer: 07786028.6
(22) Anmeldetag: 12.07.2007
(51) Int. Cl.: B42D 15/00, B42D 15/10

(54) **VERFAHREN ZUR HERSTELLUNG EINES MEHRSCHICHTKÖRPERS SOWIE MEHRSCHICHTKÖRPER**
METHOD FOR PRODUCING A MULTI-LAYER BODY, AND MULTI-LAYER BODY
PROCÉDÉ DE FABRICATION D'UN CORPS MULTICOUCHE ET CORPS MULTICOUCHE

(30) Priorität: 09.08.2006 DE 102006037431; 15.01.2007 DE 102007002163
(43) Veröffentlichungstag der Anmeldung: 22.04.2009
(73) Patentinhaber: OVD Kinegram AG, 6301 Zug (CH)
(72) Erfinder: STAUB, René, CH-6332 Hagendorn (CH); HANSEN, Achim, CH-6300 Zug (CH); BREHM, Ludwig, 91325 Adelsdorf (DE); SEITZ, Mathias, 06618 Naumburg (DE); WILD, Heinrich, 91074 Herzogenaurach (DE)
(74) Vertreter: Zinsinger, Norbert
(86) Internationale Anmeldenummer: PCT/EP2007/006196
(87) Internationale Veröffentlichungsnummer: WO 2008/017362

(56) Entgegenhaltungen:
- EP-A- 0 382 944
- WO-A-2006/084686
- DE-A1- 10 318 103
- US-A- 4 094 575
- US-A- 4 353 952
- US-A- 5 138 604
- US-A- 5 538 753
- US-A1- 2005 141 094
- US-B1- 6 328 342

## Beschreibung

Die Erfindung betrifft Verfahren zur Herstellung eines Mehrschichtkörpers mit mindestens einer partiell ausgeformten Funktionsschicht im Register zu mindestens einer weiteren partiell ausgeformten Schicht, sowie einen danach erhältlichen Mehrschichtkörper. Die Erfindung betrifft weiterhin insbesondere ein Sicherheitselement für Sicherheits- und Wertdokumente mit einem derartigen Mehrschichtkörper.

Optische Sicherheitselemente werden häufig dazu verwendet, das Kopieren und den Missbrauch von Dokumenten oder Produkten zu erschweren und möglichst zu verhindern. So finden optische Sicherheitselemente häufig Verwendung zur Sicherung von Dokumenten, von Banknoten, von Kreditkarten, von Geldkarten, von Ausweisen, von Verpackungen und dergleichen. Hierbei ist es bekannt, optisch variable Elemente zu verwenden, die mit herkömmlichen Kopierverfahren nicht dupliziert werden können. Es ist auch bekannt, Sicherheitselemente mit einer strukturierten Metallschicht auszustatten, die in Form eines Texies, Logo oder sonstigen Musters ausgebildet ist.

Das Erzeugen einer strukturierten Metallschicht aus einer beispielsweise durch Sputtern flächig aufgebrachten Metallschicht erfordert eine Vielzahl von Prozessen, insbesondere wenn feine Strukturen erzeugt werden sollen, die eine hohe Fälschungssicherheit aufweisen. So ist es beispielsweise bekannt, eine vollflächig aufgebrachte Metallschicht durch Positiv-/ Negativ-Ätzen oder durch Laser-Ablation partiell zu demetallisieren und damit zu strukturieren. Alternativ dazu ist es möglich, Metallschichten mittels Verwendung von Bedampfungsmasken bereits in strukturierter Form auf einen Träger aufzubringen.

Je mehr Fertigungsschritte zur Herstellung des Sicherheitselements vorgesehen sind, desto größere Bedeutung erhält die Passergenauigkeit der einzelnen Verfahrensschritte bzw. die Genauigkeit der Positionierung der einzelnen Werkzeuge bei der Bildung des Sicherheitselements in Bezug auf am Sicherheitselement bereits vorhandene Merkmale oder Strukturen.

Die GB 2 136 352 A beschreibt ein Herstellungsverfahren zur Herstellung einer mit einem Hologramm als Sicherheitsmerkmal ausgestatteten Siegelfolie. Hierbei wird eine Kunststoff-Folie nach dem Einprägen einer diffraktiven Reliefstruktur vollflächig metallisiert und sodann passergenau zu der eingeprägten diffraktiven Reliefstruktur bereichsweise demetallisiert. Das passergenaue Demetallisieren ist kostenaufwendig und die erreichbare Auflösung ist durch die Justiertoleranzen und den verwendeten Prozeß begrenzt.

EP 0 537 439 B2 beschreibt Verfahren zur Herstellung eines Sicherheitselement mit filigranen Mustern. Die Muster sind aus mit einer Metallschicht bedeckten diffraktiven Strukturen gebildet und von transparenten Bereichen, in denen die Metallschicht entfernt ist, umgeben. Es ist vorgesehen, den Umriß des filigranen Musters als Vertiefung in ein metallbeschichtetes Trägermaterial einzubringen, dabei zugleich den Boden der Vertiefungen mit den diffraktiven Strukturen zu versehen und sodann die Vertiefungen mit einem Schutzlack zu verfüllen. Überschüssiger Schutzlack soll mittels eines Abstreichmessers entfernt werden. Nach dem Auftragen des Schutzlacks ist vorgesehen, die Metallschicht in den ungeschützten Bereichen durch Ätzen zu entfernen.

Ferner beschreiben die Schriften EP-A-0382944 und US-A-4353952 jeweils ein Verfahren und einen damit herstellbaren Mehrschichtkörper mit den Merkmalen der Oberbegriffe der Ansprüche 1 und 9.

Aufgabe der vorliegenden Erfindung ist es, einen besonders schwer zu reproduzierenden Mehrschichtkörper und ein Verfahren zur Herstellung eines solchen Mehrschichtkörpers anzugeben, bei dem im perfekten oder nahezu perfekten Register zu einer weiteren partiell ausgeformten Schicht eine partiell ausgeformte Funktionsschicht ausgeformt wird.

Die Aufgabe wird durch das Verfahren zur Herstellung eines Mehrschichtkörpers nach Anspruch 1 und durch den Mehrschichtkörper nach Anspruch 9 gelöst wodurch die Ausbildung eines besonders fälschungssicheren Mehrschichtkörpers ermöglicht wird.

Unter einer Funktionsschicht wird hier eine solche verstanden, die entweder bei bestimmten Wellenlängen einen sichtbaren Farbeindruck zeigt oder deren Vorhandensein elektrisch, magnetisch oder chemisch detektiert werden kann. Beispielsweise kann es sich um eine Schicht handeln, die Farbmittel wie farbige Pigmente oder Farbstoffe enthält und bei normalem Tageslicht farbig, insbesondere bunt ist. Es kann sich aber auch um eine Schicht handeln, die spezielle Farbmittel beinhaltet, wie photochrome oder thermochrome Stoffe, lumineszierende Stoffe, einen optisch variablen Effekt erzeugende Stoffe, wie Interferenzpigmente, Flüssigkristalle, metamere Pigmente usw., reaktive Farbstoffe, Indikator-Farbstoffe, welche unter reversibler oder irreversibeler Farbänderung mit anderen Stoffen reagieren, Ampelpigmente, welche bei Anregung mittels Strahlung unterschiedlicher Wellenlänge unterschiedliche Farbemissionen zeigen, magnetische Stoffe, elektrisch leitfähige Stoffe, im elektrischen oder magnetischen Feld einen Farbwechsel zeigende Stoffe, sogenannte E-ink^{®} und ähnliches.

Unter einer Replizierschicht wird allgemein eine oberflächlich mit einer Reliefstruktur herstellbare Schicht verstanden. Darunter fallen beispielsweise organische Schichten wie Kunststoff- oder Lackschichten oder anorganische Schichten wie anorganische Kunststoffe (z.B. Silikone), Glasschichten, Halbleiterschichten, Metallschichten usw., aber auch Kombinationen daraus.

In eine als Kunststoff- oder Lackschicht, insbesondere aus einem unter UV-Bestrahlung härtenden Lack ausgebildete Replizierschicht wird insbesondere mittels eines Werkzeuges, insbesondere eines Stempels oder einer Walze, oberflächlich eine Reliefstruktur eingeprägt. Auch eine Bildung einer oberflächlichen Reliefstruktur mittels Spritzguss oder die Verwendung eines Photolithographieprozesses ist möglich. Auf einer als Glas-, Halbleiter- oder Metallschicht ausgebildeten Replizierschicht wird insbesondere oberflächlich eine Reliefstruktur gebildet, indem ein Photolithographieprozesses angewandt wird, indem eine photoempfindliche Schicht aufgebracht, über eine Maske belichtet und entwickelt wird. Die Bereiche der photoempfindlichen Schicht, welche auf der Replizierschicht verbleiben, werden als Ätzmaske verwendet und durch Ätzen eine Reliefstruktur in der Replizierschicht gebildet. Anschließend wird die photoempfindliche Schicht vorzugsweise entfernt. Je nach eingesetztem Herstellungsverfahren und dem späterem Verwendungszweck des gebildeten Mehrschichtkörpers sind transmissive oder nicht-transmissive Replizierschichten, insbesondere für das menschliche Auge transparente oder opake Replizierschichten einsetzbar.

In dem mindestens einen zweiten Bereich der Replizierschicht wird vorzugsweise mindestens eine zweite Reliefstruktur ausgebildet, welche ein zur ersten Reliefstruktur unterschiedliches Tiefen-zu-Breiten-Verhältnis h/d aufweist. Die Bildung der zweiten Reliefstruktur erfolgt insbesondere analog zur Bildung der ersten Reliefstruktur. In dem mindestens einen zweiten Bereich können zudem mindestens zwei unterschiedliche zweite Reliefstrukturen ausgebildet werden.

Es hat sich bewährt, wenn die erste Reliefstruktur mit einem größeren Tiefen-zu-Breiten-Verhältnis ausgebildet wird als die mindestens eine zweite Reliefstruktur und eine Transmission, insbesondere eine Transparenz der ersten Schicht im ersten Bereich gegenüber der Transmission, insbesondere der Transparenz der ersten Schicht in dem mindestens einen zweiten Bereich erhöht ist.

Vorzugsweise wird die erste und/oder die mindestens eine zweite Reliefstruktur als eine diffraktive Reliefstruktur ausgebildet. Insbesondere ist es bevorzugt, in dem ersten Bereich als erste Reliefstruktur eine diffraktive Reliefstruktur mit einem Tiefen-zu-Breiten-Verhältnis der einzelnen Strukturelemente von > 0,3 auszubilden. Eine Spatialfrequenz der ersten Reliefstruktur wird insbesondere in einem Bereich von > 300 Linien/mm, insbesondere in einem Bereich von > 1000 Linien/mm gewählt. Weiter kann vorgesehen sein, dass das Produkt aus Spatialfrequenz und Relieftiefe der ersten Reliefstruktur größer als das Produkt aus Spatialfrequenz und Relieftiefe der zweiten Reliefstruktur ist. Auch hierdurch ist es möglich, dass durch die Gestaltung der Reliefstrukturen in der Replizierschicht im ersten Bereich und im zweiten Bereich die Transmission der auf die Replizierschicht im ersten Bereich aufgebrachten ersten Schicht gegenüber der im zweiten Bereich aufgebrachten Schicht erhöht wird.

Die erste Reliefstruktur und/oder die mindestens eine zweite Reliefstruktur können als lichtbeugende und/oder lichtbrechende und/oder lichtstreuende und/oder lichtfokussierende Mikro- oder Nanostruktur, als isotrope oder anisotrope Mattstruktur, als binäre oder kontinuierliche Fresnellinse, als Mikroprismenstruktur, als Blazegitter, als Makrostruktur oder als Kombinationsstruktur aus diesen ausgebildet werden.

Weiter ist es auch möglich, dass die erste Reliefstruktur und/oder die mindestens eine zweite Reliefstruktur ein lineares oder gekreuztes Sinusgitter ist. Die Spatialfrequenz des Sinusgitters liegt hierbei im Bereich von > 300 Linien/mm. Weiter ist es möglich, dass das Sinusgitter auch auf einem transformierten Linienraster basiert, beispielsweise an einem wellenförmigen oder kreisförmigen Raster orientiert ist. Bei einem gekreuzten Sinusgitter beiträgt die Differenz der Azimutwinkel bevorzugt 90°, kann jedoch auch einen Winkelbereich von 5° bis 85° einschliessen. Sinusgitter bedeutet hierbei, dass das Oberflächenrelief der Reliefstruktur eine sinusförmige Form hat. Neben sinusförmigen Oberflächenreliefs sind auch Reliefstrukturen mit anders gearteten Oberflächen-Reliefformen möglich, beispielsweise binäre (rechteckförmige), dreieckförmige usw. Reliefformen.

Die in die Replizierschicht eingebrachten Reliefstrukturen können auch so gewählt sein, dass sie der Ausrichtung von Flüssigkristall(-Polymeren) dienen können. So kann dann die Replizierschicht und/oder die erste Schicht als Orientierungsschicht für Flüssigkristalle verwendet werden. In solche Orientierungsschichten werden beispielsweise rillenförmige Strukturen eingebracht, an denen sich die Flüssigkristalle ausrichten, bevor sie in dieser Lage durch Vernetzung oder in sonstiger Weise in ihrer Ausrichtung fixiert werden. Es kann vorgesehen sein, dass die vernetzte Flüssigkristallschicht die mindestens eine weitere partiell ausgeformte Schicht bildet.

Die Orientierungsschichten können Bereiche aufweisen, in denen sich die Orientierungsrichtung der Struktur stetig ändert. Wird ein mittels einer solchen diffraktiven Struktur ausgebildeter Bereich durch einen Polarisator mit beispielsweise rotierender Polarisationsrichtung betrachtet, so lassen sich aufgrund der sich linear ändernden Polarisationsrichtung des Bereiches verschiedene gut erkennbare Sicherheitsmerkmale, beispielsweise Bewegungseffekte, erzeugen. Es kann auch vorgesehen sein, dass die Orientierungsschicht diffraktive Strukturen zur Orientierung der Flüssigkristalle aufweist, die lokal unterschiedlich so ausgerichtet sind, so dass die Flüssigkristalle unter polarisiertem Licht betrachtet eine Information, wie beispielsweise ein Logo, darstellen.

Durch die Verwendung diffraktiver Reliefstrukturen ist es bei geeigneter Wahl der Schichtdicke der ersten Schicht möglich, sehr große, bereits mit dem Auge erkennbare Unterschiede in der optischen Dichte der ersten Schicht im ersten Bereich und im zweiten Bereich zu generieren. Überraschenderweise wurde jedoch festgestellt, dass derart große Unterschiede in der Transmission im ersten und im zweiten Bereich für die Umsetzung des erfindungsgemäßen Verfahrens nicht zwingend sind. Strukturen mit geringen Unterschieden im Tiefen-zu-Breiten-Verhältnis weisen bei geringer Schichtdicke üblicherweise relativ geringe Unterschiede in der Transmission auf. Selbst geringe relative Unterschiede können jedoch verstärkt werden durch Vergrößerung der Schichtdicke der ersten Schicht und damit der mittleren optischen Dichte. So lassen sich bereits bei recht geringen Unterschieden der Transmission der ersten Schicht im ersten und im zweiten Bereich gute Ergebnisse erzielen.

Das dimensionslose Tiefen-zu-Breiten-Verhältnis ist ein kennzeichnendes Merkmal für die Vergrößerung der Oberfläche vorzugsweise periodischer Strukturen, beispielsweise mit sinusquadratischem Verlauf. Als Tiefe ist hier der Abstand zwischen dem höchsten und dem tiefsten aufeinanderfolgenden Punkt einer solchen Struktur bezeichnet, d.h. es handelt sich um den Abstand zwischen "Berg" und "Tal". Als Breite ist der Abstand zwischen zwei benachbarten höchsten Punkten, d.h. zwischen zwei "Bergen", bezeichnet. Je höher nun das Tiefen-zu-Breiten-Verhältnis ist, desto steiler sind die "Bergflanken" ausgebildet und desto dünner ist die auf den "Bergflanken" abgeschiedene erste Schicht ausgebildet. Der Effekt der Ausbildung höherer Transmission, insbesondere Transparenz bei Zunahme des Tiefen-zu-Breiten-Verhältnisses wird auch bei Strukturen mit vertikalen Flanken beobachtet, beispielsweise bei Rechteckgittern. Es kann sich aber auch um Strukturen handeln, auf die dieses Modell nicht anwendbar ist. Beispielsweise kann es sich um diskret verteilte linienförmige Bereiche handeln, die nur als ein "Tal" ausgebildet sind, wobei der Abstand zwischen zwei "Tälern" um ein Vielfaches höher ist als die Tiefe der "Täler". Bei formaler Anwendung der vorstehend genannten Definition würde das so berechnete Tiefen-zu-Breiten-Verhältnis annähernd Null sein und nicht das charakteristische physikalische Verhalten widerspiegeln. Deshalb ist bei diskret angeordneten Strukturen, die im wesentlichen nur aus einem "Tal" gebildet sind, die Tiefe des "Tales" zur Breite des "Tales" ins Verhältnis zu setzen.

Wie sich zeigte, kommt es dabei nicht darauf an, dass die erste Schicht in Bereichen mit hohem Tiefen-zu-Breiten-Verhältnis transparent ausgebildet wird. Es kann sich dabei um Strukturen handeln, die beispielsweise optisch aktive Bereiche eines Hologramms oder Kinegram^{®}-Sicherheitsmerkmals bilden. Es kommt nur darauf an, dass sich diese Bereiche zu anderen Bereichen durch ihre Transmissionseigenschaften beziehungsweise eine geringere oder eine größere optische Dichte abgrenzen.

Bei der ersten und der zweiten Reliefstruktur handelt es sich um verschiedene Reliefstrukturen, beispielsweise um ein Kinegram^{®}, bei dem eine oder mehrere Reliefparameter, beispielsweise Orientierung, Feinheit oder Profilform variieren, um die gewünschten diffraktiven Eigenschaften zu erzeugen. Derartige Strukturen haben so nicht nur die Aufgabe, eine Veränderung der Transmissionseigenschaften der ersten Schicht in dem Bereich zu erzielen, in dem die Reliefstruktur in die Replizierschicht abgeformt ist, sondern zusätzlich noch die Funktion, bei Hinterlegung mit einer Reflektionsschicht oder einer optischen Trennschicht als optisch variables Designelement zu wirken. Wird neben einer derartigen ersten Reliefstruktur noch eine derartige zweite Reliefstruktur in die Replizierlackschicht abgeformt, so unterscheiden sich die erste und die zweite Reliefstruktur vorzugsweise in einem oder mehreren für die Transmissionseigenschaften der ersten Schicht relevanten Parametern, unterscheiden sich so beispielsweise in der Relieftiefe oder in dem Tiefen-zu-Breiten-Verhältnis. So ist es beispielsweise möglich, zwei Kinegram^{®}-Sicherheitsmerkmale mit filigranem Linienmuster teilweise überlappend in die Replizierschicht abzuformen. Das erste Kinegram^{®} bildet die erste Reliefstruktur und das zweite Kinegram^{®} bildet die zweite Reliefstruktur. Die Reliefstrukturen der beiden Designs unterscheiden sich im typischen Tiefen-zu-Breiten-Verhältnis, während die übrigen Strukturparameter ähnlich sind. Es sind somit drei "Gruppen" von Strukturen, nämlich Strukturen der Gruppe I im ersten Kinegram^{®}, Strukturen der Gruppe II im zweiten Kinegram^{®} und Strukturen der Gruppe III bzw. keine Strukturen im Hintergrund vorhanden. In einem ersten Schritt verbleibt die erste Schicht, beispielsweise eine aufgedampfte Metallschicht, wie eine Kupferschicht, im Kinegram^{®}-Bereich des ersten Designs, der Rest wird entfernt. Anschließend wird beispielsweise eine farbige Funktionsschicht ganzflächig aufgebracht und durch geeignete Prozeßführung in den Hintergrundbereichen entfernt. Auf diese Weise erhält man zwei registerhaltige Designs.

Experimente haben gezeigt, dass die durch die unterschiedliche Gestaltung der Reliefstrukturen im ersten und zweiten Bereich erzielbaren Unterschiede in den Transmissionseigenschaften der ersten Schicht im Bereich der UV-Strahlung besonders ausgeprägt sind. Bei der Verwendung von UV-Strahlung für die Belichtung lassen sich so besonders gute Ergebnisse erzielen.

Bei der ersten Schicht kann es sich um eine sehr dünne Schicht in der Größenordnung von einigen nm handeln. Die erste Schicht wird bei Abscheidung der ersten Schicht mit einer konstanten Flächendichte bezogen auf die von der Replizierschicht aufgespannte Ebene in Bereichen mit einem hohen Tiefen-zu-Breiten-Verhältnis aufgrund der höheren Oberfläche erheblich dünner ausgebildet als in Bereichen mit niedrigem Tiefen-zu-Breiten-Verhältnis. Vorteilhafterweise ist vorgesehen, die erste Schicht als Metallschicht oder Schicht aus einer Metallegierung auszubilden. Solche Schichten können mit bewährten Verfahren, wie Sputtern, aufgebracht werden, und sie weisen bereits bei geringen Schichtdicken eine hinreichende optische Dichte auf. Es kann sich bei der ersten Schicht aber auch um eine ein Funktionsschichtmaterial enthaltende Schicht oder eine nicht-metallische Schicht handeln, die beispielsweise eingefärbt, insbesondere bunt eingefärbt sein kann, die dotiert sein kann, oder die mit Nano-Partikeln oder mit Nano-Sphären versetzt sein kann, um ihre optische Dichte zu erhöhen. Weiterhin hat es sich bewährt, die erste Schicht aus einer, ein Flüssigkristallmaterial enthaltenden Substanz zu bilden.

Es hat sich für das erste Verfahren bewährt, wenn die erste Schicht mit einer konstanten Flächendichte bezogen auf eine von der Replizierschicht aufgespannte Ebene aufgebracht wird und die erste Schicht in einem Ätzprozess sowohl in dem ersten Bereich als auch in dem mindestens einen zweiten Bereich solange einem Ätzmittel, insbesondere einer Säure oder Lauge, ausgesetzt wird, bis die erste Schicht im ersten Bereich entfernt ist oder zumindest bis die Transmission, insbesondere die Transparenz der ersten Schicht im ersten Bereich gegenüber der Transmission, insbesondere der Transparenz der ersten Schicht in dem mindestens einen zweiten Bereich erhöht ist, oder umgekehrt.

Als Ätzmittel für die erste Schicht können beispielsweise Laugen oder Säuren vorgesehen sein. Es kann weiterhin vorgesehen sein, dass die erste Schicht nur teilweise abgetragen wird und die Ätzung abgebrochen wird, sobald eine vorbestimmte Transparenz erreicht ist. Dadurch können beispielsweise Sicherheitsmerkmale erzeugt werden, die auf lokal unterschiedlicher Transparenz beruhen. Wird beispielsweise Aluminium als erste Schicht verwendet, so können Laugen wie NaOH oder KOH als isotrop wirkende Ätzmittel eingesetzt werden. Auch der Einsatz saurer Medien, wie PAN (eine Mischung aus Phosphorsäure, Salpetersäure und Wasser), ist möglich.

Die Reaktionsgeschwindigkeit nimmt typischerweise mit der Konzentration der Lauge und der Temperatur zu. Die Wahl der Prozessparameter richtet sich nach der Reproduzierbarkeit des Prozesses und der Beständigkeit des Mehrschichtkörpers. Einflussfaktoren beim Ätzen mit Lauge sind typischerweise die Zusammensetzung des Ätzbades, insbesondere die Konzentration an Ätzmittel, die Temperatur des Ätzbades und die Anströmbedingungen der zu ätzenden Schicht im Ätzbad. Typische Parameterbereiche der Konzentration des Ätzmittels im Ätzbad liegen im Bereich von 0,1 % bis 10 % und der Temperatur liegen im Bereich von 20°C bis 80°C

Der Ätzvorgang der ersten Schicht kann elektrochemisch unterstützt werden. Durch Anlegen einer elektrischen Spannung wird der Ätzvorgang verstärkt. Die Wirkung ist typischerweise isotrop, sodass die strukturabhängige Oberflächenvergrösserung den Ätzeffekt zusätzlich verstärkt. Typische elektrochemische Additive wie Netzmittel, Puffersubstanzen, Inhibitoren, Aktivatoren, Katalysatoren und ähnliches, um beispielsweise Oxidschichten zu entfernen, können den Ätzprozess unterstützen.

Während des Ätzprozesses kann es zu einer Verarmung an Ätzmedium, respektive Anreicherung der Ätzprodukte, in der Grenzschicht zur ersten Schicht kommen, wodurch die Geschwindigkeit des Ätzens verlangsamt wird. Eine forcierte Durchmischung des Ätzmediums, gegebenenfalls durch eine Ausbildung einer geeigneten Strömung oder eine Ultraschallanregung, verbessert das Ätzverhalten.

Der Ätzprozess kann weiterhin ein zeitliches Temperaturprofil aufweisen, um das Ätzergebnis zu optimieren. So kann zu Beginn kalt und mit zunehmender Einwirkdauer wärmer geätzt werden. Im Ätzbad wird dies vorzugsweise durch einen räumlichen Temperaturgradienten realisiert, wobei der Mehrschichtkörper durch ein langgestrecktes Ätzbad mit unterschiedlichen Temperaturzonen gezogen wird.

Die letzten Nanometer der ersten Schicht können sich im Ätzprozess als relativ hartnäckig und beständig gegen das Ätzen erweisen. Zur Entfernung von Resten der ersten Schicht ist daher eine geringfügige mechanische Unterstützung des Ätzprozesses vorteilhaft. Die Hartnäckigkeit basiert auf einer gegebenenfalls geringfügig anderen Zusammensetzung der ersten Schicht, vermutlich aufgrund von Grenzschichtphänomenen beim Bilden der ersten Schicht auf der Replizierschicht. Die letzen Nanometer der ersten Schicht werden in diesem Fall vorzugsweise mittels eines Wischprozesses entfernt, indem der Mehrschichtkörper über ein mit einem feinen Tuch bespannte Walze geführt wird. Das Tuch wischt die Reste der ersten Schicht ab, ohne den Mehrschichtkörper zu beschädigen.

Beim Ätzen muss es sich nicht um einen Fertigungsschritt handeln, der mit Flüssigkeiten durchgeführt wird. Es kann sich auch um einen "Trockenprozess" handeln, wie beispielsweise Plasmaätzen.

Es kann aber auch vorgesehen sein, die erste Schicht nicht vollständig partiell zu entfernen, sondern nur ihre Schichtdicke zu verringern. Eine solche Ausführung kann besonders vorteilhaft sein, wenn Bereiche mit einander sich überlagernden Schichten ausgebildet werden sollen, beispielsweise um optische und/oder elektrische Eigenschaften zu variieren oder um dekorative Effekte auszubilden.

Es hat sich für das erste Verfahren weiterhin bewährt, wenn die erste Schicht mit einer konstanten Flächendichte bezogen auf eine von der Replizierschicht aufgespannte Ebene aufgebracht wird und die erste Schicht als eine Absorptionsschicht für die teilweise Entfernung der ersten Schicht selbst eingesetzt wird, indem die erste Schicht sowohl in dem ersten Bereich als auch in dem zweiten Bereich einem Laserlicht ausgesetzt wird.

Bei Strukturen mit einem hohem Tiefen-zu-Breiten-Verhältnis und insbesondere Reliefstrukturen, bei denen der typische Abstand zwischen zwei benachbarten Erhebungen kleiner als die Wellenlänge des einfallenden Lichts ist, sogenannten Zero-Order-Strukturen, kann ein Grossteil des einfallenden Lichts absorbiert werden, auch wenn der Reflexionsgrad einer Reflexionsschicht in einem spiegelnd reflektierenden Bereich hoch ist. Mittels eines fokussierten Laserstrahls wird eine als Reflexionsschicht ausgebildete erste Schicht bestrahlt, wobei in den stark absorbierenden Bereichen, welche die erwähnten Reliefstrukturen mit hohem Tiefen-zu-Breiten-Verhältnis aufweisen, die Laserstrahlung vermehrt absorbiert und die Reflexionsschicht entsprechend erwärmt wird. Bei hohen Energieeinträgen kann die Reflexionsschicht lokal abplatzen, wobei ein Abtrag beziehungsweise eine Ablation der als Reflexionsschicht ausgebildeten ersten Schicht oder eine Koagulation des Materials der Reflexionsschicht bzw. ersten Schicht auftritt. Erfolgt der Energieeintrag durch den Laser lediglich kurzzeitig und ist der Effekt der Wärmeleitung somit nur gering, so erfolgt die Ablation oder Koagulation nur in den durch die Reliefstruktur vordefinierten Bereichen.

Einflussfaktoren bei der Laserablation sind die Gestaltung der Reliefstruktur (Periode, Tiefe, Orientierung, Profil), die Wellenlänge, die Polarisation und der Einfallswinkel der einfallenden Laserstrahlung, die Dauer der Einwirkung (zeitabhängige Leistung) und die lokale Dosis der Laserstrahlung, die Eigenschaften und das Absorptionsverhalten der ersten Schicht, sowie eine eventuelle Über- und Unterdeckung der ersten Schicht mit weiteren Schichten, wie der strukturierten photosensitiven Schicht oder Waschlackschicht.

Für die Laserbehandlung haben sich unter anderem Nd:YAG-Laser als geeignet erwiesen. Diese strahlen bei etwa 1064 nm und werden vorzugsweise auch gepulst betrieben. Weiterhin können Diodenlaser verwendet werden. Mittels einer Frequenzveränderung, z.B. einer Frequenzverdoppelung, kann die Wellenlänge der Laserstrahlung geändert werden.

Der Laserstrahl wird mittels einer sogenannten Scanvorrichtung, z.B. mittels galvanometrischer Spiegel und Fokussierlinse, über den Mehrschichtkörper geführt. Pulse mit einer Dauer im Bereich von Nano- bis Mikrosekunden werden während des Scanvorgangs ausgesendet und führen zu der oben beschriebenen, durch die Struktur vorbestimmte Ablation oder Koagulation der ersten Schicht. Die Pulsdauern liegen typischerweise unterhalb von Millisekunden, vorteilhafterweise im Bereich weniger Mikrosekunden oder darunter. So können durchaus auch Pulsdauern von Nanosekunden bis Femtosekunden eingesetzt werden. Eine genaue Positionierung des Laserstrahls ist nicht notwendig, da der Prozess selbstreferenzierend ist, sofern , die strukturiert vorliegende photoempfindliche Schicht oder Waschlackschicht einen Zugang der Laserstrahlung zur ersten Schicht partiell verhindert. Der Prozess wird vorzugsweise durch eine geeignete Wahl des Laserstrahlprofils und der Überlappung angrenzender Pulse weiter optimiert.

Es ist aber ebenso möglich, den Weg des Lasers über den Mehrschichtkörper im Register zu in der Replizierschicht angeordneten Reliefstrukturen oder Öffnungen in der photoempfindlichen Schicht oder Waschlackschicht zu steuern, so dass lediglich Bereiche mit gleicher Reliefstruktur oder mit/ohne Öffnungen in der photoempfindlichen Schicht oder Waschlackschicht bestrahlt werden. Für eine solche Steuerung können beispielsweise Kamerasysteme eingesetzt werden.

Anstelle eines auf einen Punkt oder eine Linie fokussierten Lasers können auch flächige Strahler eingesetzt werden, welche einen kurzzeitigen, kontrollierten Puls aussenden, wie beispielsweise Blitzlampen.

Zu den Vorteilen des Laserablations-Verfahrens gehört unter anderem, dass die partielle und zu einer Reliefstruktur registrierte Entfernung der ersten Schicht auch erfolgen kann, wenn diese auf beiden Seiten mit einer oder mehreren weiteren, für die Laserstrahlung durchlässigen Schichten bedeckt und somit für Ätzmedien nicht direkt zugänglich ist. Die erste Schicht wird durch den Laser lediglich aufgebrochen. Das Material der ersten Schicht setzt sich in der Form von kleinen Konglomeraten oder kleinen Kügelchen wieder ab, welche für den Betrachter optisch nicht in Erscheinung treten und die Transparenz im bestrahlten Bereich nur unwesentlich beeinflussen.

Nach der Laserbehandlung noch auf der Replizierschicht verbliebene Rückstände der ersten Schicht im ersten Bereich können gegebenenfalls mittels eines anschließenden Wasch- oder Ätzprozesses entfernt werden, sofern die erste Schicht dort direkt zugänglich ist. Nach der Ätzung der ersten Schicht kann vorgesehen sein, dass die Überreste der Ätzmasken entfernt werden.

Für das erste Verfahren ist es besonders bevorzugt, wenn die erste Schicht mit einer konstanten Flächendichte bezogen auf eine von der Replizierschicht aufgespannte Ebene aufgebracht wird und die erste Schicht bereits in einer Schichtdicke gebildet wird, so dass eine Transmission, insbesondere eine Transparenz der ersten Schicht im ersten Bereich gegenüber der Transmission, insbesondere der Transparenz der ersten Schicht in dem mindestens einen zweiten Bereich erhöht ist, oder umgekehrt.

Besonders bevorzugt ist es für das erste Verfahren, wenn die erste Schicht mit einer konstanten Flächendichte bezogen auf eine von der Replizierschicht aufgespannte Ebene aufgebracht wird und auf die erste Schicht eine erste photoempfindliche Lackschicht aufgebracht wird oder die Replizierschicht durch eine erste photoempfindliche Waschlackschicht gebildet wird, wobei die erste photoempfindliche Lackschicht oder die erste Waschlackschicht durch die erste Schicht hindurch belichtet wird, so dass die erste photoempfindliche Lackschicht oder die erste Waschlackschicht durch die erste Reliefstruktur bedingt im ersten und im mindestens einen zweiten Bereich unterschiedlich belichtet wird, wobei eine Strukturierung der belichteten ersten photoempfindlichen Lackschicht oder der ersten Waschlackschicht erfolgt, und dass entweder gleichzeitig, oder nachfolgend unter Verwendung der strukturierten ersten photoempfindlichen Lackschicht oder Waschlackschicht als einer ersten Maskenschicht, die erste Schicht im ersten Bereich, nicht jedoch im mindestens einen zweiten Bereich oder im mindestens einen zweiten Bereich, nicht jedoch im ersten Bereich entfernt und somit strukturiert wird.

Das Verfahren kann im weiteren so ausgebildet sein, dass als photoempfindliche Schicht oder als photoempfindliche Waschlackschicht ein photoempfindliches Material mit einer binären Charakteristik aufgebracht wird und dass die photoempfindliche Schicht bzw. die photoempfindliche Waschlackschicht durch die erste Schicht hindurch in einer Belichtungsstärke und Belichtungsdauer belichtet werden, dass die photoempfindliche Schicht bzw. die photoempfindliche Waschlackschicht im ersten Bereich, in dem die Transmission der ersten Schicht durch die erste Reliefstruktur erhöht ist, aktiviert wird und im zweiten Bereich nicht aktiviert wird. Das erfindungsgemäße Verfahren ist auch anwendbar, wenn sich die optischen Dichten des ersten Bereiches und des zweiten Bereiches nur wenig voneinander unterscheiden, wobei wie weiter oben bereits erläutert, überraschenderweise von einer hohen mittleren optischen Dichte ausgegangen werden kann.

Bei der photoempfindlichen Schicht oder Waschlackschicht kann es sich um einen Photoresist handeln, der als positiver oder als negativer Photoresist ausgebildet sein kann. Auf diese Weise können bei sonst gleicher Ausbildung der Replizierschicht unterschiedliche Bereiche der ersten Schicht entfernt werden.

Es kann weiter vorgesehen sein, dass die photoempfindliche Schicht als ein Photopolymer ausgebildet wird.

Je nachdem, ob es sich bei der photoempfindlichen Schicht oder Waschlackschicht um einen positiven oder negativen Photoresist handelt, wird diese in den ersten Bereichen ausgehärtet oder in einem Entwickler löslich gemacht. Es können dabei auch positive und negative Photoresistschichten nebeneinander aufgebracht sein und gleichzeitig belichtet werden. Die erste Schicht dient dabei als Maske und ist vorzugsweise in direktem Kontakt mit dem Photoresist angeordnet, so dass eine präzise Belichtung erfolgen kann. Beim Entwickeln des Phototresists werden schließlich die nicht ausgehärteten Bereiche ausgewaschen oder die zerstörten Bereiche entfernt. Je nach verwendetem Photoresist liegt der entwickelte Photoresist nun entweder genau in den Bereichen vor, in denen die erste Schicht für die UV-Strahlung durchlässig ist oder undurchlässig ist. Um die Beständigkeit der verbliebenen, gemäß der ersten Schicht strukturierten photoresistscht zu erhöhen, werden verbliebene Bereiche nach dem Entwickeln vorzugsweise nachgehärtet.

Die erste Schicht wird insbesondere als Maskenschicht für die partielle Entfernung der ersten Schicht selbst verwendet, indem die an die erste Schicht angrenzende photoempfindliche Schicht oder Waschlackschicht durch die erste Schicht hindurch belichtet wird. Hierdurch wird gegenüber den mit herkömmlichen Verfahren aufgebrachten Maskenschichten der Vorteil erzielt, dass die Maskenschicht ohne Justieraufwand registergenau ausgerichtet ist. Nur die Toleranzen der Reliefstruktur haben einen Einfluss auf die Toleranzen der Lage der unterschiedlich transmissiven Bereiche der ersten Schicht. Eine seitliche Verschiebung zwischen der ersten Reliefstruktur und diesen Bereichen der ersten Schicht tritt nicht auf. Die Anordnung von Bereichen der ersten Schicht mit gleichen physikalischen Eigenschaften ist daher exakt im Register mit der ersten Reliefstruktur.

Im Hinblick auf die Verfahrensweise unter Verwendung einer photosensitiven Schicht ist es weiterhin möglich, wenn als photosensitive Schicht auf die erste Schicht eine photoaktivierbare Schicht aufgebracht wird, dass die photoaktivierbare Schicht durch die erste Schicht und die Replizierschicht hindurch belichtet und im ersten Bereich aktiviert wird, und dass die aktivierten Bereiche der photoaktivierbaren Schicht ein Ätzmittel für die erste Schicht bilden, so dass die erste Schicht im ersten Bereich entfernt und somit strukturiert wird.

Die photosensitive Schicht oder Waschlackschicht kann weiterhin partiell entfernt werden, wenn die belichteten Bereiche strukturell geschwächt werden, so dass zur Entfernung der belichteten Bereiche ein Abstreifen, Abbürsten, Abwischen, eine Ultraschall- oder Laserbehandlung oder ähnliches erfolgen kann. Wirkt sich die Belichtung der photosensitiven Schicht oder Waschlackschicht in einer partiell erhöhten Sprödigkeit der Schicht aus, so kann die Replizierschicht, sofern diese flexibel bzw. biegsam ausgebildet ist, über eine scharfe Kante oder Schneide gezogen und die spröden Bereiche abgesprengt werden.

In einer vorteilhaften Ausgestaltung ist vorgesehen, dass die photoempfindliche Schicht bzw. Waschlackschicht durch die erste Schicht hindurch mittels UV-Strahlung belichtet wird.

Somit lässt sich die erste Schicht durch unterschiedliche Verfahren unmittelbar oder nach Durchführung weiterer Verfahrensschritte strukturieren bzw. partiell entfernen. Dabei wird unmittelbar die mindestens eine partiell ausgeformte Funktionsschicht gebildet und/oder nachfolgend unter Verwendung der strukturierten ersten Schicht als einer Maskenschicht die mindestens eine partiell ausgeformte Funktionsschicht gebildet.

Der Erfindung liegt im Hinblick auf das erste Verfahren und den ersten Mehrschichtkörper zum einen die Erkenntnis zugrunde, dass durch die erste Reliefstruktur im ersten Bereich der Replizierschicht bedingt physikalische Eigenschaften der auf die Replizierschicht in diesem Bereich aufgebrachten ersten Schicht, beispielsweise effektive Dicke oder optische Dichte, beeinflußt werden, so dass sich die Transmissions-Eigenschaften der ersten Schicht im ersten und zweiten Bereich unterscheiden. Die erste Schicht wird auf die Replizierschicht vorzugsweise mittels Sputtern, Aufdampfen, Aufpudern oder Aufsprühen aufgebracht. Beim Sputtern liegt prozessbedingt ein gerichteter Materialauftrag vor, so dass bei einem Aufsputtern von Material der ersten Schicht in konstanter Flächendichte bezogen auf die von der Replizierschicht aufgespannte Ebene auf die mit der Reliefstruktur versehene Replizierschicht das Material lokal unterschiedlich dick abgelagert wird. Beim Aufdampfen, Aufpudern oder Aufsprühen der ersten Schicht wird verfahrenstechnisch vorzugsweise ebenfalls ein zumindest teilweise gerichteter Materialauftrag erzeugt.

Bei Durchführung des ersten Verfahrens bildet die erste Schicht vorzugsweise unmittelbar die partiell ausgeformte Funktionsschicht aus. Weiterhin ist es auch von Vorteil, wenn die strukturierte erste photoempfindliche Schicht oder erste Waschlackschicht unmittelbar die partiell ausgeformte Funktionsschicht ausbildet.

Schließlich hat es sich für das erste Verfahren bewährt, wenn die mindestens eine partiell ausgeformte Funktionsschicht und/oder die weitere partiell ausgeformte Schicht gebildet wird, indem nachfolgend eine erste positive oder negative Photoresist-Lackschicht aufgebracht wird, dass die erste Photoresist-Lackschicht durch die strukturierte erste Schicht hindurch belichtet wird, und dass eine Strukturierung der belichteten ersten Photoresist-Lackschicht erfolgt.

Bevorzugt ist es, wenn im Register zu der ersten Reliefstruktur und zu mindestens einer zweiten Reliefstruktur jeweils eine partiell ausgeformte Funktionsschicht gebildet wird, wobei unterschiedliche Photoresist-Lackschichten, insbesondere unterschiedlich farbige Photoresist-Lackschichten zur Bildung der partiell ausgeformten Funktionsschichten verwendet werden. Es können Photoresist-Lackschichten mit deutlich unterschiedlichen Eigenschaften verwendet werden, wie beispielsweise spektraler Empfindlichkeit, chemischer Zusammensetzung, positiver oder negativer Charakteristik usw.. Aber auch eine Verwendung von ähnlichen Photoresist-Lackschichten, die jedoch unterschiedlich belichtet werden, ist möglich. Die Unterscheidung der beiden Photoresist-Lackschichten kann insbesondere durch die Eigenschaften der Belichtung erfolgen, wie Wellenlänge, Einfallswinkel, Polarisation usw..

Mittels der Ausgestaltung der ersten Reliefstruktur, gegebenenfalls auch der Ausgestaltung der ersten Schicht oder weiteren Schichten, wird möglicherweise auch eine Adhäsionseigenschaft und/oder ein Diffusionswiderstand und/oder eine Oberflächenreaktivität der Replizierschicht oder weiterer Schichten lokal beeinflusst, so dass ein Material zur Bildung der ersten Schicht, oder weiterer Schichten, lokal unterschiedlich an der Replizierschicht, oder weiteren Schichten, haftet, in diese eindiffundiert oder mit diesen reagiert. Beim Eindiffundieren von Material in die Replizierschicht wird ein Teil der Replizierschicht inklusive dem eindiffundierten Material zu der ersten Schicht.

Alternativ dazu wird die Replizierschicht partiell durch Eindiffundieren eines Farbmittels selbst teilweise als partiell ausgeformte Funktionsschicht ausgebildet, wobei eine auf der Replizierschicht partiell ausgeformte weitere Schicht, beispielsweise eine strukturierte photoempfindliche, metallische oder anorganische dielektrische Schicht, lokal als Diffusionssperre fungiert. Die photoempfindliche Schicht kann nach dem partiellen Einfärben der Replizierschicht oder vor dem Auftrag einer weiteren Schicht entfernt werden.

Es hat sich für das erste Verfahren weiterhin bewährt, wenn die erste Schicht durch Auftragen eines Pulvers oder eines flüssigen Mediums gebildet wird, dass anschließend die erste Schicht, gegebenenfalls nach einer physikalischen oder chemischen Behandlung des Pulvers oder des flüssigen Mediums, strukturiert wird, und dass entweder unmittelbar die mindestens eine partiell ausgeformte Funktionsschicht gebildet wird und/oder unter Verwendung der strukturierten ersten Schicht als einer Maskierungsschicht nachfolgend die mindestens eine partiell ausgeformte Funktionsschicht gebildet wird.

Das Pulver wird insbesondere aufgestäubt oder aufgestrichen, während das flüssige Medium insbesondere aufgegossen, gedruckt oder aufgesprüht wird. Nachfolgend kann ein mechanisches Einarbeiten in die Reliefstruktur erfolgen, beispielsweise durch Rütteln, Bürsten oder ähnliches. Anschließend.erfolgt eine partielle Entfernung der ersten Schicht in den Bereichen, in denen die Haftung geringer ist oder der Diffusionswiderstand erhöht ist, indem ein mechanisches Abziehen, insbesondere mittels eines Abziehrakels, Luftrakels oder Abziehmessers, eines chemischen Ablösens, eines Waschprozesses oder einer Kombination dieser Verfahren. Die Strukturierung der ersten Schicht erfolgt vorzugsweise durch ein Abziehmesser oder Abziehrakel, das über die Replizierschicht bewegt wird, wobei die Bereiche der ersten Schicht, die nicht in Vertiefungen der Reliefstruktur eingedrungen sind, entfernt werden. Nachfolgend kann sich ein zeitgesteuertes Ätzverfahren zur Entfernung von Resten der ersten Schicht in ebenen Bereichen oder von Farbschleiern anschließen. Das Ätzverfahren kann lokal auch dazu genutzt werden, die Schichtdicke der ersten Schicht innerhalb der Reliefstruktur zu beeinflussen, um unterschiedliche Farbsättigungen einzustellen oder das Farbenspiel einer ersten Schicht mit einem blickwinkelabhängigen Interferenzeffekt einzustellen.

Aber auch ein Waschverfahren kann sich zur Strukturierung der ersten Schicht eignen, insbesondere wenn die Kapillarkräfte innerhalb der Reliefstruktur ausreichen, um das darin befindliche Material der ersten Schicht beim Waschprozess zu fixieren. Hier können insbesondere Reliefstrukturen vorteilhaft sein, welche makroskopische Vertiefungen und in den Vertiefungen zusätzlich eine Mikrostruktur aufweisen.

In einer weiteren bevorzugten Ausgestaltungsform wird die erste Reliefstruktur mit mindestens zwei unterschiedlich tiefen Gräben ausgebildet oder auf dem Grund von mindestens zwei unterschiedlich tiefen Gräben vorgesehen, wobei die Gräben jeweils insbesondere eine Tiefe im Bereich von 1 bis 10 µm und eine Breite im Bereich von 5 bis 100 µm aufweisen. Werden die Gräben beispielsweise mit farbigem Photoresist gefüllt und die Replizierschicht in Bereichen ohne Gräben vom Photoresist befreit, zeigen sich unterschiedliche Farbsättigungen abhängig von der Grabentiefe und gegebenenfalls weitere optische Effekte.

Auch hier ist es weiterhin möglich, dass mittels der Ausgestaltung der ersten Reliefstruktur, gegebenenfalls auch der Ausgestaltung der ersten Schicht oder weiterer Schichten, eine Adhäsionseigenschaft und/oder ein Diffusionswiderstand und/oder eine Oberflächenreaktivität der Replizierschicht oder weiterer Schichten lokal beeinflusst wird, so dass das Pulver oder das flüssige Medium lokal unterschiedlich an der Replizierschicht oder weiteren Schichten haftet, in diese eindiffundiert oder mit diesen reagiert.

Nachfolgend wird in einer bevorzugten Ausführungsform die mindestens eine partiell ausgeformte Funktionsschicht oder die mindestens eine weitere partiell ausgeformte Schicht gebildet, indem eine erste positive oder negative Photoresist-Lackschicht aufgebracht wird, dass die erste Photoresist-Lackschicht durch die strukturierte erste Schicht hindurch belichtet wird, und dass eine Strukturierung der belichteten ersten Photoresist-Lackschicht erfolgt.

Weiterhin wird gegebenenfalls die Replizierschicht noch partiell durch Eindiffundieren eines Farbmittels als partiell ausgeformte Funktionsschicht ausgebildet, wobei die Replizierschicht selbst oder eine darauf partiell ausgeformte Schicht lokal als Diffusionssperre fungiert.

Die Replizierschicht wird im Hinblick auf das erste Verfahren insbesondere in dem mindestens einen zweiten Bereich zumindest teilweise eben ausgebildet. Dies erleichtert beispielsweise ein Abziehen der Oberfläche mit einem Abziehrakel oder Abziehmesser, da der ebene Bereich optimal als Auflage dafür dient. Weiterhin können die ebenen Bereiche mit einer metallischen Reflektionsschicht hinterlegt ausgebildet werden, so dass optisch der Effekt von Spiegelflächen erzeugt wird.

Schließlich hat es sich für das erste Verfahren zur Bildung relativ dicker partiell ausgeformter Schichten bewährt, wenn in freiliegende Bereiche der Replizierschicht mit der ersten Reliefstruktur oder der mindestens einen zweiten Reliefstruktur, welche senkrecht zur Ebene der Replizierschicht gesehen von einer partiell ausgeformten Funktionsschicht oder weiteren Schicht umgeben sind, ein Material eingerakelt wird und mindestens eine weitere partiell ausgeformte Funktionsschicht oder weitere partiell ausgeformte Schicht gebildet wird.

Für das zweite Verfahren hat es sich bewährt, wenn die mindestens eine partiell ausgeformte Funktionsschicht oder die mindestens eine weitere partiell ausgeformte Schicht gebildet wird, indem eine mit Farbmittel versetzte zweite positive oder negative Photoresist-Lackschicht aufgebracht wird, wenn die zweite Photoresist-Lackschicht durch die strukturierte erste Schicht hindurch belichtet wird, und wenn eine Strukturierung der belichteten zweiten Photoresist-Lackschicht erfolgt. Dabei ist es bevorzugt, wenn die erste oder die zweite Photoresist-Lackschicht die mindestens eine partiell ausgeformte Funktionsschicht ausbildet. Nachfolgend wird gegebenenfalls die Trägerschicht partiell durch Eindiffundieren eines Farbmittels als partiell ausgeformte Funktionsschicht oder weitere Schicht ausgebildet, wobei mindestens die erste und/oder zweite strukturierte Photoresist-Lackschicht als Diffusionssperre fungiert.

In freiliegende Bereiche der Trägerschicht, welche senkrecht zur Ebene der Trägerschicht gesehen von einer partiell ausgeformten Funktionsschicht oder weiteren partiell ausgeformten Schicht umgeben sind, wird gegebenenfalls ein Material eingerakelt und mindestens eine weitere partiell ausgeformte Funktionsschicht oder weitere partiell ausgeformte Schicht gebildet.

Mittels der Ausgestaltung der Photoresist-Schichten, gegebenenfalls auch der Ausgestaltung weiterer Schichten, wird möglicherweise auch eine Adhäsionseigenschaft und/oder ein Diffusionswiderstand und/oder eine Oberflächenreaktivität der Trägerschicht oder weiterer Schichten lokal beeinflusst, so dass ein Material zur Bildung einer partiell ausgeformten Funktionsschicht oder weiterer Schichten lokal unterschiedlich an der Trägerschicht oder weiteren Schichten haftet, in diese eindiffundiert oder mit diesen reagiert. Beim Eindiffundieren von Material in die Trägerschicht wird ein Teil der Trägerschicht inklusive dem eindiffundierten Material zu einer partiell ausgeformten Funktionsschicht oder weiteren partiell ausgeformten Schicht.

Weiterhin hat es sich bewährt, wenn als Replizierschicht oder Trägerschicht Polyester und als erste Schicht eine Metallschicht verwendet wird und wenn die so verbliebenen Bereiche einem elektrostatischen Feld ausgesetzt werden und durch die unterschiedliche Feldcharakteristik das Pulver, ähnlich eines Toners, in den verbliebenen Bereichen selektiv angelagert wird. Anschließend erfolgt eine thermische Konsolidierung des Pulvers zu einer geschlossenen, fest haftenden partiell ausgebildeten Funktionsschicht oder weiteren Schicht.

Bei der ersten Schicht handelt es sich also generell um eine Schicht, die eine Doppel Funktion erfüllen kann. Sie kann zum einen die Funktion einer hochgenauen Belichtungsmaske für den Herstellungsprozess der partiell ausgeformten Funktionsschicht und/oder weiteren Schicht erbringen, andererseits bildet sie am Ende des Herstellungsprozesses gegebenenfalls selbst eine hochgenau positionierte partiell ausgeformte Schicht, beispielsweise die partiell ausgeformte Funktionsschicht oder weitere Schicht, gegebenenfalls in Form einer OVD-Schicht, einer Leiterbahn oder einer Funktionsschicht eines elektrischen Bauelements, etwa eines organischen Halbleiter-Bauelements, einer Dekorschicht, wie einer bunten Farbschicht oder ähnliches.

Es ist bevorzugt, wenn die mindestens eine partiell ausgeformte Funktionsschicht als eine Lackschicht oder eine Polymerschicht ausgebildet wird. In eine derartige Schicht lassen sich die oben genannten, bevorzugten Funktionsschichtmaterialien, wie Pigmente oder Farbstoff, besonders einfach integrieren.

Insbesondere wird die mindestens eine partiell ausgeformte Funktionsschicht unter Zugabe von einem oder mehreren, insbesondere nicht-metallischen Funktionsschichtmaterialien ausgebildet wird.

Besonders vorteilhaft im Hinblick auf die dekorative Wirkung der partiell ausgeformten Funktionsschicht ist es, wenn die mindestens eine partiell ausgeformte Funktionsschicht unter Zugabe von einem oder mehreren farbigen, insbesondere bunten Funktionsschichtmaterialien ausgebildet wird.

Die mindestens eine weitere partiell ausgeformte Schicht wird insbesondere durch die erste Schicht und/oder mindestens eine farbige positive oder negative Photoresist-Lackschicht und/oder durch mindestens eine optisch variable Schicht mit blickwinkelabhängig unterschiedlichem optischem Effekt und/oder durch mindestens eine metallische Reflektionsschicht und/oder durch mindestens eine dielektrische Reflektionsschicht gebildet. Es kann vorgesehen sein, dass das Dielektrikum beispielsweise aus TiO₂ oder ZnS ist. Die mindestens eine partiell ausgeformte Funktionsschicht und die mindestens eine weitere partiell ausgeformte Schicht können mit unterschiedlichen Brechzahlen ausgebildet sein, so dass dadurch optische Effekte ausbildbar sind.

Bei der ersten Schicht und/oder der zweiten Schicht kann es sich auch um ein Polymer handeln, so dass beispielsweise die eine Schicht als ein elektrischer Leiter und die andere Schicht als ein elektrischer Isolator ausgebildet sein kann, wobei beide Schichten als transparente Schichten ausgebildet sein können.

Die optisch variable Schicht wird bevorzugt derart ausgebildet, dass diese mindestens einen Stoff mit blickwinkelabhängig unterschiedlichem optischem Effekt enthält und/oder durch mindestens eine Flüssigkristallschicht mit blickwinkelabhängig unterschiedlichem optischem Effekt und/oder durch einen Dünnfilm-Reflektionsschichtstapel mit blickwinkelabhängigem Interferenzfarbeffekt gebildet wird.

Weiterhin hat es sich bewährt, wenn die strukturierte erste Schicht zumindest teilweise entfernt und durch die mindestens eine partiell ausgeformte Funktionsschicht und/oder die mindestens eine weitere partiell ausgeformte Schicht ersetzt wird. Auch eine vollständige Entfernung der strukturierten ersten Schicht kann erfolgen.

Ebenso kann über eine hydrophobe der hydrophile Anlagerungsschicht, welche durch das Verfahren partiell ausgeformt ist, in einem folgenden Schritt über z.B. Druck-, Tauch- oder Sprühverfahren ein hydrophiles oder hydrophobes Medium mit funktionellen Komponenten (z.B. Farbstoffen, Pigmenten) partiell angelagert werden.

In einer vorteilhaften Ausgestaltung kann in die Bereiche, in denen die erste Schicht entfernt worden ist, eine erste weitere partiell ausgeformte Schicht eingebracht werden. Es kann weiter vorgesehen sein, dass die Reste der ersten Schicht nach vollständiger Entfernung durch eine zweite weitere partiell ausgeformte Schicht ersetzt werden. Der Mehrschichtkörper kann für den Betrachter nun lediglich einen hochaufgelösten "Farbdruck" aus Photoresist aufweisen, ansonsten jedoch transparent sein. Der Photoresist fungiert dabei als Ätzmaske für die erste Schicht.

Das erfindungsgemäße Verfahren beschränkt sich also nicht auf die teilweise Entfernung einer Schicht, sondern es kann weitere Verfahrensschritte aufweisen, die den Austausch von Schichten vorsehen oder die Wiederholung von Verfahrensschritten bei Ausnutzung von Unterschieden der optischen Dichte zur Bildung bzw. Differenzierung von Bereichen.

Vorteilhafterweise können so hochauflösende Anzeigeelemente ausgebildet werden. Ohne den Rahmen der Erfindung zu verlassen, ist es möglich, unterschiedlich gefärbte Anzeigeelemente registergenau aufzubringen und sie beispielsweise in einem Bildpunktraster anzuordnen. Da mit einem Ausgangslayout der ersten Schicht unterschiedliche Mehrschichtkörper erzeugbar sind, indem beispielsweise unterschiedliche Belichtungs- und Ätzverfahren miteinander kombiniert werden bzw. nacheinander ausgeführt werden, ist die registergenaue Positionierung der nacheinander aufgebrachten Schichten bei Anwendung des erfindungsgemäßen Verfahrens trotz Erhöhung der Verfahrensschritte möglich.

Es kann weiter vorgesehen sein, dass die erste Schicht und/oder die mindestens eine partiell ausgeformte Funktionsschicht und/oder die mindestens eine weitere partiell ausgeformte Schicht galvanisch verstärkt werden, wenn es sich dabei um elektrisch leitfähige Schichten handelt oder um Schichten, die für stromloses Galvanisieren geeignet sind.

Es ist bevorzugt, wenn die mindestens eine partiell ausgeformte Funktionsschicht senkrecht zur Ebene der Replizierschicht oder Trägerschicht gesehen deckungsgleich ober- oder unterhalb der mindestens einen weiteren partiell ausgeformten Schicht angeordnet wird.

Alternativ dazu ist es aber ebenso günstig, wenn die mindestens eine partiell ausgeformte Funktionsschicht senkrecht zur Ebene der Replizierschicht oder Trägerschicht gesehen alternierend oder mit einem gleichmäßigen Abstand zur mindestens einen weiteren partiell ausgeformten Schicht angeordnet wird.

Besonders ansprechende optische Effekte lassen sich erzielen, wenn mindestens eine erste transparente Abstandshalterschicht zwischen der mindestens einen partiell ausgeformten Funktionsschicht und der mindestens einen weiteren partiell ausgeformten Schicht angeordnet wird. Alternativ oder in Kombination dazu wird mindestens eine zweite transparente Abstandshalterschicht zwischen mindestens zwei weiteren partiell ausgeformten Schichten angeordnet. Dadurch können unter unterschiedlichen Betrachtungswinkeln unterschiedliche Farbeffekte und/oder Muster sichtbar sein oder ein dreidimensionaler Eindruck oder optische Tiefe erzielt werden. Der Effekt kann noch dadurch verstärkt werden, dass die erste und/oder die zweite Abstandshalterschicht lokal in mindestens zwei unterschiedlichen Schichtdicken ausgebildet wird. In Kombination dazu können die mindestens eine partiell ausgeformte Funktionsschicht und die mindestens eine weitere partiell ausgeformte Schicht jeweils linienförmig ausgebildet werden, wobei insbesondere eine kontinuierlich variierende Linienbreite einen zusätzlichen optischen Effekt bereitstellen kann.

Es hat sich bewährt, die erste und/oder die zweite Abstandshalterschicht lokal mit einer Schichtdicke im Bereich von < 100µm, insbesondere im Bereich von 2 bis 50 µm, auszubilden.

Besonders bevorzugt ist es, wenn die mindestens eine partiell ausgeformte Funktionsschicht und die mindestens eine weitere partiell ausgeformte Schicht derart ausgebildet sind, das sich mindestens ein, gegebenenfalls blickwinkelabhängiger, optischer Überlagerungseffekt, insbesondere ein Moire-Effekt oder Abschattungseffekt zeigt.

Die erste Schicht wird bevorzugt vollflächig in einer Dicke auf die Replizierschicht oder die Trägerschicht aufgebracht, bei der die erste Schicht für das menschliche Auge opak ist, insbesondere eine optische Dichte von größer als 1,5 besitzt, insbesondere eine optische Dichte im Bereich von 2 und 7 besitzt. Überraschender Weise hat sich nämlich gezeigt, dass sich durch die Erhöhung der Opazität der ersten Schicht das Verhältnis der Transmissivitäten der Bereiche mit diffraktiver Reliefstruktur vergrößern lässt. Wird so mit entsprechender Beleuchtungsstärke durch eine üblicherweise als opak bezeichnete Schicht (beispielsweise optische Dichte von 5) belichtet, die aufgrund ihrer hohen optischen Dichte normalerweise nicht als Maskenschicht eingesetzt werden würde, lassen sich besonders gute Ergebnisse erzielen.

Besonders bevorzugt ist eine Ausführungsform, bei welcher die mindestens eine partiell ausgeformte Funktionsschicht und die mindestens eine weitere partiell ausgeformte Schicht derart ausgebildet werden, dass diese sich senkrecht zur Ebene der Replizierschicht oder Trägerschicht gesehen gegenseitig zu einer dekorativen und/oder informativen geometrischen, alphanumerischen, bildlichen, graphischen oder figürlichen Darstellung ergänzen.

Als besonders fälschungssicher hat sich dabei eine Ausführungsform erwiesen, bei der die mindestens eine partiell ausgeformte Funktionsschicht und die mindestens eine weitere partiell ausgeformte Schicht jeweils zumindest bereichsweise linienförmig ausgebildet werden, wobei die Linien ohne Versatz ineinander übergehen, insbesondere zudem mit einem kontinuierlichen Farbverlauf, beispielsweise einem Regenbogenfarbverlauf, ineinander übergehen. Die unterschiedlichen Linien können alternativ oder zusätzlich auch nebeneinander angeordnet sein und ein konzentrisches Kreislinienmuster bilden.

Besonders feine Linien haben sich dabei als günstig erwiesen, insbesondere wenn die Linien senkrecht zur Ebene der Replizierschicht oder Trägerschicht gesehen mit einer Breite im Bereich von < 50µm, insbesondere im Bereich von 0,5 bis 10 µm ausgebildet werden.

Für einen nach dem beschriebenen Verfahren hergestellten Mehrschichtkörper kann aber auch vorgesehen sein, dass der zweite Bereich aus zwei oder mehr vom ersten Bereich umschlossenen Teilbereichen besteht, dass in dem zweiten Bereich eine diffraktive zweite Reliefstruktur in der Replizierschicht abgeformt ist, und dass die erste Schicht eine Reflexionsschicht ist, die in dem ersten Bereich entfernt ist und so passergenau zur zweiten Reliefstruktur angeordnet ist. Solche Mehrschichtkörper können vorteilhafterweise als fälschungssichere Sicherheitselemente vorgesehen sein. Sie sind bereits deshalb besonders fälschungssicher, weil mit dem erfindungsgemäßen Verfahren besonders kleine Linienbreiten ausbildbar sind. Außerdem können diese feinen Linien wegen ihrer diffraktiven Struktur und ihrer passergenauen Ausrichtung zur Reflexionsschicht optische Effekte ausbilden, die nur extrem schwierig nachahmbar sind.

Es kann weiter vorgesehen sein, dass der erste Bereich aus zwei oder mehr vom zweiten Bereich umschlossenen Teilbereichen besteht oder umgekehrt, und dass die erste Schicht eine Reflexionsschicht ist, die in dem zweiten Bereich entfernt ist und so passergenau zur ersten Reliefstruktur angeordnet ist. Vorteilhafte Ausgestaltungen sehen vor, dass die Teilbereiche des zweiten Bereichs bzw. die Teilbereiche des ersten Bereichs eine Breite von weniger als 2 mm, vorzugsweise von weniger als 1 mm aufweisen.

Die mindestens eine partiell ausgeformte Funktionsschicht wird bevorzugt mit mindestens einem opaken und/oder mindestens einem transparenten Farbmittel eingefärbt, welches zumindest in einem Wellenlängenbereich des elektromagnetischen Spektrums farbig oder farberzeugend ist, insbesondere bunt farbig oder bunt farberzeugend ist. Insbesondere hat es sich bewährt, wenn ein Farbmittel in der mindestens einen partiell ausgeformten Funktionsschicht enthalten ist, welches außerhalb des sichtbaren Spektrums, beispielsweise unter UV- oder IR-Bestrahlung, angeregt werden kann und einen visuell erkennbaren farbigen Eindruck erzeugt. Es ist so möglich, dass mindestens eine partiell ausgebildete Funktionsschicht mit mindestens einem rot, grün und/oder blau fluoreszierenden strahlungsanregbaren Pigment oder Farbstoff versehen ist und dadurch eine additive Farbe bei Bestrahlung erzeugt.

Das mindestens eine Farbmittel wird bevorzugt aus der Gruppe der anorganischen oder organischen Farbmittel, insbesondere der Pigmente oder der Farbstoffe gewählt.

Besonders bevorzugt sind unter anderem Farbmittel, die bei Bestrahlung bzw. Anregung mit ultravioletter Strahlung im sichtbaren Wellenlängenbereich lumineszieren, insbesondere fluoreszieren. Dabei können lumineszierende Pigmente, Farbstoffe oder Copolymere zum Einsatz kommen, die ohne Anregung im sichtbaren Wellenlängenbereich farbig oder farblos sind. Weiterhin kann eine Mischung aus mindestens zwei oder mehreren lumineszierenden Farbmitteln gleicher oder unterschiedlicher Art verwendet werden.

Pigmente können als Nanopigmente mit einer Größe von 1 bis 100 nm ausgebildet sein. Besonders bevorzugt sind hierbei fluoreszierende Nanopigmente, die im sichtbaren Wellenlängenbereich farblos sind und unter UV-Bestrahlung, insbesondere bei 254 nm, 313 nm oder 365 nm, fluoreszieren. Nanopigmente sind durch einfaches Einrühren in Druckmedien dispergierbar und in Drucktinten im Tintenstrahldruckverfahren in einfacher Weise verarbeitbar, während herkömmliche Pigmente aufwendig mit dem Druckmedium vermahlen werden müssen, um eine brauchbare Dispergierung zu erzielen. Siehe zu Nanopartikeln und deren Verwendung auch die WO 03/052025 A1.

Besonders bevorzugt ist die Verwendung eines lumineszierenden Farbmittels oder einer Kombination von mindestens zwei lumineszierenden Farbmitteln, welches/welche bei Anregung mit unterschiedlichen Wellenlängen unterschiedliche sichtbare farbige Emissionen erzeugen. Dabei kann mindestens eine Lumineszenzerscheinung im infraroten und/oder sichtbaren und/oder ultravioletten Bereich auftreten. So kann beispielsweise von einem einzigen Farbmittel bei UV-Anregung mit einer Wellenlänge von 365 nm eine andere farbige Fluoreszenzerscheinung im sichtbaren Bereich emittiert werden als bei einer UV-Anregung mit einer Wellenlänge von 254 nm im sichtbaren Bereich emittiert wird. Ein solches bifluoreszierendes Pigment, das bei Anregung mit 254 nm sichtbar rot fluoresziert und bei Anregung mit 365 nm sichtbar blauweiß fluoresziert, ist beispielsweise unter der Bezeichnung BF11 von der Firma Specimen Document Security Division, Budapest, erhältlich. Beispiele zu monolumineszierenden Farbmitteln, welche bei Anregung unterschiedlich farbige sichtbare Emissionen zeigen und die in Kombination eingesetzt werden können, finden sich auch in US 5,005,873.

Besonders bevorzugt ist eine Kombination von lumineszierenden Farbmittein, die bei sichtbaren Wellenlängen farblos sind und unter UV-Bestrahlung im sichtbaren Bereich derart farbig lumineszieren, dass ein Echtfarbenbild generiert wird.

Organische, mittels UV-Bestrahlung anregbare lumineszierende Farbmittel sind beispielsweise unter der Bezeichnung UVITEX^{®} erhältlich, die beispielsweise im UV-Bereich sowie im sichtbaren Bereich fluoreszieren.

Anorganische, anregbare lumineszierende Farbmittel sind unter anderem Materialien wie La₂O₂S:Eu, ZnSiO₄:Mn oder YVO₄:Nd und beispielsweise unter der Bezeichnung LUMILUX^{®} erhältlich.
Lumineszierende Copolymere sind beispielsweise Co-Polyamide, Co-Polyester oder Co-Polyesteramide, welche eingemischte fluoreszierende Komponenten aufweisen.

Lumineszierende Farbmittel und deren Mischungen können dabei allein oder in Kombination mit herkömmlichen, nicht-lumineszierenden Farbmitteln eingesetzt werden.

Besonders ansprechend ist eine Ausbildung der mindestens einen partiell ausgeformten Funktionsschicht und der mindestens einen weiteren partiell ausgeformten Schicht in Komplementärfarben, wie in den Farben rot und grün, zumindest unter einem bestimmten Blickwinkel oder unter einer bestimmten Bestrahlungsart gesehen.

Für den ersten Mehrschichtkörper werden besonders auffällige und ansprechende Effekte erzielt, wenn die mindestens eine partiell ausgeformte Funktionsschicht und/oder die mindestens eine weitere partiell ausgeformte Schicht mit einer diffraktiven Reliefstruktur hinterlegt ist und einen holographischen oder kinegraphischen optisch variablen Effekt zeigt.

Eine bevorzugte erste Ausführungsform des Mehrschichtkörpers wird gebildet, indem die mindestens eine partiell ausgeformte Funktionsschicht eine, insbesondere opake, Metallschicht ist und die mindestens eine weitere partiell ausgeformte Schicht eine eingefärbte Lackschicht ist, oder umgekehrt.

Eine bevorzugte zweite Ausführungsform des Mehrschichtkörpers wird gebildet, indem die mindestens eine partiell ausgeformte Funktionsschicht eine Schicht enthaltend Flüssigkristalle ist und die mindestens eine weitere partiell ausgeformte Schicht eine eingefärbte Lackschicht ist, oder umgekehrt.

Eine bevorzugte dritte Ausführungsform des Mehrschichtkörpers wird gebildet, indem die mindestens eine partiell ausgeformte Funktionsschicht durch einen Dünnfilm-Reflektionsschichtstapel mit blickwinkelabhängigem Interferenzfarbeffekt gebildet ist und die mindestens eine weitere partiell ausgeformte Schicht eine eingefärbte Lackschicht ist, oder umgekehrt.

Eine bevorzugte vierte Ausführungsform des Mehrschichtkörpers wird gebildet, indem dass die mindestens eine partiell ausgeformte Funktionsschicht eine erste eingefärbte Lackschicht ist und die mindestens eine weitere partiell ausgeformte Schicht eine weitere, unterschiedlich eingefärbte Lackschicht ist.

Eine bevorzugte fünfte Ausführungsform des Mehrschichtkörpers wird gebildet, indem die mindestens eine partiell ausgeformte Funktionsschicht eine erste eingefärbte Lackschicht ist und die mindestens eine weitere partiell ausgeformte Schicht eine dielektrische Reflektionsschicht ist, oder umgekehrt.

Vorzugsweise werden die Lackschichten dabei mit mindestens einem opaken und/oder mindestens einem transparenten Stoff eingefärbt. Insbesondere hat es sich bewährt, wenn die eingefärbte Lackschicht mit mindestens einem Farbmittel der Farbe gelb, magenta, cyan oder schwarz (CMYK) oder der Farbe rot, grün und blau (RGB) eingefärbt ist. Es sind somit sowohl durch subtraktive wie auch durch additive Farbmischung, welche z.B. durch oben beschriebene strahlungsanregbare (z.B. UV, IR) Pigmente oder Farbstoffe erzeugt werden kann, unterschiedliche Farbeindrücke erzeugbar.

Die oben genannte fünfte Ausführungsform, bei welcher der Mehrschichtkörper die mindestens eine partiell ausgeformte Funktionsschicht in Form einer ersten eingefärbten Lackschicht und die mindestens eine weitere partiell ausgeformte Schicht in Form einer dielektrischen Reflektionsschicht aufweist, oder umgekehrt, eignet sich besonders für Lackschichten, welche mittels UV-Strahlung anregbare lumineszierende Farbmittel aufweisen.
Es hat sich nämlich gezeigt, dass diverse transparente dielektrische Schichten wie beispielsweise ZnS oder manche Kunststoffe eine UV-Strahlung nicht hindurch lassen und somit eine Anregung von im Strahlengang dahinter angeordneten Farbschichten enthaltend mittels UV-Strahlung anregbare lumineszierende Farbmittel verhindert oder zumindest behindert.
Bei der fünften Ausführungsform kann nun die Lackschicht alternierend zur dielektrischen Reflektionsschicht angeordnet werden, so dass sich die mit UV-Strahlung anzuregende Lackschicht bevorzugt nur in Bereichen befindet, in denen sich die dielektrische Reflektionsschicht nicht im Strahlengang zwischen der UV-Lichtquelle und der Lackschicht befindet.

Weiterhin hat es sich bewährt, wenn die mindestens eine partiell ausgeformte Funktionsschicht und/oder die mindestens eine weitere partiell ausgeformte Schicht zumindest bereichsweise ein, aus für das menschliche Auge nicht einzeln auflösbaren Pixeln, Bildpunkten oder Linien aufgebautes Rasterbild bildet/bilden.

Eine Rasterung der ersten Schicht ist auch dahingehend möglich, dass neben Rasterelementen, die mit einer Reflexionsschicht unterlegt sind und die - gegebenenfalls unterschiedliche - diffraktive Beugungsstrukturen aufweisen, neben Rasterelementen vorgesehen werden, die transparente Bereiche ohne Reflexionsschicht darstellen. Als Rasterung kann dabei eine amplituden- oder flächenmodulierte Rasterung gewählt sein. Durch eine Kombination von derartigen reflektiven/diffraktiven Bereichen und nicht-reflektiven, transparenten - unter Umständen ebenfalls diffraktiven - Bereichen lassen sich interessante optische Effekte erzielen. Wird ein solches Rasterbild beispielsweise in einem Fenster eines Wertdokuments angeordnet, so ist im Durchlicht ein transparentes Rasterbild erkennbar. Im Auflicht ist dieses Rasterbild nur bei einem bestimmten Winkelbereich sichtbar, in den kein Licht durch die reflektierenden Flächen gebeugt/reflektiert wird. Weiter ist auch möglich, derartige Elemente nicht nur in einem transparenten Fenster einzusetzen, sondern auch auf einen farbigen Aufdruck aufzubringen. In einem bestimmten Winkelbereich ist der farbige Aufdruck beispielsweise in Form des Raserbildes sichtbar, während es in einem anderen Winkelbereich aufgrund des von den Beugungsstrukturen oder sonstigen (Makro-)Strukturen reflektierten Lichtes nicht sichtbar ist. Weiterhin ist es auch möglich, dass durch eine entsprechend gewählte Rasterung mehrere in ihrer Reflektivität abnehmende, auslaufende Reflexionsbereiche ausgebildet werden.

Schließlich hat es sich als optisch ansprechend erwiesen, wenn mindestens zwei weitere partiell ausgeformte Schichten vorhanden sind.

Die Replizierschicht kann auf einer Trägerschicht angeordnet werden, beispielsweise wenn die Replizierschicht eine nicht selbsttragende Schicht oder zumindest eine sehr dünne Schicht ist. Die Trägerschicht wird insbesondere vom gebildeten Mehrschichtkörper ablösbar bzw. entfernbar ausgebildet.

Eine Ausbildung des Mehrschichtkörpers als ein Folienelement, insbesondere als eine Transferfolie, eine Heißprägefolie oder eine Laminierfolie, ist vorteilhaft. Dabei weist das Folienelement vorzugsweise auf mindestens einer Seite eine Kleberschicht auf.

Bei dem Mehrschichtkörper kann es sich aber nicht nur um ein Folienelement, sondern auch um einen starren Körper handeln. Folienelemente werden beispielsweise verwendet, um Dokumente, Banknoten o.ä. mit Sicherheitsmerkmalen zu versehen. Es kann sich dabei auch um Sicherheitsfäden für das Einweben in Papier oder Einbringen in eine Karte handeln, die mit dem erfindungsgemäßen Verfahren mit einer partiell ausgeformten Funktionsschicht in perfektem Register zu einer weiteren partiell ausgeformten Schicht ausbildbar sind. Vorteilhafterweise können auch starre Körper, wie eine Ausweiskarte, eine Grundplatte für ein Sensorelement, Halbleiterchips oder um Oberflächen von elektronischen Geräten, beispielsweise eine Gehäuseschale für ein Mobiltelefon, mit einem erfindungsgemäßen Mehrschichtkörper versehen werden.

Ein Sicherheitselement für Sicherheits- oder Wertdokumente, welches mit einem erfindungsgemäßen Mehrschichtkörper versehen ist oder zumindest teilweise aus dem Mehrschichtkörper gebildet ist, ist besonders fälschungssicher und optisch ansprechend ausgebildet. Als Sicherheits- oder Wertdokument wird insbesondere ein Ausweis, ein Reisepass, eine Bankkarte, eine Identitätskarte, eine Banknote, ein Wertpapier, ein Ticket, eine Sicherheitsverpackung oder ähnliches angesehen. Zum Sichern von solchen Dokumenten wird insbesondere in kritischen Bereichen des Dokuments, wie dem Passbild oder der Unterschrift des Inhabers, oder über das gesamte Dokument oder einen Fensterausschnitt im Dokument hinweg ein, vorzugsweise ein zumindest teilweise transparenter Mehrschichtkörper als Sicherheitselement angeordnet. Weiterhin ist es möglich, in einem solchen Fenster in Reflexion eine erste Information und im Durchlicht eine zweite Information sichtbar werden zu lassen. Es lassen sich neue Sicherheitselemente mit besonders brilliantem und filigranem Erscheinungsbild generieren. So ist es beispielsweise möglich, durch Bildung einer Rasterung der mindestens einen partiell ausgeformten Funktionsschicht und/oder weiteren partiell ausgeformten Schicht im Durchlicht halbtransparente Bilder zu erzeugen.

Das Sicherheitsdokument kann neben dem Mehrschichtkörper noch weitere Sicherheitseinrichtungen, wie beispielsweise Druckschichten enthaltend optisch variable Farbmittel, Magnetschichten, Wasserzeichen usw. aufweisen. Druckschichten können dabei in Sicherheitselemente integriert sein oder direkt auf einem Substrat des Sicherheitsdokuments gebildet sein. Sofern Druckschichten auf dem Sicherheitsdokument angeordnet werden, welche mittels UV-Strahlung anregbare lumineszierende Farbmittel aufweisen, hat es sich bewährt, wenn diese aus den bereits oben genannten Gründen nicht durch transparente dielektrische Schichten wie ZnS bedeckt werden, welche als UV-Filter wirken und eine Anregung der fluoreszierenden Farbmittel verhindern oder behindern.

Durch Verwendung von Druckfarben, die unter Normalbeleuchtung farbig sind und weiterhin mittels UV-Strahlung anregbare fluoreszierende Farbmittel enthalten, können jedoch auch dann interessante optische Effekte erzeugt werden, wenn das daraus gebildete Druckbild teilweise von einer für UV-Strahlung undurchlässigen transparenten dielektrischen Schicht bedeckt ist und teilweise nicht. Bei UV-Bestrahlung zeigt sich dann in den Bereichen des Druckbilds, in denen sich die als UV-Filter fungierende transparente dielektrische Schicht befindet, weiterhin die gewohnte Farbe, während in den Bereichen, in denen die UV-Strahlung unmittelbar auf die Druckfarbe des Druckbilds auftrifft, eine Fluoreszenzerscheinung. Je nach Ausbildung der Öffnungen in der transparenten dielektrischen Schicht lassen sich somit unabhängig von der Form des Druckbilds musterförmig oder in Form alphanumerischer Zeichen usw. ausgebildete Fluoreszenzerscheinungen erzeugen.

Aber auch elektronische Bauelemente können mit einem erfindungsgemäßen Mehrschichtkörper ausgebildet sein. Beispielsweise können die mindestens eine partiell ausgeformte Funktionsschicht und/oder die mindestens eine weitere Schicht ein elektronisches Bauelement bilden, beispielsweise eine Antenne, einen Kondensator, eine Spule oder ein organisches Halbleiterbauelement. Bei der mindestens einen partiell ausgeformten Funktionsschicht und/oder der mindestens einen weiteren partiell ausgeformten Schicht kann es sich auch um ein Polymer handeln, so dass beispielsweise die eine Schicht als ein elektrischer Leiter und die andere Schicht als ein elektrischer Isolator ausgebildet sein kann, wobei beide Schichten als transparente Schichten ausgebildet sein können.

Wie weiter oben erläutert, können weitere Schichten vorgesehen sein, die mit dem erfindungsgemäßen Verfahren registergenau auf dem Mehrschichtkörper anordenbar sind. Erfindungsgemäße Mehrschichtkörper eignen sich beispielsweise als optische Bauelemente, wie Linsensysteme, Belichtungs- und Projektionsmasken. Sie sind auch als Bauelemente oder Dekorationselemente im Bereich der Telekommunikation einsetzbar.

Weitere optische Effekte können erzeugt werden, wenn die mindestens eine partiell ausgeformte Funktionsschicht und/oder die mindestens eine weitere Schicht aus mehreren Teilschichten ausgebildet sind bzw. ist, insbesondere wenn die Teilschichten ein Dünnfilmschichtsystem bilden.

Es kann vorgesehen sein, dass die Teilschichten aus unterschiedlichen Materialien gebildet sind. Eine solche Ausbildung kann nicht nur für das vorstehend genannte Dünnfilmschichtsystem vorgesehen sein. Auf diese Weise können beispielsweise auch nanotechnologische Funktionselemente ausgebildet werden, z.B. kann aus zwei unterschiedlichen metallischen Schichten ein Bimetallschalter mit Abmessungen im µm-Bereich erzeugt werden.

Die erfindungsgemäßen Verfahren bieten vielfältige Möglichkeiten, Mehrschichtkörper auszubilden und die Verfahrensschritte sind nicht auf eine einmalige Anwendung begrenzt, um beispielsweise einen noch komplexeren Mehrschichtkörper zu bilden. Weiterhin können die Schichten des Mehrschichtkörpers an irgendeiner Stelle des Verfahrensablaufs chemisch, physikalisch oder elektrisch behandelt werden, um beispielsweise eine chemische oder mechanische Beständigkeit zu verändern oder eine andere Eigenschaft der jeweiligen Schicht zu beeinflussen.

Unabhängig von der oben beschriebenen Erfindung wird hier ganz allgemein auch Schutz für ein Sicherheitselement und dessen Herstellung begehrt, das eine für UV-Strahlung undurchlässige, transparente dielektrische Schicht, insbesondere Reflektionsschicht, aufweist, die mit Öffnungen versehen ist, wobei senkrecht zur Ebene der dielektrischen Schicht gesehen auf der, dem Betrachter abgewandten Seite der dielektrischen Schicht zumindest partiell und zumindest im Bereich deren Öffnungen eine Lackschicht enthaltend mittels UV-Strahlung anregbare, lumineszierende Farbmittel angeordnet ist.

Die Erfindung wird anhand der Zeichnungen beispielhaft erläutert.
Es zeigen
- Fig. 1: eine schematische Schnittdarstellung eines ersten Ausführungsbeispiels eines erfindungsgemäßen Mehrschichtkörpers;
- Fig. 2: eine schematische Schnittdarstellung der ersten Fertigungsstufe des Mehrschichtkörpers in Fig. 1;
- Fig. 3: eine schematische Schnittdarstellung der zweiten Fertigungsstufe des Mehrschichtkörpers in Fig. 1;
- Fig. 4: eine schematische Schnittdarstellung der dritten Fertigungsstufe des Mehrschichtkörpers in Fig. 1;
- Fig. 5: eine schematische Schnittdarstellung der vierten Fertigungsstufe des Mehrschichtkörpers in Fig. 1;
- Fig. 5a: eine schematische Schnittdarstellung einer abgewandelten Ausführung der in Fig. 5 dargestellten Fertigungsstufe;
- Fig. 5b: eine schematische Schnittdarstellung der auf die Fertigungsstufe nach Fig. 5a folgenden Fertigungsstufe;
- Fig. 6: eine schematische Schnittdarstellung der fünften Fertigungsstufe des Mehrschichtkörpers in Fig. 1;
- Fig. 7: eine schematische Schnittdarstellung der sechsten Fertigungsstufe des Mehrschichtkörpers in Fig. 1;
- Fig. 8: eine schematische Schnittdarstellung eines weiteren Mehrschichtkörpers;
- Fig. 9: eine schematische Schnittdarstellung eines weiteren Mehrschichtkörpers;
- Fig. 10 bis 13: schematische Schnittdarstellungen weiterer Verfahrensschritte zum ersten Verfahren;
- Fig. 14: eine schematische Schnittdarstellung zum ersten Verfahren;
- Fig. 15(A) bis (F): weitere schematische Schnittdarstellungen zum ersten Verfahren;
- Figur 15(G): einen gemäß dem Verfahren nach Figuren 15(A) bis (F) gebildeten Mehrschichtkörper in der Draufsicht;

- Fig. 16(A) bis (C): weitere schematische Schnittdarstellungen zum ersten Verfahren;
- Fig. 17(A) bis 17(H): weitere schematische Schnittdarstellungen zum ersten Verfahren;
- Fig. 18(A) bis 18(H): weitere schematische Schnittdarstellungen zum ersten Verfahren;
- Figur 18(K): einen gemäß dem Verfahren nach Figuren 18(A) bis (H) gebildeten ersten Mehrschichtkörper in der Draufsicht;
- Figur 18(M): einen gemäß dem Verfahren nach Figuren 18(A) bis (H) gebildeten zweiten Mehrschichtkörper in der Draufsicht;
- Fig. 19: eine schematische Schnittdarstellung durch einen weiteren Mehrschichtkörper;
- Fig. 20(A) bis 20(C): weitere schematische Schnittdarstellungen zum ersten Verfahren;
- Fig. 21: in Schnittdarstellung einen nach dem ersten Verfahren gebildeten Mehrschichtkörper;
- Fig. 22(a) bis 23(B): in Schnittdarstellung diverse Sicherheitsdokumente enthaltend Mehrschichtkörper; und
- Fig. 24(A) bis (E): schematische Schnittdarstellungen zum zweiten Verfahren.

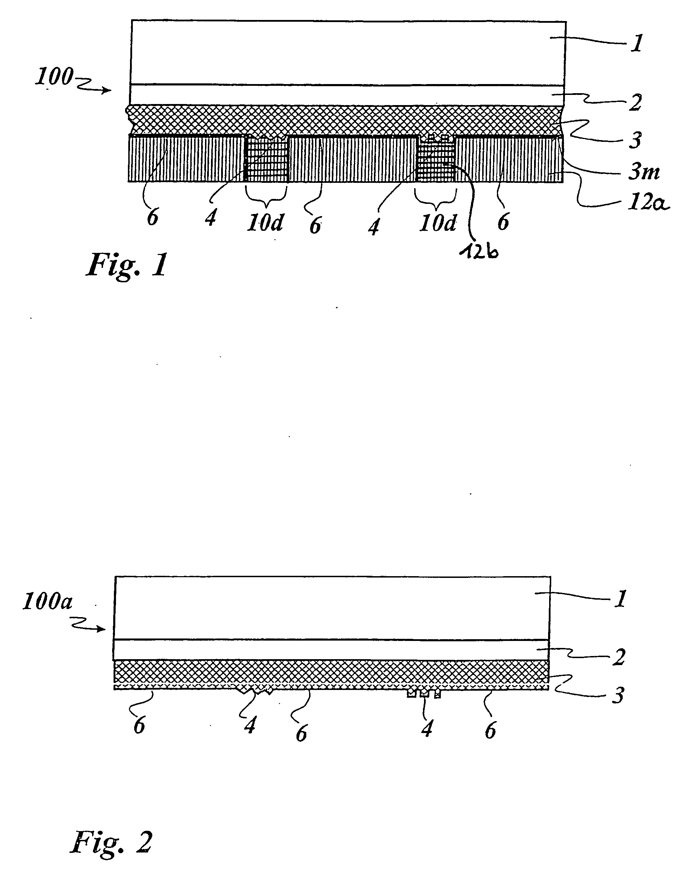

In Fig. 1 ist ein Mehrschichtkörper 100 dargestellt, bei dem auf einer Trägerfolie 1 eine funktionelle Schicht 2, eine Replizierschicht 3, eine strukturierte erste Schicht 3m aus Aluminium und zwei unterschiedlich farbige, transparente Photoresistschichten 12a, 12b im Register zur ersten Schicht 3m angeordnet sind. Bei der funktionellen Schicht 2 handelt es sich um eine Schicht, die vornehmlich der Erhöhung der mechanischen und chemischen Stabilität des Mehrschichtkörpers dient, die aber auch in bekannter Weise zur Erzeugung optischer Effekte ausgebildet sein kann, wobei auch vorgesehen sein kann, die Schicht aus mehreren Teilschichten auszubilden. Es kann sich auch um eine Schicht handeln, die aus Wachs ausgebildet ist oder die als Ablöseschicht ausgebildet ist. Es kann aber auch vorgesehen sein, auf diese Schicht zu verzichten und die Replizierschicht 3 direkt auf der Trägerfolie 1 anzuordnen. Weiter kann vorgesehen sein, die Trägerfolie 1 selbst als Replizierschicht auszubilden.

Der Mehrschichtkörper 100 kann ein Abschnitt einer Transferfolie, beispielsweise einer Heißprägefolie sein, der mittels einer hier nicht gezeigten Kleberschicht auf ein Substrat aufgebracht werden kann. Bei der Kleberschicht kann es sich um einen Schmelzkleber handeln, der bei thermischer Einwirkung schmilzt und den Mehrschichtkörper dauerhaft mit der Oberfläche des Substrats verbindet.

Die Trägerfolie 1 kann als eine mechanisch und thermisch stabile Folie aus PET ausgebildet sein.

In die Replizierschicht 3 können Bereiche mit unterschiedlichen Reliefstrukturen mittels bekannter Verfahren abgeformt sein. Im dargestellten Ausführungsbeispiel sind erste Bereiche 4 mit diffraktiven Reliefstrukturen und zweite Bereiche die ebenen Bereichen 6 vorhanden.

Die auf der Replizierschicht 3 angeordnete erste Schicht 3m weist demetallisierte Bereiche 10d auf, die deckungsgleich mit den ersten Bereichen 4 angeordnet sind. In den Bereichen 10d erscheint der Mehrschichtkörper 100 transparent bzw. teiltransparent.

Die Fig. 2 bis 8 zeigen nun die Fertigungsstufen des Mehrschichtkörpers 100. Gleiche Elemente wie in Fig. 1 sind mit gleichen Positionen bezeichnet.

Fig. 2 zeigt einen Mehrschichtkörper 100a, bei dem auf der Trägerfolie 1 die funktionelle Schicht 2 und die Replizierschicht 3 angeordnet sind.

Die Replizierschicht 3 ist durch bekannte Verfahren oberflächlich strukturiert. Hierzu wird beispielsweise als Replizierschicht 3 ein thermoplastischer Replizierlack durch Drucken, Sprühen oder Verlacken aufgebracht und eine Reliefstruktur in den Replizierlack mittels eines beheizten Stempels oder einer beheizten Replizierwalze abgeformt.

Bei der Replizierschicht 3 kann es sich auch um einen UV-härtbaren Replizierlack handeln, der beispielsweise durch eine Replizierwalze strukturiert ist. Die Strukturierung kann aber auch durch eine UV-Bestrahlung durch eine Belichtungsmaske hindurch erzeugt sein. Auf diese Weise können die Bereiche 4 und 6 in die Replizierschicht 3 abgeformt sein. Bei dem Bereich 4 kann es sich beispielsweise um die optisch aktiven Bereiche eines Hologramms oder eines Kinegram^{®}-Sicherheitsmerkmals handeln.

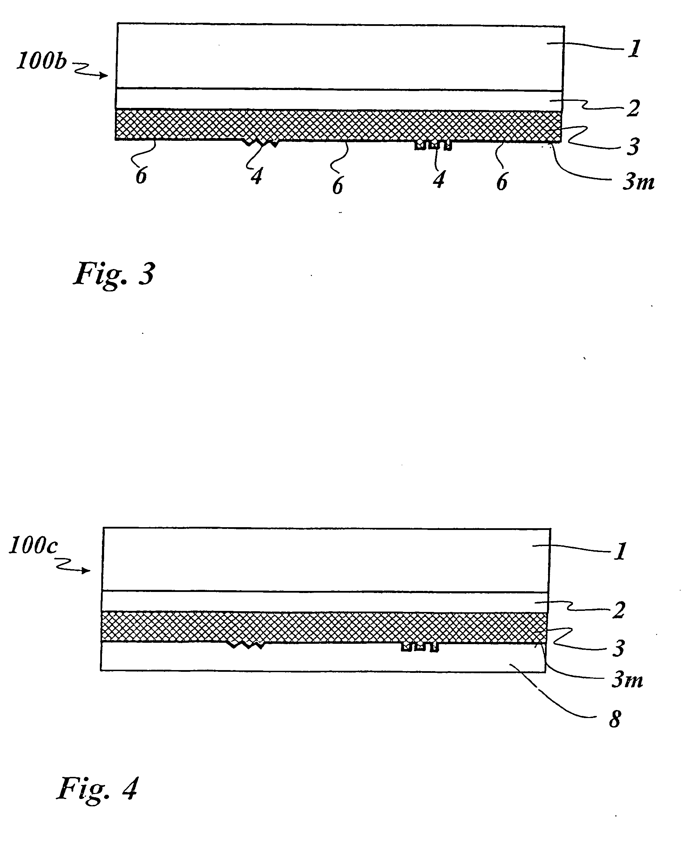

Fig. 3 zeigt nun einen Mehrschichtkörper 100b, der aus dem Mehrschichtkörper 100a in Fig. 2 gebildet ist, indem die erste Schicht 3m auf die Replizierschicht 3 mit gleichmäßiger Flächendichte bezogen auf die von der Replizierschicht 3 aufgespannte Ebene aufgebracht ist, beispielsweise durch Sputtern. Die erste Schicht 3m weist in diesem Ausführungsbeispiel eine Schichtdicke von einigen 10 nm auf. Die Schichtdicke der ersten Schicht 3m kann vorzugsweise so gewählt sein, dass die Bereiche 4 und 6 eine geringe Transmission aufweisen, beispielsweise zwischen 10% und 0,001%, d.h. eine optische Dichte zwischen 1 und 5, vorzugsweise zwischen 1,5 und 3. Die optische Dichte der ersten Schicht 3m, d.h. der negative dekadische Logarithmus der Transmission, liegt demnach in den Bereichen 4 und 6 zwischen 1 und 3. Vorzugsweise kann vorgesehen sein, die erste Schicht 3m mit einer optischen Dichte zwischen 1,5 und 2,5 auszubilden. Die Bereiche 4 und 6 erscheinen dem Auge des Betrachters deshalb undurchsichtig.

Besonders vorteilhaft ist es hier, die erste Schicht 3m in einer Schichtdicke aufzubringen, bei der die erste Schicht 3m bei Aufbringung auf einer planaren Oberfläche, also wie in den Bereichen 6, weitgehend opak ist und eine optische Dichte von größer als 2 besitzt. Je dicker die auf die Replizierschicht 3 aufgebrachte erste Schicht 3m ist, umso stärker wirkt sich die durch die in den Bereichen 4 vorgesehene diffraktive Reliefstruktur bewirkte Änderung der effektiven optischen Schichtdicke auf das Transmissionsverhalten der ersten Schicht 3m aus. Untersuchungen haben gezeigt, dass die durch die diffraktive Reliefstruktur bewirkte Änderung der effektiven optischen Dicke der ersten Schicht 3m in etwa proportional zur aufgedampften Schichtdicke und damit etwa proportional zur optischen Dichte ist. Da die optische Dichte den negativen Logarithmus der Transmission darstellt, wird so durch Erhöhung des Flächenauftrags an Material der ersten Schicht 3m der Transmissionsunterschied zwischen den Bereichen 4 und 6 überproportional erhöht.

Allerdings unterscheiden sich die optischen Dichten der ersten Schicht 3m in den Bereichen 4 und 6 so, dass sie in den Bereichen 4 vermindert ist gegenüber den Bereichen 6. Verantwortlich dafür ist die Oberflächenvergrößerung in den Bereichen 4 wegen des von Null verschiedenen Tiefen-zu-Breiten-Verhältnisses der Strukturelemente und die dadurch verringerte Dicke der ersten Schicht 3m. Das dimensionslose Tiefen-zu-Breiten-Verhältnis sowie die Spatialfrequenz sind kennzeichnende Merkmale für die Oberflächenvergrößerung vorzugsweise periodischer Strukturen. Eine solche Struktur bildet in periodischer Abfolge "Berge" und "Täler" aus. Als Tiefe ist hier der Abstand zwischen "Berg" und "Tal" bezeichnet, als Breite der Abstand zwischen zwei "Bergen". Je höher nun das Tiefen-zu-Breiten-Verhältnis ist, desto steiler sind die "Bergflanken" ausgebildet und desto dünner ist die auf den "Bergflanken" abgeschiedene erste Schicht 3m ausgebildet. Dieser Effekt ist auch zu beobachten, wenn es sich um diskret verteilte "Täler` handelt, die in einem Abstand zueinander angeordnet sein können, der um ein Vielfaches größer als die Tiefe der "Täler" ist. In einem solchen Fall ist die Tiefe des "Tales" zur Breite des "Tales" ins Verhältnis zu setzen, um durch Angabe des Tiefen-zu-Breiten-Verhältnisses die Geometrie des "Tales" zutreffend zu beschreiben.

Bei der Ausbildung von Bereichen mit verringerter optischer Dichte ist es wichtig, die einzelnen Parameter in ihren Abhängigkeiten zu kennen und zweckmäßig zu wählen. Der Grad der Verringerung der optischen Dichte kann in Abhängigkeit vom Untergrund, von der Beleuchtung usw. variieren. Eine wichtige Rolle spielt dabei die Absorption des Lichtes in der ersten Schicht. Beispielsweise reflektieren Chrom und Kupfer unter Umständen weitaus weniger.

Tabelle 1 zeigt den ermittelten Reflexionsgrad von zwischen Plastikfolien (Brechungsindex n = 1,5) angeordneten ersten Schichten aus Metall, hier aus Ag, Al, Au, Cr, .Cu, Rh und Ti bei einer Licht-Wellenlänge λ = 550 nm. Das Dickenverhältnis ε ist hierbei als Quotient aus der für den Reflexionsgrad R = 80% des Maximums Rₘₐₓ und der für den Reflexionsgrad R = 20% des Maximums Rₘₐₓ erforderlichen Dicke t der Metallschicht gebildet.

**Tabelle 1**

| **Metall** | **R_{Max}** | **t für 80 % R_{Max}** | **t für 20% R_{Max}** | **ε** | **h/d** |
|---|---|---|---|---|---|
| Ag | 0,944 | 31 nm | 9 nm | 3,4 | 1,92 |
| Al | 0,886 | 12 nm | 2,5 nm | 4,8 | 2,82 |
| Au | 0,808 | 40 nm | 12 nm | 3,3 | 1,86 |
| Rh | 0,685 | 18 nm | 4,5 nm | 4,0 | 2,31 |
| Cu | 0,557 | 40 nm | 12 nm | 3,3 | 1,86 |
| Cr | 0,420 | 18 nm | 5 nm | 3,6 | 2,05 |
| Ti | 0,386 | 29 nm | 8,5 nm | 3,3 | 1,86 |

Aus der heuristischen Betrachtung heraus haben Silber und Gold (Ag und Au), wie zu sehen ist, einen hohen maximalen Reflexionsgrad R_{Max} und erfordern ein relativ kleines Tiefen-zu-Breiten-Verhältnis einer Reliefstruktur zur Reduzierung der optischen Dichte der ersten Schicht, in dem vorstehenden Beispiel zur Ausbildung von Transparenz. Aluminium (Al) besitzt zwar auch einen hohen maximalen Reflexionsgrad R_{Max}, erfordert aber ein höheres Tiefen-zu-Breiten-Verhältnis der Reliefstruktur. Vorzugsweise kann deshalb vorgesehen sein, die erste Schicht aus Silber oder Gold auszubilden. Es kann aber auch vorgesehen sein, die erste Schicht aus anderen Metallen, Metalllegierungen oder Funktionsschichtmaterialien auszubilden.

Tabelle 2 zeigt nun die Berechnungsergebnisse, gewonnen aus strengen Beugungsberechnungen für als lineare, sinusförmige Gitter mit einem Gitterabstand von 350 nm ausgebildete Reliefstrukturen mit unterschiedlichen Tiefen-zu-Breiten-Verhältnissen. Die Reliefstrukturen sind mit Silber beschichtet mit einer nominalen Dicke t₀ = 40 nm. Das Licht, das auf die Reliefstrukturen auftrifft, hat die Wellenlänge λ = 550 nm (grün) und ist TE-polarisiert bzw. TMpolarisiert.

**Tabelle 2**

| Tiefen-zu-Breiten-Verhältnis | Gitterabstand in nm | Tiefe in nm | Reflexionsgrad (0R) TE | Transparenzgrad (0T) TE | Reflexionsgrad (0R) TM | Transparenzgrad (0T) TM |
|---|---|---|---|---|---|---|
| 0 | 350 | 0 | 84,5 % | 9,4 % | 84,5 % | 9,4 % |
| 0,3 | 350 | 100 | 78,4 % | 11,1 % | 50,0 % | 21,0 % |
| 0,4 | 350 | 150 | 42,0 % | 45,0 % | 31,0 % | 47,0 % |
| 1,1 | 350 | 400 | 2,3 % | 82,3 % | 1,6 % | 62,8 % |
| 2,3 | 350 | 800 | 1,2 % | 88,0 % | 0,2 % | 77,0 % |

Wie sich zeigte, ist insbesondere der Transparenzgrad bzw. die Transmission außer vom Tiefen-zu-Breiten-Verhältnis abhängig von der Polarisation des aufgestrahlten Lichtes. Diese Abhängigkeit ist in Tabelle 2 für das Tiefen-zu-Breiten-Verhältnis h/d = 1,1 dargestellt. Es kann vorgesehen sein, diesen Effekt für die selektive Ausbildung weiterer partiell ausgeformter Schichten zu nutzen.

Weiterhin zeigte sich, dass der Transparenzgrad bzw. der Reflexionsgrad der Metallschicht wellenlängenabhängig ist. Dieser Effekt ist besonders gut für TEpolarisiertes Licht ausgeprägt.

Weiterhin zeigte sich, dass der Transparenzgrad bzw. die Transmission abnimmt, wenn der Einfallswinkel des Lichtes sich vom normalen Einfallswinkel unterscheidet, d.h. der Transparenzgrad nimmt ab, wenn das Licht nicht senkrecht einfällt. Das bedeutet, dass die erste Schicht 3m nur in einem begrenzten Einfallskegel des Lichtes transparent bzw. weniger opak als in den spiegelnden Bereichen 6 ausgebildet sein kann. Es kann also vorgesehen sein, dass die erste Schicht 3m bei schräger Beleuchtung opak ausgebildet ist, wobei auch dieser Effekt für die selektive Ausbildung weiterer partiell ausgeformter Schichten nutzbar ist.

Neben dem Tiefen-zu-Breiten-Verhältnis einer Reliefstruktur wird die Veränderung der optischen Dichte auch durch die Spatialfrequenz der Reliefstruktur beeinflußt. So hat sich weiter gezeigt, dass eine Veränderung des Transmissionsverhaltens einer auf eine Reliefstruktur aufgebrachten ersten Schicht erzielt werden kann, wenn das Produkt aus Spatialfrequenz und Relieftiefe in einem ersten Bereich der Reliefstruktur größer als das Produkt aus Spatialfrequenz und Relieftiefe in einem zweiten Bereich der Reliefstruktur ist.

Die Ausbildung von Bereichen unterschiedlicher Transparenz bzw. Transmission kann aber auch durch andere Effekte erreicht werden, beispielsweise durch
- die Polarisationsabhängigkeit der Transmission infolge unterschiedlich orientierter Reliefstrukturen;
- den Formfaktor der Reliefstrukturen, d.h. Reliefstrukturen mit rechteckförmigem, sinusförmigem, sägezahnförmigem oder sonstigem Profil können bei gleichem Produkt aus Spatialfrequenz und Relieftiefe eine unterschiedliche Transmission aufweisen;
- gerichtetes Aufdampfen der ersten Schicht in Kombination mit speziellen Reliefstrukturen bzw. Reliefstrukturkombinationen oder -anordnungen.

Wenn es sich bei der ersten Reliefstruktur um eine Reliefstruktur mit einem stochastischen Profil handelt, beispielsweise um eine Mattstruktur, können Korrelationslänge, Rauhtiefe und statistische Verteilung des Profils typische Kenngrößen sein, welche die Transmission beeinflussen.

Zur Ausbildung von Bereichen mit unterschiedlicher Transparenz oder Transmission ist es so auch möglich, im ersten Bereich und im zweiten Bereich Reliefstrukturen zu verwenden, die sich in ein oder mehreren der oben aufgeführten Parameter unterscheiden.

Fig. 4 zeigt einen Mehrschichtkörper 100c, gebildet aus dem in Fig. 3 dargestellten Mehrschichtkörper 100b und einer photoempfindlichen Schicht 8. Dabei kann es sich um eine organische Schicht handeln, die durch klassische Beschichtungsverfahren, wie Tiefdruck, in flüssiger Form aufgebracht wird. Es kann auch vorgesehen sein, dass die photoempfindliche Schicht 8 aufgedampft wird oder als trockener Film auflaminiert wird.

Bei der photoempfindlichen Schicht 8 kann es sich beispielsweise um einen positiven Photoresist, wie AZ 1512 oder AZ P4620 von Clariant oder S1822 von Shipley, handeln, welcher in einer Flächendichte von 0,1g/m² bis 50g/m² auf die erste Schicht 3m aufgebracht wird. Die Schichtdicke richtet sich nach der gewünschten Auflösung und dem Prozess. So sind bei Lift-off-Prozessen eher dickere Schichten mit einer Schichtdicke > 1 µm gefragt, entsprechend einer Flächendichte von ca. 1 g/m². Bevorzugte Flächengewichte liegen im Bereich von 0,2 g/m² bis 10 g/m².

Der Auftrag wird hier ganzflächig vorgesehen. Es kann aber auch ein Auftrag in Teilbereichen vorgesehen sein, beispielsweise in Bereichen, die außerhalb der vorstehend genannten Bereiche 4 und 6 angeordnet sind. Es kann sich dabei um Bereiche handeln, die nur relativ grob im Register zum Design angeordnet sein müssen, beispielsweise um dekorative bildliche Darstellungen, wie z.B. Zufallsmuster oder aus wiederholten Bildern oder Texten gebildete Muster.

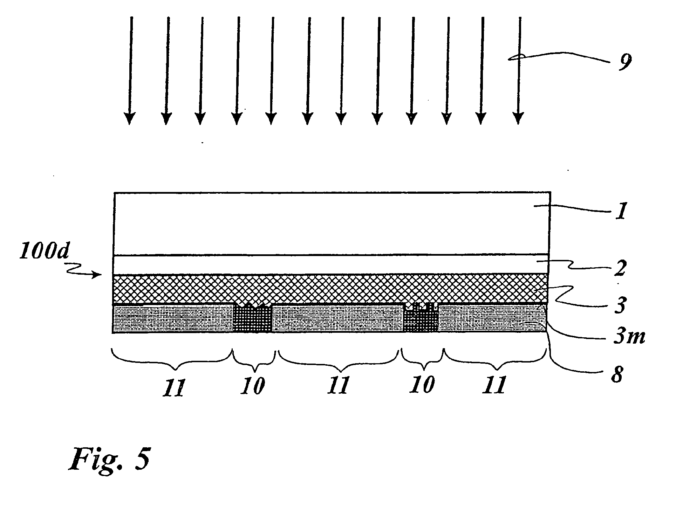

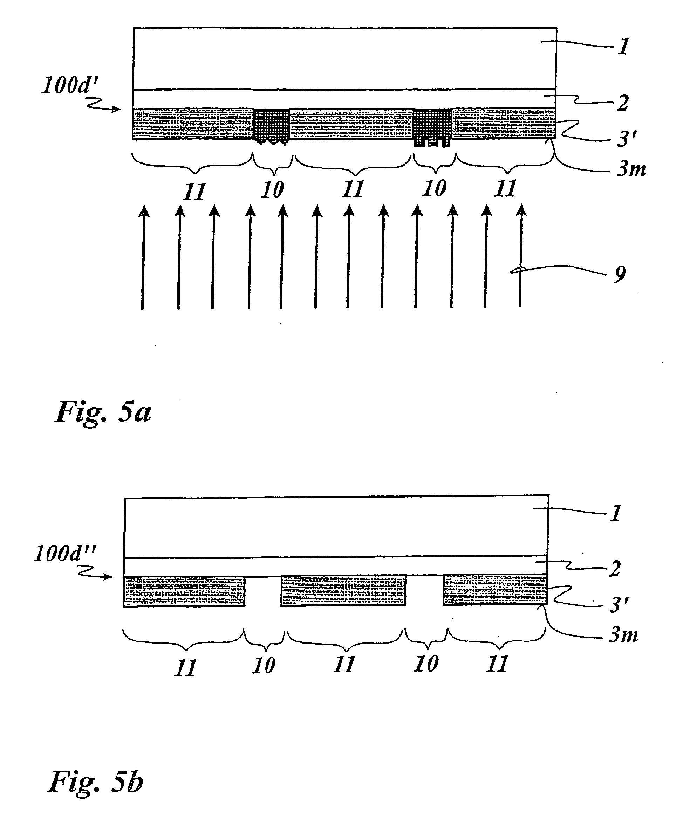

Fig. 5 zeigt nun einen Mehrschichtkörper 100d, der durch die Belichtung des Mehrschichtkörpers 100c in Fig. 4 durch die Trägerfolie 1 hindurch gebildet ist. Zur Belichtung kann UV-Licht 9 vorgesehen sein. Weil nun, wie vorstehend beschrieben, die mit diffraktiven Strukturen mit einem Tiefen-zu-Breiten-Verhältnis größer als Null versehenen Bereiche 4 der ersten Schicht 3m eine geringere optische Dichte aufweisen als die spiegelnden Bereiche 6 der ersten Schicht 3m, werden durch die UV-Bestrahlung in der photoempfindlichen Schicht 8 stärker belichtete Bereiche 10 erzeugt, die sich von geringer belichteten Bereichen 11 in ihren chemischen Eigenschaften unterscheiden.

In dem in Fig. 5 dargestellten Ausführungsbeispiel ist eine homogene Belichtung vorgesehen, die in allen Bereichen des Mehrschichtkörpers 100d mit gleicher Intensität ausgebildet ist. Es kann jedoch auch eine partielle Belichtung vorgesehen, beispielsweise um
a) Strukturen mit hohem Tiefen-zu-Breiten-Verhältnis als Designelemente zu belassen und nicht zu demetallisieren;
b) eine zusätzliche Information einzubringen, beispielsweise durch eine bandförmige Maske, die während der Belichtung mit dem Mehrschichtkörper 100d mitläuft,
c) eine individuelle Information, wie beispielsweise eine Laufnummer, einzubringen.

Es kann dabei vorgesehen sein, über eine kurzzeitige Belichtung vermittels eines programmierbaren räumlichen Lichtmodulators oder eines gesteuerten Lasers eine Kennzeichnung einzubringen.

Wellenlänge und Polarisation des Lichts sowie der Einfallswinkel des Lichts sind Beleuchtungsparameter, die es erlauben, gezielt Reliefstrukturen hervorzuheben und selektiv zu bearbeiten.

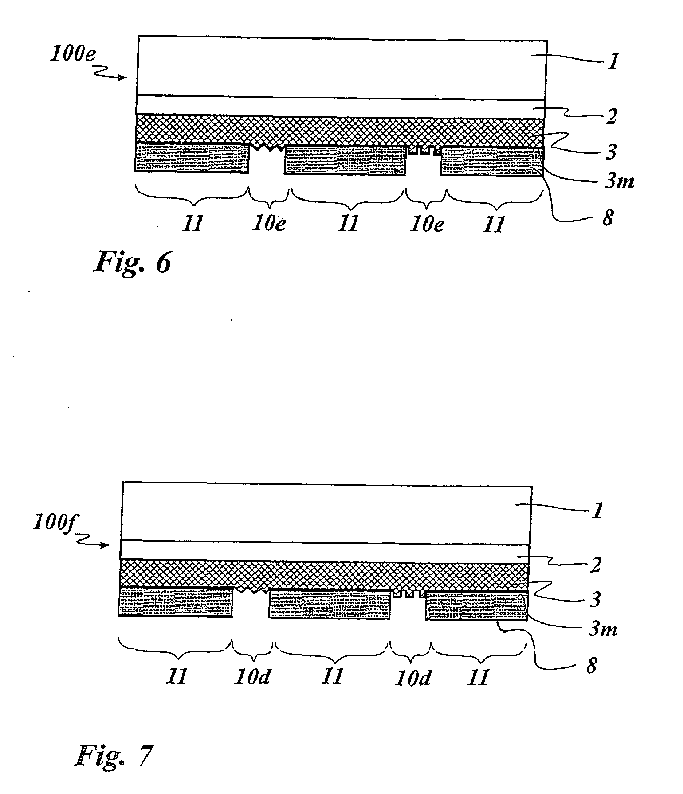

Auch chemische Eigenschaften können dazu genutzt werden. Die Bereiche 10 und 11 können sich beispielsweise durch ihre Löslichkeit in Lösungsmitteln unterscheiden. Auf diese Weise kann die photoempfindliche Schicht 8 nach der Belichtung mit UV-Licht "entwickelt" werden, wie im weiteren in Fig. 6 gezeigt ist. Bei der "Entwicklung" der photoempfindlichen Schicht 8 wird in der photoempfindlichen Schicht 8 die Entfernung von Bereichen 10 oder 11 erreicht.

Wenn in den Bereichen 4 zur Ausbildung einer dem menschlichen Auge sichtbaren Transparenz üblicherweise ein Tiefen-zu-Breiten-Verhältnis > 0,3 vorgesehen ist, hat sich überraschenderweise gezeigt, dass das für die Entwicklung der photoempfindlichen Schicht 8 ausreichende Tiefen-zu-Breiten-Verhältnis wesentlich kleiner sein kann. Es ist auch nicht notwendig, die erste Schicht 3m so dünn auszubilden, dass die Bereiche 4 bei visueller Betrachtung transparent erscheinen. Die bedampfte Trägerfolie kann also opak ausgebildet sein, denn die verringerte Transparenz kann durch eine erhöhte Belichtungsdosis der photoempfindlichen Schicht 8 ausgeglichen werden. Weiter ist zu berücksichtigen, dass die Belichtung der photoempfindlichen Schicht 8 typischerweise im nahen UV-Bereich vorgesehen ist, so dass der visuelle Betrachtungseindruck für die Beurteilung der optischen Dichte nicht entscheidend ist.

In den Fig. 5a und 5b ist ein abgewandeltes Ausführungsbeispiel dargestellt. Bei dem Mehrschichtkörper 100d' in Fig. 5a ist die in Fig. 5 dargestellte photoempfindliche Schicht 8 nicht vorgesehen. Statt dessen ist eine Replizierschicht 3' vorgesehen, bei der es sich um eine mit einem thermochromen Stoff eingefärbte photoempfindliche Waschlackschicht handelt. Der Mehrschichtkörper 100d' wird von unten durch die erste Schicht 3m hindurch belichtet, wodurch in den stärker belichteten Bereichen 10 die Replizierschicht 3' so verändert wird, dass sie auswaschbar ist.

Fig. 5b zeigt nun einen Mehrschichtkörper 100d", der nach dem Waschprozess aus dem Mehrschichtkörper 100d' resultiert. In den Bereichen 10 ist während des Waschprozesses mit der Replizierschicht 3' gleichzeitig die erste Schicht 3m entfernt worden. Die strukturierte Replizierschicht 3' bildet eine erste partiell ausgeformte thermochrome Funktionsschicht, die erste Schicht 3m bildet im perfektem Register dazu eine erste weitere partiell ausgeformte Schicht aus Aluminium.

Fig. 6 zeigt den "enttwickelten" Mehrschichtkörper 100e, der aus dem Mehrschichtkörper 100d durch Einwirkung eines auf die Oberfläche der belichteten photoempfindlichen Schicht 8 aufgebrachten Lösungsmittels gebildet ist. Dadurch sind nun Bereiche 10e ausgebildet, in denen die photoempfindliche Schicht 8 entfernt ist. Es handelt sich bei den Bereichen 10e um die in Fig. 3 beschriebenen Bereiche 4 mit einem Tiefen-zu-Breiten-Verhältnis größer Null der Strukturelemente. In Bereichen 11 ist die photoempfindlichen Schicht 8 erhalten, weil es sich dabei um die in Fig. 3 beschriebenen Bereiche 6 handelt, in denen die Strukturelemente ein Tiefen-zu-Breiten-Verhältnis gleich Null aufweisen. Wird als photoempfindliche Schicht 8 ein mit blauem Farbpigment eingefärbter transparenter positiver Photoresist eingesetzt, so bildet sich eine partiell ausgeformte transparente blaue Funktionsschicht im Register zur Reliefstruktur aus.

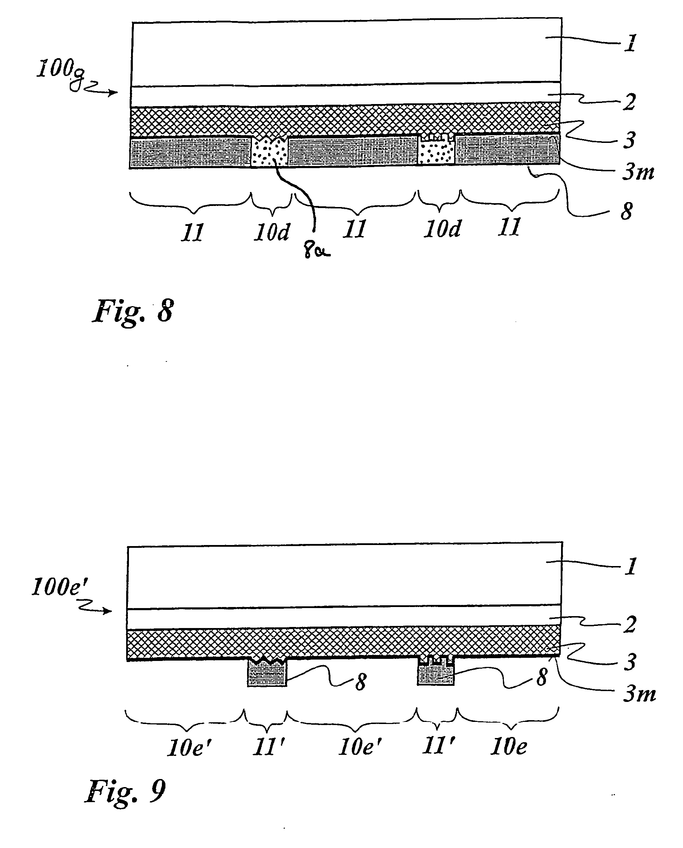

In dem in den Fig. 6 dargestellten Ausführungsbeispiel ist die photoempfindliche Schicht 8 also aus einem positiven Photoresist ausgebildet. Bei einem solchen Photoresist sind die belichteten Bereiche im Entwickler löslich. Im Gegensatz dazu sind bei einem negativen Photoresist die unbelichteten Bereiche im Entwickler löslich, wie weiter unten in dem in Fig. 9 bis 12 dargestellten Ausführungsbeispiel ausgeführt.

Nunmehr kann, wie anhand eines Mehrschichtkörpers 100f in Fig. 7 gezeigt, die erste Schicht 3m in den Bereichen 10e entfernt werden, die nicht durch die als Ätzmaske dienende entwickelte photoempfindliche Schicht 8 vor dem Angriff des Ätzmittels geschützt sind. Bei dem Ätzmittel kann es sich beispielsweise um eine Säure oder Lauge handeln. Auf diese Weise werden die auch in Fig. 1 gezeigten Bereiche 10d ausgebildet. Die strukturierte photoempfindlichen Schicht 8 bildet die erste partiell ausgeformte transparente blaue Funktionsschicht, die erste Schicht 3m bildet nach dem Ätzen in perfektem Register dazu eine erste weitere partiell ausgeformte Schicht aus Aluminium.

Auf diese Weise kann also die erste Schicht 3m ohne zusätzlichen technologischen Aufwand registergenau strukturiert werden. Dazu sind keine aufwendigen Vorkehrungen zu treffen, wie beispielsweise beim Aufbringen einer Ätzmaske durch Maskenbelichtung oder Druck. Bei einem solchen herkömmlichen Verfahren sind Toleranzen > 0,2 mm üblich. Mit dem erfindungsgemäßen Verfahren sind dagegen Toleranzen im µm-Bereich bis in den nm-Bereich möglich, d.h. Toleranzen, die nur durch das zur Strukturierung der Replizierschicht gewählte Replizierverfahren und die Origination bestimmt sind.

Es kann vorgesehen sein, die erste Schicht 3m als Abfolge verschiedener Metalle auszubilden und die Unterschiede der physikalischen und/oder chemischen Eigenschaften der metallischen Teilschichten zu nutzen. Beispielsweise kann vorgesehen sein, als erste metallische Teilschicht Aluminium abzuscheiden, das eine hohe Reflexion aufweist und deshalb bei Betrachtung des Mehrschichtkörpers von der Trägerseite her reflektierende Bereiche gut hervortreten läßt. Als zweite metallische Teilschicht kann Chrom abgeschieden sein, das eine hohe chemische Resistenz gegenüber verschiedenen Ätzmitteln aufweist. Der Ätzvorgang der ersten Schicht 3m kann nun in zwei Stufen vorgesehen sein. Es kann vorgesehen sein, in der ersten Stufe die Chromschicht zu ätzen, wobei die entwickelte photoempfindliche Schicht 8 als Ätzmaske vorgesehen ist und anschließend in der zweiten Stufe die Aluminiumschicht zu ätzen, wobei die Chromschicht nun als Ätzmaske vorgesehen ist.

Solche Mehrschichtsysteme erlauben eine größere Flexibilität bei der Auswahl der im Fertigungsprozeß verwendeten Materialien für den Photoresist, für die Ätzmittel und für die erste Schicht.

Fig. 8 zeigt die optionale Möglichkeit, nach dem in Fig. 7 dargestellten Fertigungsschritt eine Schicht 8a aus transparenter, lumineszierende Pigmente enthaltender Druckfarbe in die ersten Bereiche 10d einzurakeln. In Fig. 8 ist ein Mehrschichtkörper 100g dargestellt, gebildet aus der Trägerfolie 1, der funktionellen Schicht 2, der Replizierschicht 3, der strukturierten ersten Schicht 3m aus Aluminium als einer ersten weiteren partiell ausgeformten Schicht, der strukturierten transparenten blauen photoempfindlichen Schicht 8 als einer ersten partiell ausgeformten Funktionsschicht und der partiell ausgeformten weiteren Schicht 8a aus transparenter lumineszierender Druckfarbe als einer zweiten partiell ausgeformten Funktionsschicht.

In der Fig. 9 ist nun ein zweites Ausführungsbeispiel eines Mehrschichtkörpers 100e' dargestellt, bei dem anstelle der photoempfindliche Schicht 8 aus positivem Photoresist (gemäß Figuren 5, 6, 6 und 8) eine photoempfindliche Schicht 8 aus negativen Photoresist verwendet wurde. Wie in Fig. 9 zu erkennen, weist ein Mehrschichtkörper 100e' Bereiche 10e' auf, in denen die unbelichtete photoempfindliche Schicht 8 durch die Entwicklung entfernt wurde. Bei den Bereichen 10e' handelt es sich um opake Bereiche der ersten Schicht 3m. In Bereichen 11' ist die belichtete photoempfindliche Schicht 8 nicht entfernt, es handelt sich dabei um transmissivere Bereiche der ersten Schicht 3m, also um Bereiche mit geringerer optischer Dichte, als die Bereiche 10e' aufweisen.

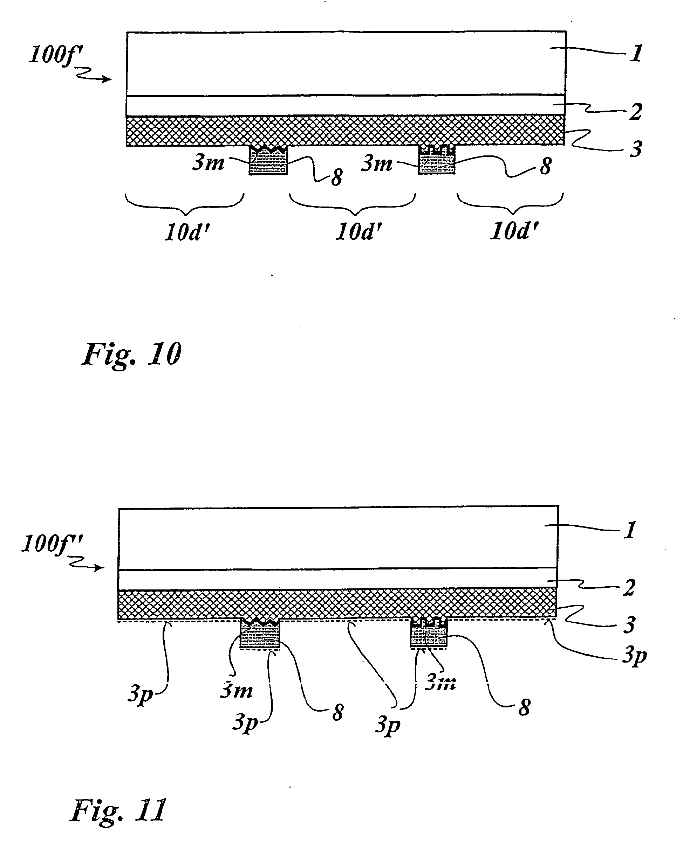

In Fig. 10 ist ein Mehrschichtkörper 100f' dargestellt, der durch Entfernen der ersten Schicht 3m durch einen Ätzprozeß aus dem Mehrschichtkörper 100e' (Fig. 9) gebildet ist. Die entwickelte photoempfindliche Schicht 8 ist dafür als Ätzmaske vorgesehen, die in den Bereichen 10e' (Fig. 9) entfernt ist, so dass das Ätzmittel dort die erste Schicht 3m zersetzen kann. Auf diese Weise sind Bereiche 10d' gebildet, die keine erste Schicht 3m mehr aufweisen. Die partiell ausgeformte Schicht 8 kann dabei als opake, schwarz eingefärbte Lackschicht ausgebildet sein und die partiell ausgeformte Funktionsschicht bilden, während die partiell ausgeformte erste Schicht 3m die weitere Schicht bildet.

Wie in Fig. 11 dargestellt, ist nun aus dem Mehrschichtkörper 100f' ein Mehrschichtkörper 100f" gebildet, indem vollflächig eine reflektierende Schicht 3p aus einem Dielektrikum, wie TiO₂ oder ZnS, aufgebracht wird. Eine solche Schicht kann beispielsweise flächig aufgedampft sein, wobei vorgesehen sein kann, diese Schicht aus mehreren übereinander angeordneten Dünnschichten auszubilden, die sich beispielsweise in ihrer Brechzahl unterscheiden können und auf diese Weise im aufscheinenden Licht Interferenzfarbeffekte ausbilden können. Eine Farbeffekte aufweisende Dünnschichtfolge kann beispielsweise aus drei Dünnschichten mit High-Low-High-Index-Verlauf gebildet sein. Der Farbeffekt erscheint im Vergleich mit metallischen reflektierenden Schichten weniger auffällig, was beispielsweise vorteilhaft ist, wenn auf diese Weise Muster auf Pässen oder ID-Cards ausgebildet werden. Die Muster können dem Betrachter beispielsweise als transparentes Grün oder Rot erscheinen.

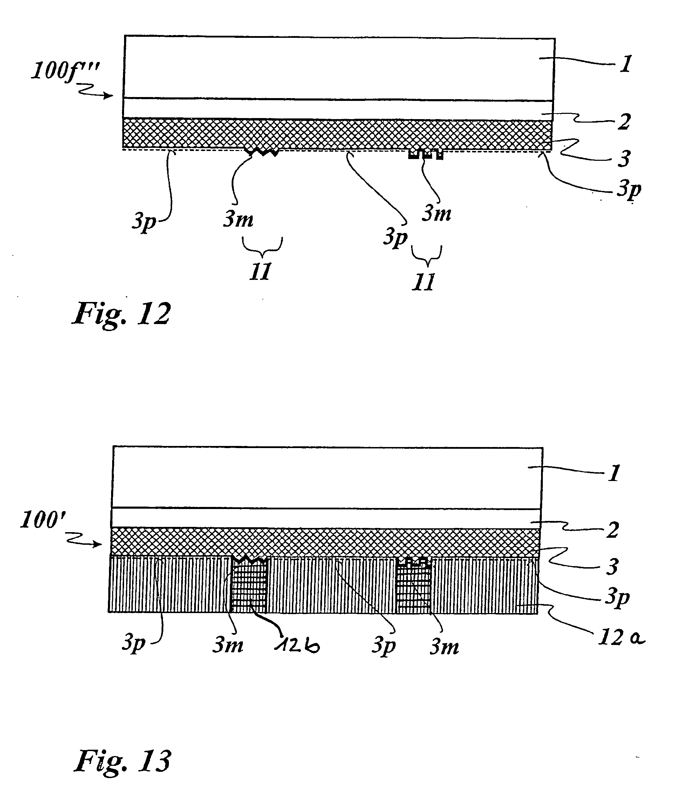

Fig. 12 zeigt nun einen Mehrschichtkörper 100f"', gebildet aus dem Mehrschichtkörper 100f" (Fig. 11) nach der Entfernung der restlichen photoempfindlichen Schicht 8. Es kann sich dabei um einen herkömmlichen "Lift-off"-Prozeß handeln. Auf diese Weise wird zugleich mit der photoempfindlichen Schicht 8 die im vorigen Schritt darauf aufgebrachte dielektrische Schicht 3p wieder entfernt. Nunmehr sind also auf dem Mehrschichtkörper 100f'" benachbarte Bereiche mit der dielektrischen Schicht 3p und der ersten Schicht 3m aus Aluminium gebildet, die sich beispielsweise in ihrer optischen Brechzahl und/oder ihrer elektrischen Leitfähigkeit voneinander unterscheiden.

Es kann nun vorgesehen sein, die erste Schicht 3m galvanisch zu verstärken und auf diese Weise die Bereiche 11 beispielsweise als Bereiche mit besonders guter elektrischer Leitfähigkeit auszubilden. Nachfolgend kann vollflächig ein transparenter, UV-härtbarer Flüssigkristall als quasi negativer Photoresist aufgetragen und durch die Trägerschicht 1 hindurch belichtet werden. Die weniger belichteten bzw. unbelichteten Bereiche der Photoresistschicht befinden sich über der partiell ausgeformten ersten Schicht 3m und werden entfernt. Es resultiert ein hier nicht gesondert gezeigter Mehrschichtkörper, der eine erste partiell ausgeformte Funktionsschicht aus transparentem Photoresist, eine erste weitere partiell ausgeformte Schicht in Form der dielektrischen Schicht 3p und eine zweite partiell ausgeformte weitere Schicht in Form der ersten Schicht 3m aufweist.

Es kann alternativ oder nachfolgend vorgesehen sein, die Bereiche 11 transparent auszubilden und dazu die erste Schicht 3m durch Ätzen zu entfernen. Es kann ein Ätzmittel vorgesehen sein, das die in den übrigen Bereichen aufgebrachte dielektrische Schicht 3p nicht angreift. Es kann aber auch vorgesehen sein, das Ätzmittel nur so lange einwirken zu lassen, bis die erste Schicht 3m vom visuellen Eindruck her nicht mehr erkennbar ist.

Fig. 13 zeigt nun einen Mehrschichtkörper 100', der aus dem Mehrschichtkörper 100f"' (Fig. 12) durch das Hinzufügen der in Fig. 1 dargestellten Photoresistschichten 12a, 12b gebildet ist. Der Mehrschichtkörper 100' ist wie der in Fig. 1 dargestellte Mehrschichtkörper 100 durch Verwendung der gleichen Replizierschicht 3 hergestellt worden. Es ist also mit dem erfindungsgemäßen Verfahren möglich, ausgehend von einem einheitlichen Layout unterschiedlich ausgebildete Mehrschichtkörper zu erzeugen.

Das erfindungsgemäße Verfahren kann ohne Qualitätseinbuße weiter fortgesetzt werden, um weitere Schichten registergenau zu strukturieren. Dazu kann vorgesehen sein, weitere optische Effekte, wie Totalreflexion, Polarisation und spektrale Durchlässigkeit der zuvor aufgebrachten Schichten zur Ausbildung von Bereichen unterschiedlicher optischer Dichte zu nutzen, um registergenaue Belichtungsmasken auszubilden.

Es kann auch vorgesehen sein, unterschiedliche lokale Absorptionsfähigkeit durch übereinander angeordnete Schichten auszubilden und durch lasergestützte thermische Ablation Belichtungs- bzw. Ätzmasken auszubilden.

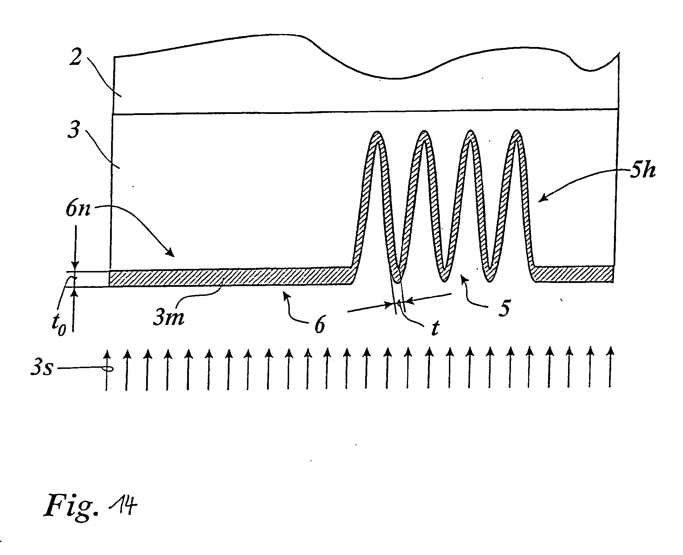

In Figur 14 ist nun der für die Ausbildung der unterschiedlichen Transmission, insbesondere Transparenz, verantwortliche Schichtdickenänderungseffekt für die erste Schicht 3m im einzelnen dargestellt.

Fig. 14 zeigt in einer schematischen Schnittdarstellung einen vergrößerten Ausschnitt aus einem Schichtaufbau gemäß Figur 3. Die Replizierschicht 3 weist im Bereich 5 eine erste Reliefstruktur 5h mit hohem Tiefen-zu-Breiten-Verhältnis > 0,3 und im Bereich 6 keine Reliefstruktur bzw. einen ebenen Bereich auf. Pfeile 3s bezeichnen die Auftragsrichtung der ersten Schicht 3m, die hier durch Sputtern aufgebracht wird. Die erste Schicht 3m ist im ebenen Bereich 6n mit der nominalen Dicke t₀ ausgebildet und im Bereich der ersten Reliefstruktur 5h mit der Dicke t ausgebildet, die kleiner als die nominale Dicke t₀ ist. Dabei ist die Dicke t ais ein Mittelwert zu verstehen, denn die Dicke t bildet sich in Abhängigkeit von dem Neigungswinkel der Oberfläche der ersten Reliefstruktur 5h gegenüber der Waagrechten aus. Dieser Neigungswinkel ist mathematisch durch die erste Ableitung der Funktion der ersten Reliefstruktur 5h beschreibbar.

Wenn also der Neigungswinkel gleich Null ist, wird die erste Schicht 3m mit der nominalen Dicke t₀ abgeschieden, wenn der Betrag des Neigungswinkels größer als Null ist, wird die erste Schicht 3m mit der Dicke t abgeschieden, d.h. mit einer geringeren Dicke als die nominale Dicke t₀.

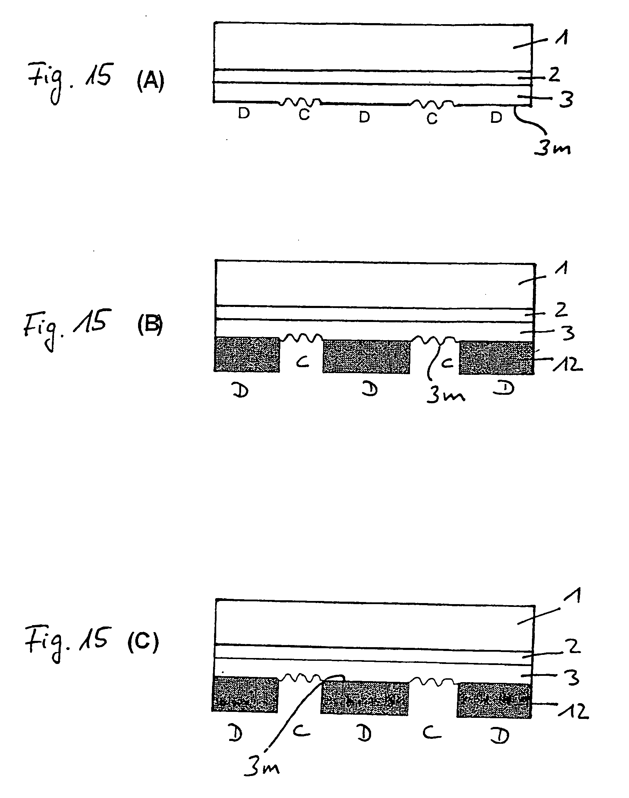

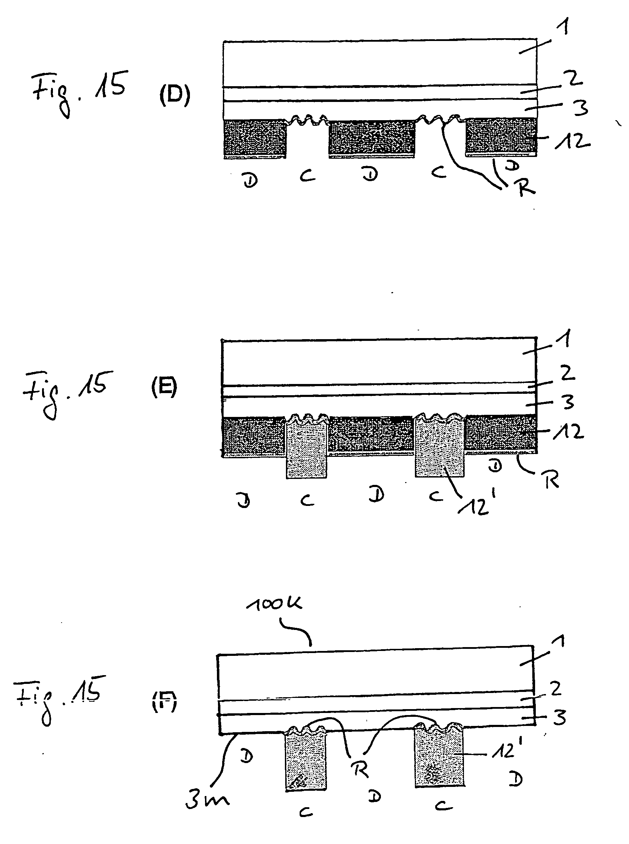

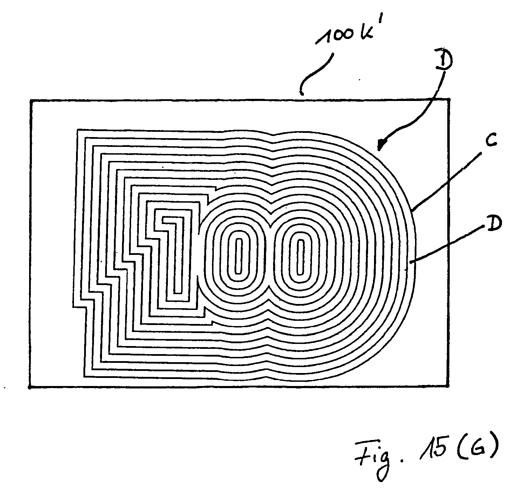

Fig. 15 a zeigt im Querschnitt eine Trägerschicht 1 aus PET, mindestens eine funktionelle Schicht 2 und eine Replizierschicht 3. In den ersten Bereichen C ist eine erste kinematische Reliefstruktur in der Replizierschicht 3 ausgeformt. In den zweiten Bereichen D ist keine Reliefstruktur ausgeformt. Die Replizierschicht 3 wird daraufhin vollflächig mit einer ersten Schicht 3m aus Silber bedampft, wobei unterschiedlich transmissive Bereiche in der ersten Schicht 3m im Register zu den Bereichen C und D ausgebildet werden.

Gemäß Figur 15(B) wird auf den Schichtverbund gemäß Figur 15(A) vollflächig eine positive Photoresistschicht 12 aufgebracht und durch die Trägerschicht 1 hindurch belichtet. Die stärker belichteten oder generell belichteten Bereiche C der Photoresistschicht 12 werden entfernt und die darunter angeordnete erste Schicht 3m im Bereich der Reliefstruktur freigelegt.

Gemäß Figur 15(C) wird nun die erste Schicht 3m in den Bereichen C durch Ätzen entfernt, wobei die strukturierte Photoresistschicht 12 als Ätzmaske dient. Nach dem Ätzen liegt lediglich zwischen der Photoreistschicht 12 und der Replizierschicht die strukturierte erste Schicht 3m vor.

Gemäß Figur 15(D) wird nun eine dielektrische Reflektionsschicht R aus ZnS mit hohem Brechungsindex oder ein Dünnfilm-Reflektionsschichtstapel mit blickwinkelabhängigem Interferenzfarbeffekt vollflächig aufgedampft. Die Photoresistschicht 12 kann gegebenenfalls vorher entfernt werden.

Der Schichtstapel gemäß Figur 15(D) wird nun mit einer rot eingefärbten negativen Photoresistschicht 12' vollflächig bedeckt und durch die Trägerschicht 1 hindurch belichtet. Das Ergebnis nach Entfernung der negativen Photoresistschicht 12' in den nicht belichteten Bereichen D zeigt die Figur 15(E).

Zuletzt werden nun gegebenenfalls nicht mehr benötigte Schichten im ebenen zweiten Bereich D entfernt, indem die strukturierte Photoresistschicht 12 abgelöst und die darauf angeordneten Bereiche der dielektrischen Reflektionsschicht R ebenfalls entfernt werden. Das Ergebnis zeigt Figur 15(F). Es liegt nun ein Mehrschichtkörper 100k vor, der eine Trägerschicht 1, eine funktionale Schicht 2, eine Replizierschicht 3, im ersten Bereich C eine partiell ausgeformte Funktionsschicht in Form der strukturierten roten Photoresistschicht 12' sowie eine weitere partiell ausgeformte Schicht in Form der dielektrischen strukturierten Reflektionsschicht R im Register zur Photoresistschicht 12', neben einer spiegelnden Fläche aus Silber gebildet durch die partiell ausgeformte erste Schicht 3m in den ebenen zweiten Bereichen D.

Figur 15(G) zeigt einen Mehrschichtkörper 100k', welcher gemäß einem Verfahren nach den Figuren 15(A) bis 15(F) gebildet wird, in der Draufsicht. Es wurde ein kinematisches Designelement D, welches beim Kippen einen Pumpeffekt zeigt, aus einer Vielzahl von feinen Linien mit einer Linienbreite von jeweils 20 µm ausgebildet. Die Linien selbst entsprechen den ersten Bereichen C mit Reliefstruktur, während die Bereiche zwischen den Linien den zweiten Bereichen D ohne Reliefstruktur entsprechen. Die Linien zeigen demnach den kinematischen Effekt aufgrund der Reliefstruktur und der dielektrischen Schicht R und sind zudem mit roter Farbe aufgrund der Photoresistschicht 12' hinterlegt. Daneben befinden sich im Bereich D spiegelnde Silberflächen.

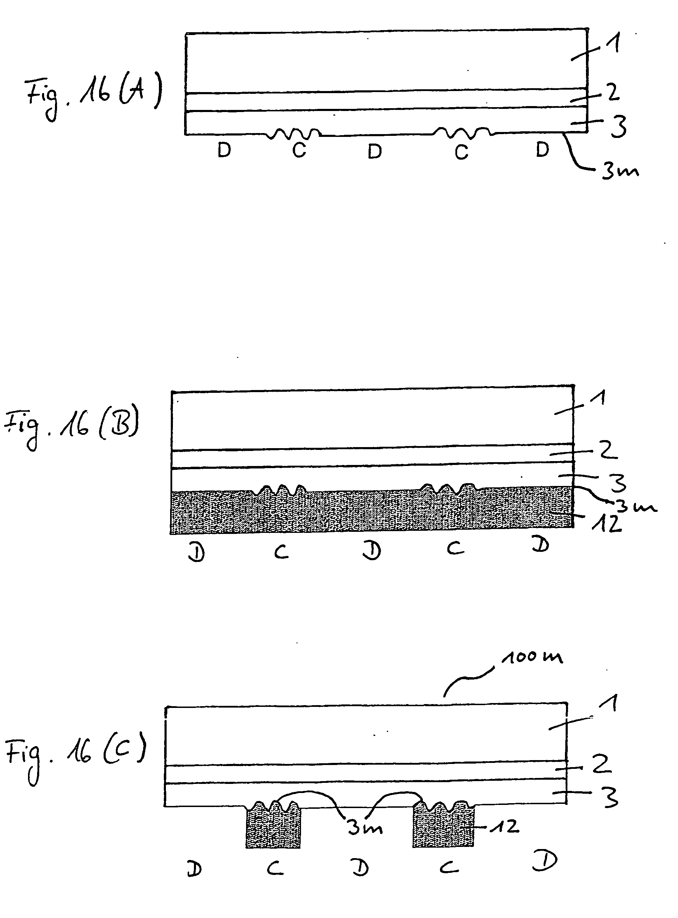

Figuren 16(A) bis (C) zeigen ein weiteres Ausführungsbeispiel für das erste Verfahren in Schnittdarstellung. Figur 16(A) zeigt eine Trägerschicht 1 aus PET, eine funktionale Schicht 2 sowie eine Replizierschicht 3, in welche in den ersten Bereichen C eine Reliefstruktur eingeprägt wurde. In den zweiten Bereichen D liegt keine Reliefstruktur vor, die Replizierschicht 3 ist hier eben ausgebildet. Darauf wird eine erste Schicht 3m aus Gold vollflächig und opak aufgesputtert, wobei sich in den ersten Bereichen C eine höhere Transmission für UV-Strahlung ergibt als in den Bereichen D.

Darauf wird gemäß Figur 16(B) vollflächig eine opak blau eingefärbte negative Photoresistschicht 12 aufgebracht und diese durch die Trägerschicht 1 hindurch belichtet. Die unbelichteten oder weniger belichteten Bereiche der Photoresistschicht 12 werden entfernt, wobei die erste Schicht 3m in den Bereichen D freigelegt wird. Nun kann die erste Schicht 3m in den Bereichen D durch Ätzen von der Replizierschicht 3 entfernt werden.

Das Ergebnis zeigt Figur 16(C). Es liegt ein Mehrschichtkörper 100m vor, der eine Trägerschicht 1, eine funktionale Schicht 2, eine Replizierschicht 3, eine partiell ausgeformte Funktionsschicht in Form einer blauen Photoresistschicht 12 und in perfektem Register dazu eine weitere partiell ausgeformte Schicht in Form der ersten Schicht 3m aus Gold aufweist. Wird der Mehrschichtkörper 100m von Seiten der Trägerschicht 1 aus betrachtet, zeigt sich im ersten Bereich C ein goldenes Linienmuster überlagert mit einer diffraktiven Reliefstruktur, die einen optisch variablen Effekt, insbesondere einen holographischen Effekt erzeugt. Von der anderen Seite gesehen zeigt der Mehrschichtkörper 100m ein völlig anderes Erscheinungsbild. So sieht der Betrachter von Seiten der Photoresistschicht 12 in den Bereichen C lediglich ein filigranes opakes blaues Linienmuster. Das goldene Linienmuster ist perfekt damit bedeckt und somit nicht sichtbar. In den Bereichen D ist der Mehrschichtkörper 100m transparent.

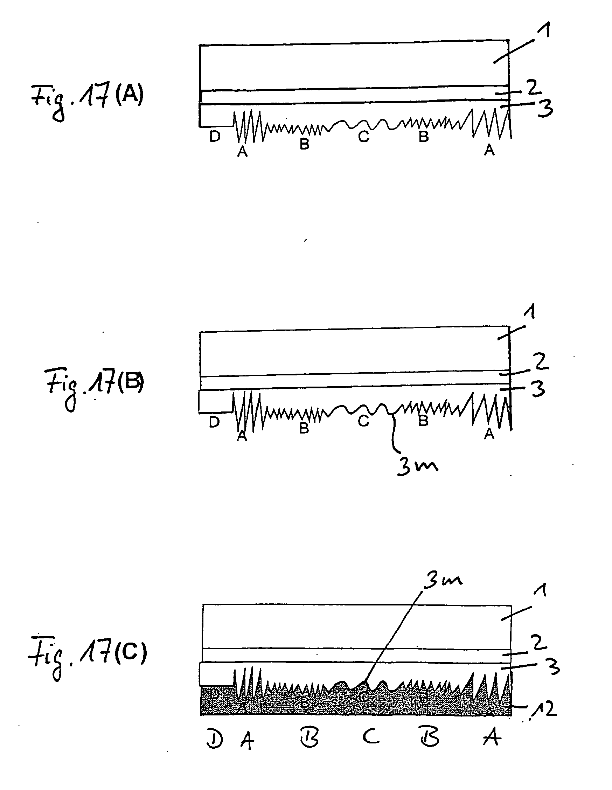

Die Figuren 17(A) bis 17(H) zeigen den Ablauf eines komplexen ersten Verfahren in der Schnittdarstellung auf. Figur 17(A) zeigt eine Trägerschicht 1, eine funktionale Schicht 2 und eine Replizierschicht 3, in welche drei verschiedene Reliefstrukturen eingeprägt wurden. So wurde in den Bereichen A eine erste Reliefstruktur gebildet, in den Bereichen B eine zweite Reliefstruktur gebildet und in den Bereichen C eine dritte kinematische Reliefstruktur gebildet, während im Bereich D keine Reliefstruktur ausgebildet wurde. Die erste und die zweite Reliefstruktur sind hochfrequente Gitterstrukturen mit unterschiedlichen Aspektverhältnissen.

Nachfolgend wurde auf die Replizierschicht 3 gemäß Figur 17(B) eine erste Schicht 3m aus Aluminium vollflächig und opak aufgesputtert, wobei sich in den Bereichen A eine höhere Transmission für UV-Strahlung ergibt als in den Bereichen B, in den Bereichen B eine höhere Transimission für UV-Strahlung ergibt als in den Bereichen C und Bereichen C eine höhere Transmission für UV-Strahlung ergibt als in den Bereichen D.

Darauf wurde gemäß Figur 17(C) eine positive Photoresistschicht 12 vollflächig aufgebracht und durch die erste Schicht 3m hindurch belichtet, wobei die Bereiche A mit der ersten Reliefstruktur am stärksten belichtet werden und danach entfernt werden können.

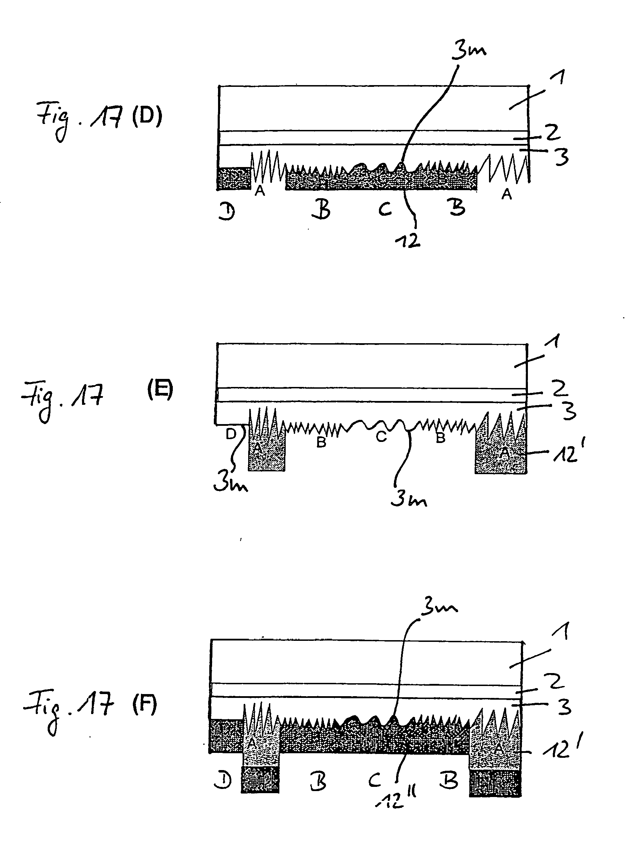

Figur 17(D) zeigt die Photoresistschicht 12 nach deren Strukturierung und nach einer Entfernung der ersten Schicht 3m in den Bereichen A durch Ätzen, wobei der strukturierte Photoresist 12 als Ätzmaske dient. Die erste Schicht 3m befindet sich somit nur noch in den Bereichen B, C und D.

Nun wird der positive Photoresist 12 entfernt, eine blau eingefärbte negative Photoresistschicht 12' vollflächig aufgetragen und durch die Trägerschicht 1 hindurch belichtet. In den weniger belichteten Bereichen B, C und D ist die negative Photoresistschicht 12' nachfolgend entfernbar, während in den Bereichen A eine Aushärtung erfolgt. Figur 17(E) zeigt den Schichtaufbau in diesem Stadium nach Strukturierung der negativen Photoresistschicht 12'.

Gemäß Figur 17(F) wird daraufhin eine weitere positive Photoresistschicht 12" vollflächig ausgebildet und durch die Trägerschicht 1 hindurch belichtet.

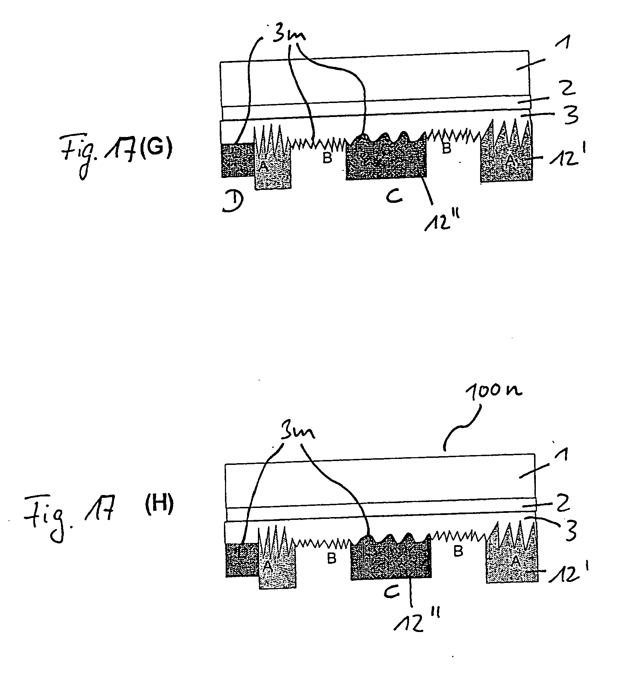

Die weitere positive Photoresistschicht 12" wird daraufhin in den Bereichen B entfernt. Das Ergebnis zeigt Figur 17(G).

Die freigelegte erste Schicht 3m wird nun in den Bereichen B durch Ätzen entfernt. Das Ergebnis zeigt Figur 17(H). Es ergibt sich ein Mehrschichtkörper 100n mit einer Trägerschicht 1, einer funktionellen Schicht 2, einer Replizierschicht 3, einer partiell ausgeformten blauen Funktionsschicht in Form der negativen Photoresistschicht 12', einer weiteren partiell ausgeformten Schicht in Form der ersten Schicht 3m, welche einerseits als Spiegelfläche in den Bereichen D wirkt und andererseits mit dem kinematischen Effekt im Bereich C überlagert ist.

Die weitere positive Photoreistschicht 12" wird gegebenenfalls entfernt und vollflächig eine Kleberschicht aufgebracht. Falls eine gefärbte positive Photoresistschicht 12" eingesetzt wird, kann diese aber auch auf dem Mehrschichtkörper verbleiben.

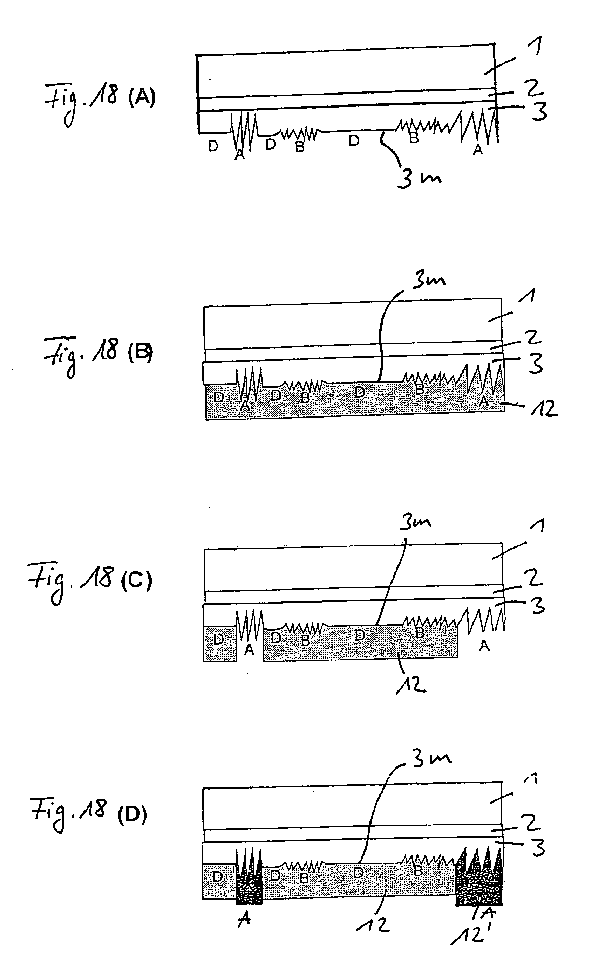

Figuren 18(A) bis 18(H) zeigen im Schnittbild schematisch ein weiteres erstes Verfahren zur Herstellung eines filigranen Druckmusters aus zwei unterschiedlichen Farben in perfektem Register zueinander. Figur 18(A) zeigt eine Trägerschicht 1, eine funktionale Schicht 2 und eine Replizierschicht 3, in welche zwei verschiedene Reliefstrukturen eingeprägt wurden. So wurde in den Bereichen A eine erste Reliefstruktur gebildet, in den Bereichen B eine zweite Reliefstruktur gebildet, während im Bereich D keine Reliefstruktur ausgebildet wurde. Die erste und die zweite Reliefstruktur sind hochfrequente Gitterstrukturen mit unterschiedlichen Aspektverhältnissen. Auf die Replizierschicht 3 ist eine erste Schicht 3m aus Aluminium vollflächig und opak aufgesputtert, wobei sich in den Bereichen A eine höhere Transmission für UV-Strahlung ergibt als in den Bereichen B und in den Bereichen B eine höhere Transmission für üv-Sirahlung ergibt als in den Bereichen D.

Darauf wurde gemäß Figur 18(B) eine positive Photoresistschicht 12 vollflächig aufgebracht und durch die Trägerschicht 1 und die erste Schicht 3m hindurch belichtet, wobei die Bereiche A mit der ersten Reliefstruktur am stärksten belichtet werden und danach gezielt entfernt werden können. Die partiell ausgeformte positive Photoresistschicht 12 wird nun als Ätzmaske verwendet und die freiliegenden Bereiche A der ersten Schicht 3m durch Ätzen entfernt. Das Ergebnis zeigt Figur 18(C).

Nun wird eine blau eingefärbte negative Photoresistschicht 12' vollflächig aufgebracht und durch die Trägerschicht hindurch belichtet, wobei ein Härtung in den Bereichen A erfolgt. In den Bereichen B und D wird die negative Photoresistschicht 12' entfernt. Das Ergebnis ist in Figur 18(D) dargestellt.

Nun wird die positive Photoresistschicht 12 komplett entfernt und die erste Schicht 3m ebenfalls komplett durch Ätzen entfernt.

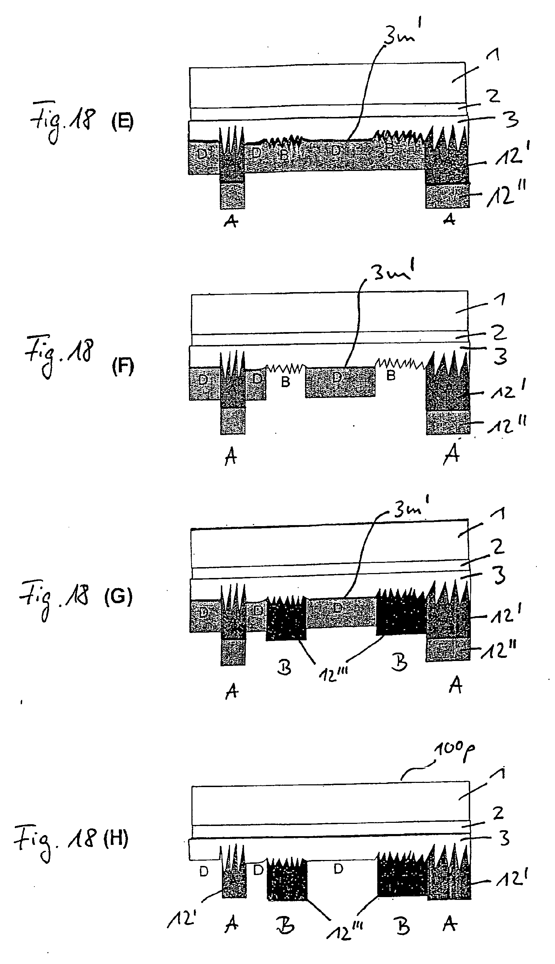

Darauf wird vollflächig eine weitere erste Schicht 3m' aus Aluminium aufgesputtert und vollflächig eine weitere positive Photoresistschicht 12" aufgetragen, Das Ergebnis zeigt Figur 18(E). Es erfolgt eine Belichtung der weiteren positiven Photoresistschicht 12" durch die Trägerschicht 1 hindurch und anschließend eine Entfernung des weiteren positiven Photoresistschicht 12" in den am stärksten belichteten Bereichen B. Nachdem die negative Photoresistschicht 12' die erste Reliefstruktur im Bereich A verfüllt, ist die Transmission durch die weitere erste Schicht 3m' im Bereich A nun gleichwertig mit der im Bereich D und sowohl Bereich A als auch D der positiven Photoresistschicht 12" bleiben erhalten. Die weitere erste Schicht 3m' wird in den Bereichen B freigelegt und durch Ätzen entfernt, siehe Figur 18(F).

Es wird nun eine rot eingefärbte weitere negative Photoresistschicht 12"' vollflächig aufgetragen und durch die Trägerschicht 1 hindurch belichtet, wobei in den Bereichen B eine Härtung erfolgt. In den übrigen Bereichen wird die rot eingefärbte weitere negative Photoresistschicht 12'" entfernt. Das Ergebnis zeigt Figur 18(G).

Schließlich wird die weitere positive Photoresistschicht 12" entfernt und die weitere erste Metallschicht 3m' durch Ätzen komplett abgelöst. Das Ergebnis zeigt Figur 18(H), wo ein Mehrschichtkörper 100p mit einer Trägerschicht 1, einer funktionalen Schicht 2, einer partiell ausgeformten Funktionsschicht in Form der blauen negativen Photoresistschicht 12' und eine weitere partiell ausgeformte Schicht in Form der weiteren roten negativen Photoresistschicht 12"' ausgebildet ist. Die rote und die blaue Schicht 12', 12"' sind in perfektem Register zueinander positioniert.

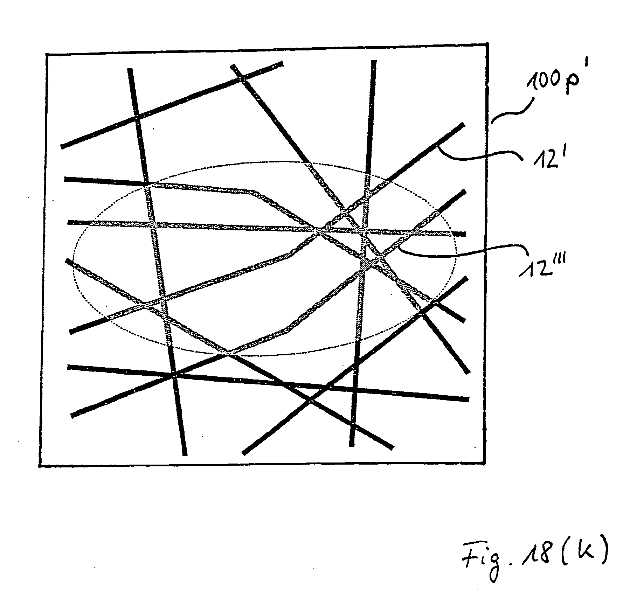

Figur 18(K) zeigt einen gemäß einem Verfahren nach den Figuren 18(A) bis (H) gebildeten Mehrschichtkörper 100p' in der Draufsicht. Es sind blaue Linien, gebildet aus der negativen Photoresistschicht 12' sowie rote Linien, gebildet aus der weiteren Photoresistschicht 12"' erkennbar, die gemeinsam ein farbiges filigranes Sicherheits-Designelement vor einem transparenten Hintergrund bilden. Es ist ein elliptischer Bereich mittels einer Strichpunktlinie angedeutet, der die Ausdehnung der roten Linien zeigt. An all den Stellen, an denen die virtuelle Strichpunktlinie eine farbige Linie des Designelements schneidet, wechselt die Farbe von rot nach blau, wobei die Linie ohne jeglichen Versatz gerade weitergeführt wird. Derartige Designelemente sind äußert schwer nachahmbar. Eine derart registergenaue Anordnung von unterschiedlichen Farben entlang einer Linie ist mit bekannten Verfahren bisher nicht erreicht worden. Nach den erfindungsgemäßen Verfahren hergestellte Designelemente können aber ebenso nebeneinander liegende Farblinien oder ineinander greifende Farblinien aufweisen.

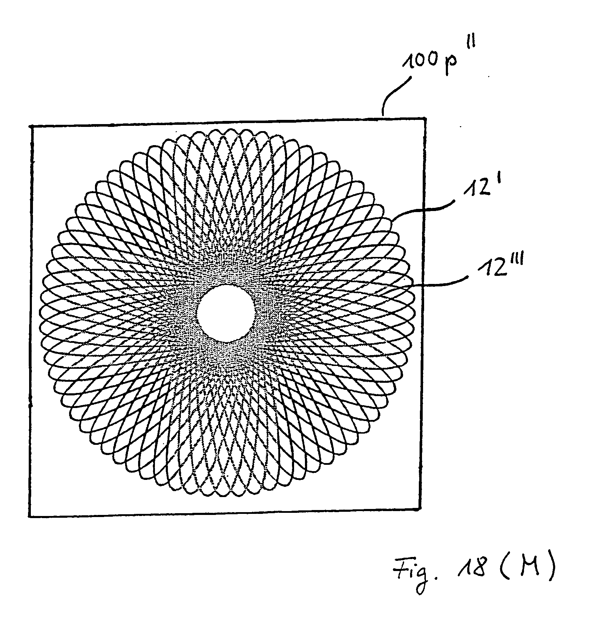

Figur 18(M) zeigt einen weiteren gemäß einem Verfahren nach den Figuren 18(A) bis (H) gebildeten Mehrschichtkörper 100p" in der Draufsicht. Es sind blaue Linien, gebildet aus der negativen Photoresistschicht 12' sowie rote Linien, gebildet aus der weiteren Photoresistschicht 12"' erkennbar, die gemeinsam ein farbiges rundes Sicherheits-Designelement vor einem transparenten Hintergrund bilden. Die Ausdehnung der roten Linien zeigt eine Kreuzform. An all den Stellen des Umfangs des Kreuzes wechselt die Farbe innerhalb des Linienverlaufs unmittelbar von rot nach blau, wobei die Linie ohne jeglichen Versatz weitergeführt wird. Derartige Designelemente sind ebenfalls äußert schwer nachahmbar. Alternativ dazu kann ein derartiges Sicherheits-Designelement auch anstelle der blauen Linien mit einer reflektierenden Metallschicht, anstelle der roten Linien mit einer lumineszierenden Schicht oder Flüssigkristallschicht usw. ausgebildet werden, sowie vieles andere mehr. Gleichzeitig kann von der Vorder- und der Rückseite des Mehrschichtkörpers an einem solchen Sicherheitselement ein unterschiedlicher Farbeindruck erzeugt werden.

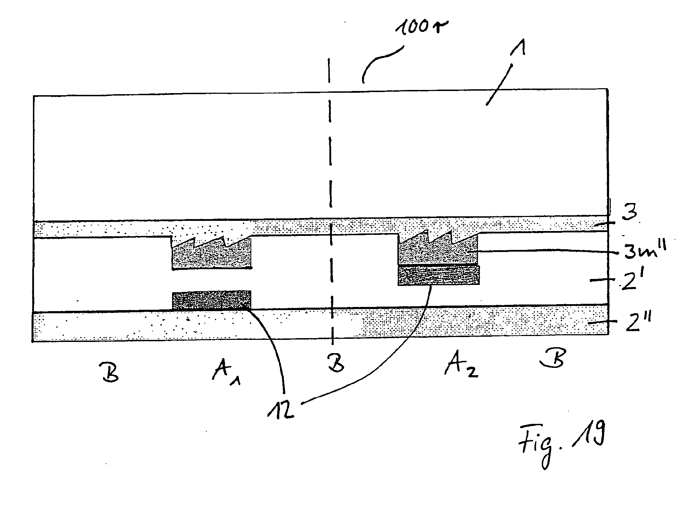

Figur 19 zeigt eine weitere Schnittdarstellung durch einen erfindungsgemäßen Mehrschichtkörper 100r. Es ist eine Trägerschicht 1 und eine Replizierschicht 3 vorhanden, in welche in ersten Bereichen A eine erste Reliefstruktur eingebracht ist. In den zweiten Bereichen B dagegen befindet sich keine Reliefstruktur. In die erste Reliefstruktur wurde eine grüne Druckfarbe eingerakelt, welche eine strukturierte erste Schicht 3m" ausbildet, welche hier in übertriebener Dicke dargestellt ist. Nun kann auf zwei Arten weiter verfahren werden.

Soll ein Aufbau wie im linken Bereich A₁ erzeugt werden, so wird eine transparente Abstandshalterschicht 2' ausgebildet und auf dieser eine rot eingefärbte positive Photoresistschicht 12 vollflächig aufgebracht. Die Photoresistschicht 12 wird durch die Trägerschicht 1 und die erste Schicht 3m", welche als Belichtungsmaske fungiert, hindurch belichtet. Anschließend erfolgt eine Entfernung der Photoresistschicht 12 in den Bereichen B. Es ergibt sich eine partiell ausgeformte Funktionsschicht in Form der grünen Druckfarbe, welche mit einer weiteren partiell ausgeformten Schicht in Form der roten strukturierten Photoresistschicht 12 exakt hinterlegt ist. Aufgrund der Abstandshalterschicht 2' ergeben sich zudem optische Überlagerungseffekte wie blickwinkelabhängige Moiré-Effekte oder lokale Abschattungseffekte.

Soll ein Aufbau wie im rechten Bereich A₂ erzeugt werden, so wird eine rot eingefärbte positive Photoresistschicht 12 vollflächig aufgebracht. Die Photoresistschicht 12 wird durch die Trägerschicht 1 und die erste Schicht 3m", welche als Belichtungsmaske fungiert, hindurch belichtet. Anschließend erfolgt eine Entfernung der Photoresistschicht 12 in den Bereichen B. Es ergibt sich eine partiell ausgeformte Funktionsschicht in Form der grünen Druckfarbe, welche mit einer weiteren partiell ausgeformten Schicht in Form der roten strukturierten Photoresistschicht 12 exakt hinterlegt ist.

Schließlich kann noch eine Kleberschicht 2" vorgesehen sein.

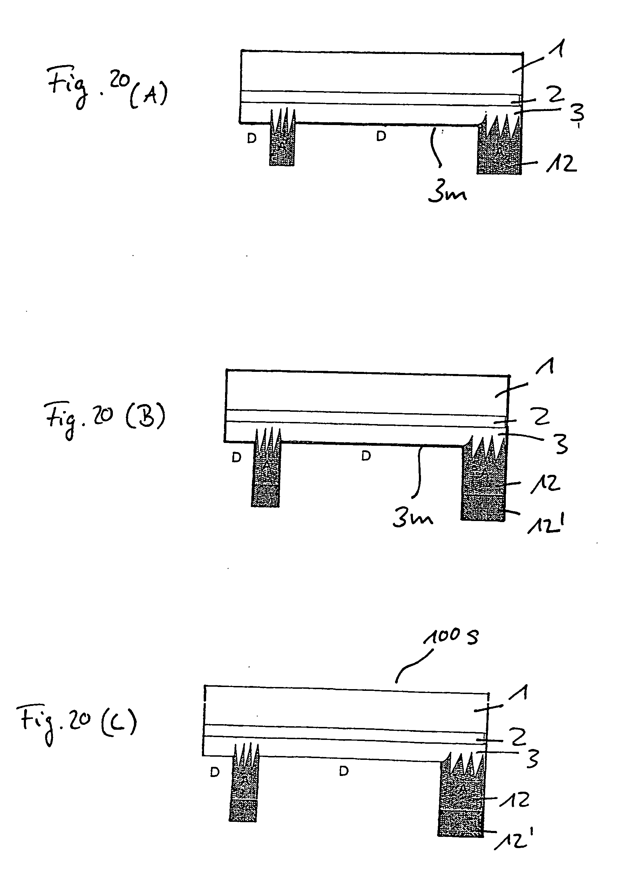

Figuren 20(A) bis (C) zeigen im Schnittbild schematisch ein weiteres erstes Verfahren. Dabei wird gemäß Figur 20(A) eine Trägerschicht 1, eine funktionale Schicht 2 und eine Repiizierschicht 3 vorgesehen, in welche in ersten Bereichen A eine Reliefstruktur eingebracht ist, während zweite Bereiche D eben verbleiben. Darauf wird vollflächig eine erste Schicht 3m aus Aluminium aufgesputtert, welche in den Bereichen A transparent und in den Bereichen D bereits opak ist.

Darauf wird eine gelb eingefärbte transparente negative Photoresistschicht 12 vollflächig aufgebracht und durch die Trägerschicht 1 hindurch belichtet. Nachfolgend werden die unbelichteten Bereiche der Photoresistschicht 12, also in den Bereichen D, entfernt und die erste Schicht 3m dort freigelegt.

Anschließend wird eine weitere opak blau eingefärbte negative Photoresistschicht 12' vollflächig aufgetragen und durch die Trägerschicht 1 hindurch belichtet. Nachfolgend werden die unbelichteten Bereiche der weiteren Photoresistschicht 12', also in den Bereichen D, entfernt und die erste Schicht 3m dort freigelegt. Das Ergebnis zeigt Figur 20(B).

Anschließend wird die erste Schicht 3m in den Bereichen D durch Ätzen entfernt, wobei die beiden Photoresistschichten 12, 12' als Ätzmaske dienen. Das Ergebnis zeigt Figur 20(C). Der Mehrschichtkörper 100s weist eine Trägerschicht 1, eine funktionale Schicht 2, eine Replizierschicht 3, eine gelbe Photoresistschicht 12 als partiell ausgeformte Funktionsschicht und im perfekten Register dazu eine blaue Photoresistschicht 12' als weitere partiell ausgeformte Schicht vor einem transparenten Hintergrund auf. Die transparente erste Schicht 3m, welche in den Bereichen A noch vorhanden ist, ermöglicht bei Betrachtung des Mehrschichtkörpers 100s von Seiten der Trägerschicht 1 eine Erkennung der Reliefstruktur, ohne selbst eine Farbwirkung zu entfalten.

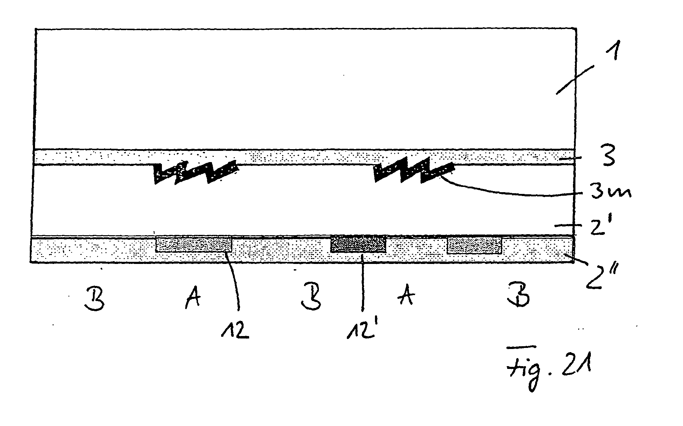

Figur 21 zeigt einen weiteren erfindungsgemäßen Mehrschichtkörper, welcher nach dem ersten Verfahren gebildet wurde, mit einer Trägerschicht 1, einer Replizierschicht 3, einer strukturierten ersten Schicht 3m aus Aluminium, einer transparenten Abstandhalterschicht 2'und zwei unterschiedlich farbigen Photoresistschichten 12, 12'. Dabei erfolgte die Ausrichtung der Photoresistschichten 12, 12' in Abhängigkeit von der ersten Schicht direkt unterhalb der ersten Schicht 3m oder versetzt dazu, wobei durch eine Schrägbelichtung durch die erste Schicht 3m hindurch auch gezielt ein schräger Versatz ausgebildet werden kann, wie für die Photoresistschicht 12' erkennbar. Schließlich ist eine transparente Kleberschicht 2" vorgesehen.

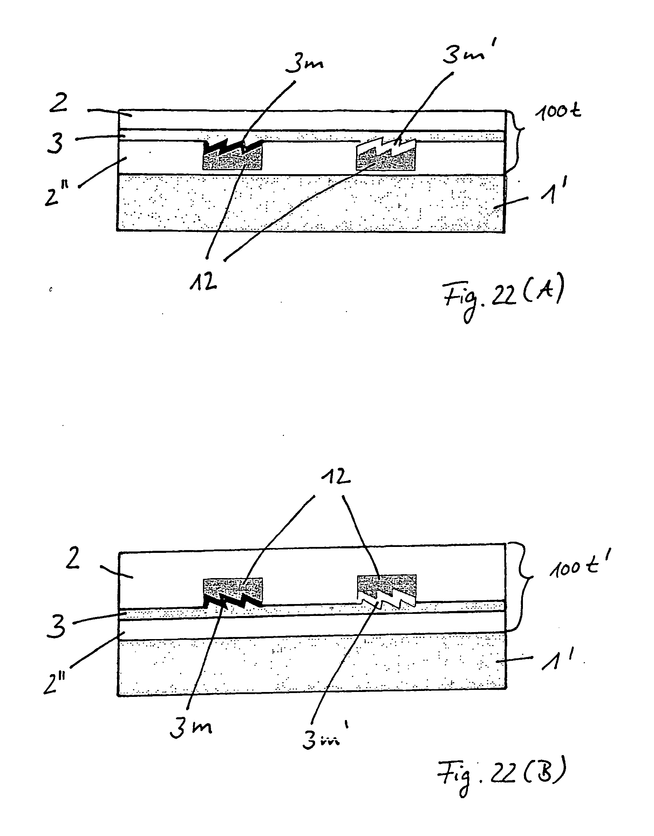

Die Figuren 22(A) bis 23 (B) zeigen Schnittdarstellungen von nach dem ersten Verfahren hergestellten Sicherheitsdokumenten.

Figur 22(A) zeigt eine transparente Ausweiskarte 1', auf welcher ein transparenter Mehrschichtkörper 100t mittels der Kleberschicht 2" aufgeklebt wurde. Es ist eine transparente Schutzlackschicht in Form einer funktionalen Schicht 2, eine Replizierschicht 3 aus transparentem Lack mit einer ersten Reliefstruktur, eine partiell ausgeformte erste Schicht 3m in Form einer opaken Aluminiumschicht, eine weitere partiell ausgeformte Schicht in Form einer transparenten dielektrischen Reflexionsschicht aus ZnS sowie eine partiell ausgeformte Funktionsschicht 12 in Form einer opaken grünen Druckfarbe vorhanden. Die Funktionsschicht 12 ist in perfektem Register zu den weiteren partiell ausgeformten Schichten 3m, 3m' und zu der ersten Reliefstruktur in der Replizierschicht 3 ausgeformt. Dem Betrachter zeigt sich somit durch die funktionale Schicht 2 eine linienförmige holographische Darstellung, welche einerseits mit feinen Aluminiumlinien hinterlegt und andererseits mit einer transparenten ZnS-Schicht und grüner Farbe hinterlegt ist. Von der anderen Seite gesehen zeigt sich dem Betrachter durch die Ausweiskarte 1' hindurch lediglich ein filigranes grünes Druckbild aus feinen Linien.

Figur 22(B) zeigt eine transparente Ausweiskarte 1', auf welcher ein transparenter Mehrschichtkörper 100t' mittels der Kleberschicht 2" aufgeklebt wurde. Es ist eine transparente Schutzlackschicht in Form einer funktionalen Schicht 2, eine Replizierschicht 3 aus transparentem Lack mit einer ersten Reliefstruktur, eine partiell ausgeformte erste Schicht 3m in Form einer opaken Aluminiumschicht, eine weitere partiell ausgeformte Schicht in Form einer transparenten dielektrischen Reflexionsschicht aus ZnS sowie eine partiell ausgeformte Funktionsschicht 12 in Form einer opaken grünen Druckfarbe vorhanden. Die Funktionsschicht 12 ist in perfektem Register zu den weiteren partiell ausgeformten Schichten 3m, 3m' und zu der ersten Reliefstruktur in der Replizierschicht 3 ausgeformt. Dem Betrachter zeigt sich somit durch die funktionale Schicht 2 ein filigranes grünes Druckbild aus feinen Linien. Von der anderen Seite gesehen zeigt sich dem Betrachter durch die Ausweiskarte 1' hindurch eine linienförmige holographische Darstellung, welche einerseits mit feinen Aluminiumlinien hinterlegt und andererseits mit einer transparenten ZnS-Schicht und grüner Farbe hinterlegt ist.

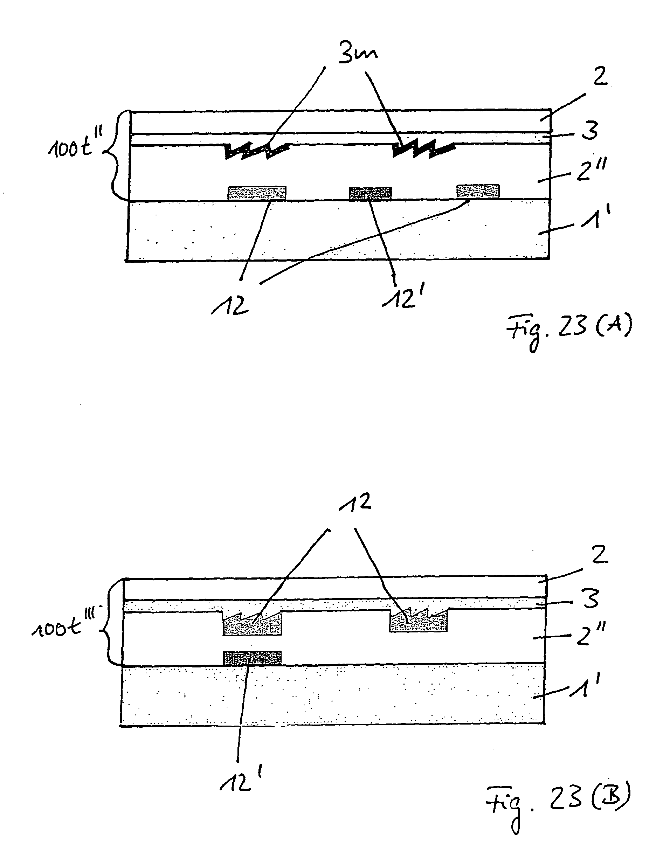

Figur 23(A) zeigt eine transparente Ausweiskarte 1', auf welcher ein transparenter Mehrschichtkörper 100t" mittels einer transparenten Kleberschicht 2" aufgeklebt wurde. Es ist eine transparente Schutzlackschicht in Form einer funktionalen Schicht 2, eine Replizierschicht 3 aus transparentem Lack mit einer ersten Reliefstruktur, eine partiell ausgeformte erste Schicht 3m in Form einer opaken Aluminiumschicht, die Kleberschicht 2", welche hier als Abstandshalterschicht fungiert, eine weitere partiell ausgeformte Schicht in Form einer transparenten roten Photoresistschicht 12 sowie eine partiell ausgeformte Funktionsschicht 12' in Form einer opaken grünen Druckfarbe vorhanden. Die rote Photoresistschicht 12 ist senkrecht zur Ebene der Ausweiskarte 1' gesehen teils deckungsgleich mit der partiell ausgeformten ersten Schicht 3m und teils versetzt dazu angeordnet. Die partiell ausgeformte Funktionsschicht 12' ist versetzt zu der ersten Schicht 3m ausgeformt. Dem Betrachter zeigt sich somit durch die funktionale Schicht 2 hindurch ein filigranes Dekorbild aus feinen grünen, roten und metallischen Linien, wobei die metallischen Linien aufgrund der ersten Reliefstruktur einen holographischen Effekt zeigen. Von der anderen Seite gesehen zeigt sich dem Betrachter durch die Ausweiskarte 1' hindurch ebenfalls ein filigranes Dekorbild aus feinen grünen, roten und metallischen Linien, wobei die metallischen Linien aufgrund der ersten Reliefstruktur einen holographischen Effekt zeigen. Allerdings sind einige der metallischen Linien durch die transparente rote Photoresistschicht 12 überlagert. Wird der Mehrschichtkörper 100t" von einem Fälscher von der Ausweiskarte 1' abgelöst, um personenbezogene Daten auf der Oberfläche der Ausweiskarte 1' zu manipulieren, verbleiben die rote und die grüne Schicht 12, 12' auf der Ausweiskarte 1', während sich die übrigen Schichten 2", 3m, 3, 2 ablösen lassen. Nach einer Manipulation der Daten muss der abgelöste Schichtstapel wieder so auf die Ausweiskarte 1' aufgebracht werden, dass sich das filigrane Dekorbild ergibt. Aufgrund der feinen Linien ist dies aber nahezu aussichtslos und es bleiben Abweichungen von der ursprünglichen Lage erkennbar. Die Ausweiskarte 1' ist durch den Mehrschichtkörper 100t" besonders effektiv vor Fälschungsversuchen geschützt.

Figur 23(B) zeigt eine transparente Ausweiskarte 1', auf welcher ein transparenter Mehrschichtkörper 100t"' mittels einer transparenten Kleberschicht 2" aufgeklebt wurde. Es ist eine transparente Schutzlackschicht in Form einer funktionalen Schicht 2, eine Replizierschicht 3 aus transparentem Lack mit einer ersten Reliefstruktur, eine partiell ausgeformte erste Schicht 3m als Funktionsschicht in Form einer transparenten roten Photoresistschicht 12, die Kleberschicht 2", welche als Abstandshalterschicht fungiert, und eine weitere partiell ausgeformte Schicht in Form einer opaken grünen Photoresistschicht 12' vorhanden. Die rote Photoresistschicht 12 ist senkrecht zur Ebene der Ausweiskarte 1' gesehen deckungsgleich zur ersten Reliefstruktur ausgebildet und bereichsweise deckungsgleich mit der partiell ausgeformten grünen Photoresistschicht 12' angeordnet. Dem Betrachter zeigt sich somit durch die funktionale Schicht 2 hindurch ein filigranes Dekorbild aus feinen transparenten roten und opaken schwarzen Linien. Von der anderen Seite gesehen zeigt sich dem Betrachter durch die Ausweiskarte 1' hindurch ein filigranes Dekorbild aus feinen opaken grünen und transparenten roten Linien. Wird der Mehrschichtkörper 100t"' von einem Fälscher von der Ausweiskarte 1' abgelöst, um personenbezogene Daten auf der Oberfläche der Ausweiskarte 1' zu manipulieren, verbleibt die grüne Schicht 12' auf der Ausweiskarte 1', während sich die übrigen Schichten 2", 12, 3, 2 ablösen lassen. Nach einer Manipulation der Daten muss der abgelöste Schichtstapel wieder so auf die Ausweiskarte 1' aufgebracht werden, dass sich das filigrane Dekorbild ergibt. Aufgrund der feinen Linien ist dies aber nahezu aussichtslos und es bleiben Abweichungen von der ursprünglichen Lage erkennbar. Die Ausweiskarte 1' ist durch den Mehrschichtkörper 100t"' ebenfalls besonders effektiv vor Fälschungsversuchen geschützt.

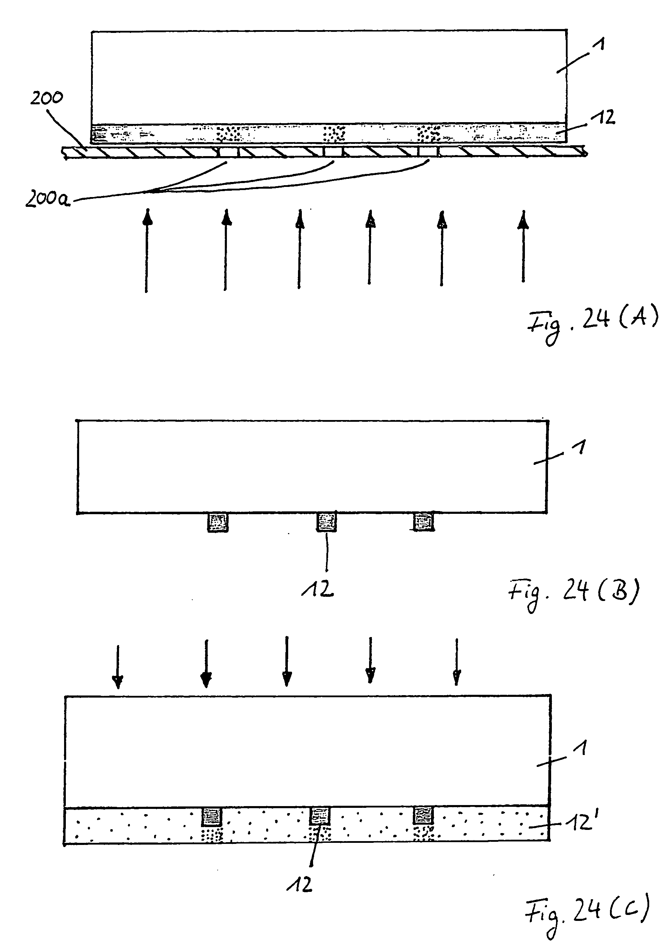

Die Figuren 24(A) bis (E) zeigen im Schnittbild schematisch ein zweites Verfahren zur Herstellung eines filigranen Druckmusters aus zwei unterschiedlichen Farben in perfektem Register zueinander.

Figur 24(A) zeigt eine transparente Trägerschicht 1 aus PET, auf dessen einer Seite eine rot eingefärbte negative Photoresistschicht 12 vollflächig aufgebracht wurde. Die negative Photoresistschicht 12 wird anschließend über eine Maske 200, welche strahlungsdurchlässige Öffnungen 200a aufweist, musterförmig belichtet (die Pfeile zeigen die Bestrahlungsrichtung). Nach Entfernen der Maske werden die nicht belichteten Bereiche der Photoresistschicht 12 entfernt, während die belichteten Bereiche auf der Trägerschicht 1 verbleiben und ein rotes Linienmuster bilden. Das Ergebnis zeigt Figur 24(B).

Nun wird entweder eine transparente Lackschicht als Abstandshalterschicht und anschließend eine grün eingefärbte positive Photoresistschicht 12' oder aber gemäß Figur 24(C) unmittelbar eine grün eingefärbte positive Photoresistschicht 12' aufgebracht. Es erfolgt eine Belichtung der positiven Photoresistschicht 12' durch die Trägerschicht 1 und die als Maskenschicht fungierende partiell ausgeformte rote Photoresistschicht 12 hindurch (die Pfeile zeigen die Bestrahlungsrichtung).

Nun werden die belichteten Bereiche der grünen Photoresistschicht 12' entfernt, während die nicht belichteten Bereiche auf der partiell ausgeformten roten Photoresistschicht 12 verbleiben. Schließlich wird eine Kleberschicht vollflächig aufgetragen.

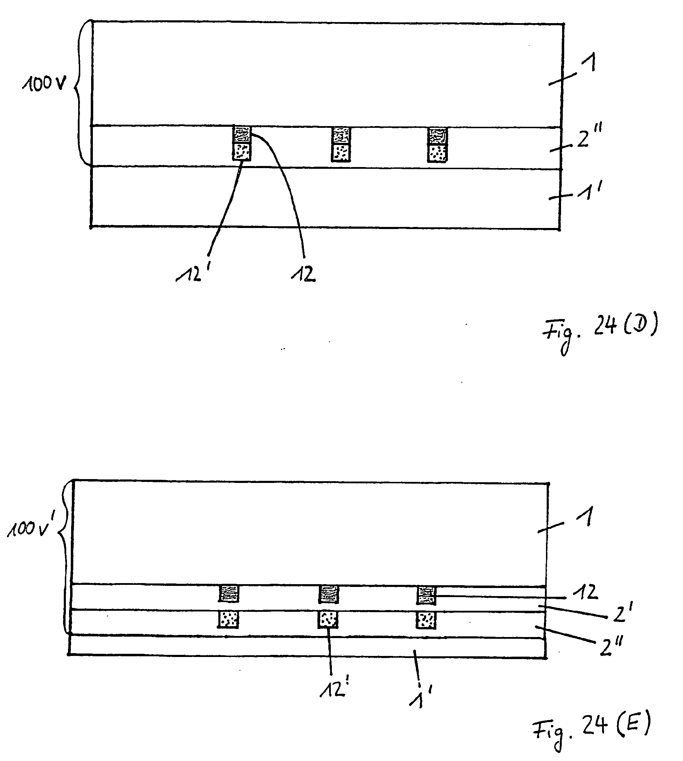

Figur 24(D) zeigt ein mit dem derart gebildeten 'Mehrschichtkörper gebildetes Sicherheitsdokument, bei welchem der gebildete Mehrschichtkörper 100v auf eine transparente Ausweiskarte 1' aufgeklebt gezeigt ist. Der Mehrschichtkörper 100v umfasst die transparente Trägerschicht 1, die als partiell ausgeformte Funktionsschicht fungierende rote Photoresistschicht 12, in perfektem Register dazu die als weitere partiell ausgeformte Schicht vorliegende grüne Photoresistschicht 12' und eine transparente Kleberschicht 2". Das Sicherheitsdokument zeigt einem Betrachter von der Trägerschicht 1 aus gesehen ein filigranes rotes Linienmuster und von der Ausweiskarte 1' aus gesehen ein filigranes grünes Linienmuster.

Figur 24(E) zeigt ein Sicherheitsdokument, welches mit dem inklusive Abstandshalterschicht gebildeten Mehrschichtkörper gebildet ist und bei welchem der gebildete Mehrschichtkörper 100v' auf eine transparente Ausweiskarte 1' aufgeklebt gezeigt ist. Der Mehrschichtkörper 100v' umfasst die transparente Trägerschicht 1, die als partiell ausgeformte Funktionsschicht fungierende rote Photoresistschicht 12, die transparente Abstandshalterschicht 2' und in perfektem Register zur roten Photoresistschicht 12 die als weitere partiell ausgeformte Schicht vorliegende grüne Photoresistschicht 12' sowie eine transparente Kleberschicht 2". Das Sicherheitsdokument zeigt einem Betrachter von der Trägerschicht 1 aus gesehen ein filigranes rotes Linienmuster und von der Ausweiskarte 1' aus gesehen ein filigranes grünes Linienmuster, wobei sich je nach Dicke der Abstandshalterschicht 2' beim Verkippen des Sicherheitsdokuments die jeweils andere Farbe und/oder optische Überlagerungseffekte zeigen.

## Patentansprüche

1. Verfahren zur Herstellung eines Mehrschichtkörpers (100v) mit mindestens einer partiell ausgeformten Funktionsschicht im Register zu mindestens einer weiteren partiell ausgeformten Schicht, wobei auf einer Trägerschicht (1) eine erste Schicht in Form einer ersten Photoresist-Lackschicht (12) gebildet und partiell belichtet wird, dass die belichtete erste Schicht entwickelt und strukturiert wird, und dass nachfolgend unter Verwendung der strukturierten ersten Schicht als einer Maskenschicht, die mindestens eine partiell ausgeformte Funktionsschicht und/oder die mindestens eine weitere partiell ausgeformte Schicht gebildet wird,
**dadurch gekennzeichnet,**
**dass** die mindestens eine partiell ausgeformte Funktionsschicht oder die mindestens eine weitere partiell ausgeformte Schicht gebildet wird, indem eine mit Farbmittel versetzte zweite positive oder negative Photoresist-Lackschicht (12') aufgebracht wird, dass die zweite Photoresist-Lackschicht (12') durch die strukturierte erste Schicht hindurch belichtet wird, und dass eine Strukturierung der belichteten zweiten Photoresist-Lackschicht (12') erfolgt.

2. Verfahren nach Anspruch 1,
**dadurch gekennzeichnet,**
**dass** die erste oder die zweite Photoresist-Lackschicht (12, 12') die mindestens eine partiell ausgeformte Funktionsschicht ausbildet.

3. Verfahren nach einem der Ansprüche 1 oder 2,
**dadurch gekennzeichnet,**
**dass** nachfolgend die Trägerschicht (1) partiell durch Eindiffundieren eines Farbmittels als partiell ausgeformte Funktionsschicht oder weitere Schicht ausgebildet wird, wobei mindestens die erste und/oder zweite strukturierte Photoresist-Lackschicht (12, 12') als Diffusionssperre fungiert.

4. Verfahren nach einem der Ansprüche 1 bis 3,
**dadurch gekennzeichnet,**
**dass** in freiliegende Bereiche der Trägerschicht (1), welche senkrecht zur Ebene der Trägerschicht (1) gesehen von einer partiell ausgeformten Funktionsschicht oder weiteren partiell ausgeformten Schicht umgeben sind, ein Material eingerakelt wird und mindestens eine weitere partiell ausgeformte Funktionsschicht oder weitere partiell ausgeformte Schicht gebildet wird.

5. Verfahren nach einem der Ansprüche 1 bis 4,
**dadurch gekennzeichnet,**
**dass** die mindestens eine weitere partiell ausgeformte Schicht durch die erste Schicht (3m) und/oder mindestens eine farbige positive oder negative Photoresist-Lackschicht (12, 12', 12", 12"') und/oder durch mindestens eine optisch variable Schicht mit blickwinkelabhängig unterschiedlichem optischem Effekt und/oder durch mindestens eine metallische Reflektionsschicht und/oder durch mindestens eine dielektrische Reflektionsschicht (3m') gebildet wird.

6. Verfahren nach einem der Ansprüche 1 bis 5,
**dadurch gekennzeichnet,**
**dass** die strukturierte erste Schicht (3m) zumindest teilweise entfernt und durch die mindestens eine partiell ausgeformte Funktionsschicht und/oder die mindestens eine weitere partiell ausgeformte Schicht ersetzt wird.

7. Verfahren nach einem der Ansprüche 1 bis 6,
**dadurch gekennzeichnet,**
**dass** die mindestens eine partiell ausgeformte Funktionsschicht senkrecht zur Ebene der Trägerschicht (1) gesehen alternierend oder mit einem gleichmäßigen Abstand zur mindestens einen weiteren partiell ausgeformten Schicht angeordnet wird.

8. Verfahren nach einem der Ansprüche 1 bis 7,
**dadurch gekennzeichnet,**
**dass** mindestens eine erste transparente Abstandshalterschicht (2') zwischen der mindestens einen partiell ausgeformten Funktionsschicht und der mindestens einen weiteren partiell ausgeformten Schicht angeordnet wird, dass mindestens eine zweite transparente Abstandshalterschicht zwischen mindestens zwei weiteren partiell ausgeformten Schichten angeordnet wird, und dass die erste und/oder die zweite Abstandshalterschicht lokal in mindestens zwei unterschiedlichen Schichtdicken ausgebildet wird.

9. Mehrschichtkörper, erhältlich nach Anspruch 1 oder Anspruch 1 in Verbindung mit einem der darauf rückbezogenen Ansprüche 2-8, mit mindestens einer partiell ausgeformten Funktionsschicht im Register zu mindestens einer weiteren partiell ausgeformten Schicht, wobei auf einer Trägerschicht (1) eine erste Schicht in Form einer ersten Photoresist-Lackschicht (12) musterförmig strukturiert ausgebildet ist, und dass unter Verwendung der strukturierten ersten Schicht als einer Maskenschicht, die mindestens eine partiell ausgeformte Funktionsschicht und/oder die mindestens eine weitere partiell ausgeformte Schicht ausgebildet ist,
**dadurch gekennzeichnet,**
**dass** die mindestens eine partiell ausgeformte Funktionsschicht und/oder die mindestens eine weitere partiell ausgeformte Schicht eine mit Farbmittel versetzte zweite positive oder negative Photoresist-Lackschicht (12') ist.

10. Mehrschichtkörper nach Anspruch 9,
**dadurch gekennzeichnet,**
**dass** sich die mindestens eine partiell ausgeformte Funktionsschicht und die mindestens eine weitere partiell ausgeformte Schicht gegenseitig zu einer dekorativen und/oder informativen geometrischen, alphanumerischen, bildlichen, graphischen oder figürlichen farbigen Darstellung ergänzen.

11. Mehrschichtkörper nach einem der Ansprüche 9 oder 10,
**dadurch gekennzeichnet,**
**dass** zumindest die mindestens eine partiell ausgeformte Funktionsschicht und/oder zumindest die mindestens eine weitere partiell ausgeformte Schicht als mindestens eine Linie mit einer Linienbreite im Bereich < 50 µm, insbesondere im Bereich von 0,5 bis 10 µm ausgebildet ist, und/oder als mindestens ein Pixel mit einem Pixeldurchmesser im Bereich von < 50 µm, insbesondere im Bereich von 0,5 bis 10 µm ausgebildet ist.

12. Mehrschichtkörper nach einem der Ansprüche 9 bis 11,
**dadurch gekennzeichnet,**
**dass** die mindestens eine partiell ausgeformte Funktionsschicht eine Schicht enthaltend Flüssigkristalle ist oder durch einen Dünnfilm-Reflektionsschichtstapel mit blickwinkelabhängigem Interferenzfarbeffekt gebildet ist und die mindestens eine weitere partiell ausgeformte Schicht die zweite Photoresist-Lackschicht ist, oder umgekehrt.

13. Mehrschichtkörper nach einem der Ansprüche 9 bis 11,
**dadurch gekennzeichnet,**
**dass** die mindestens eine partiell ausgeformte Funktionsschicht die erste Photoresist-Lackschicht ist und die mindestens eine weitere partiell ausgeformte Schicht die mit Farbmittel versetzte zweite Photoresist-Lackschicht ist, wobei die erste und die zweite Photoresist-Lackschicht unterschiedlich eingefärbt sind.

14. Mehrschichtkörper nach einem der Ansprüche 9 bis 13;
**dadurch gekennzeichnet,**
**dass** die mindestens eine partiell ausgeformte Funktionsschicht und die mindestens eine weitere partiell ausgeformte Schicht jeweils derart linienförmig ausgebildet sind, dass die Linien ohne seitlichen Versatz ineinander übergehen.

15. Mehrschichtkörper nach einem der Ansprüche 9 bis 14,
**dadurch gekennzeichnet,**
**dass** eine erste transparente Abstandshalterschicht (2') zwischen der mindestens einen partiell ausgeformten Funktionsschicht und der mindestens einen weiteren partiell ausgeformten Schicht ausgebildet ist, dass eine zweite transparente Abstandshalterschicht zwischen mindestens zwei weiteren partiell ausgeformten Schichten ausgebildet ist, und dass die mindestens eine partiell ausgeformte Funktionsschicht und die mindestens eine weitere partiell ausgeformte Schicht derart ausgebildet sind, das sich mindestens ein, gegebenenfalls blickwinkelabhängiger, optischer Überlagerungseffekt zeigt.

## Claims

1. Method for the production of a multilayer body (100v) having at least one partially formed functional layer in register with at least one further partially formed layer, wherein a first layer is formed and partially exposed on a carrier layer (1) in the form of a first photoresistant lacquer layer (12), the exposed first layer is developed and structured and then, by using the structured first layer as a masking layer, the at least one partially formed functional layer and/or the at least one further partially formed layer is formed,
**characterised in that**,
the at least one partially formed functional layer or the at least one further partially formed layer is formed, while a second positive or negative photoresistant lacquer layer (12') with colourant added is applied, that the second photoresistant lacquer layer (12') is exposed through the structured first layer, and that a structuring of the exposed second photoresistant lacquer layer (12') takes place.

2. Method according to claim 1,
**characterised in that**,
the first or second photoresistant lacquer layer (12, 12') forms the at least one partially formed functional layer.

3. Method according to one of claims 1 or 2,
**characterised in that**,
then, the carrier layer (1) is formed as a partially formed functional layer or further layer partially by diffusing a colourant, wherein at least the first and/or second structured photoresistant lacquer layer (12, 12') functions as a diffusion barrier.

4. Method according to one of claims 1 to 3,
**characterised in that**,
in free regions of the carrier layer (1), which, as seen from perpendicular to the plane of the carrier layer (1), is surrounded by a partially formed functional layer or further partially formed layer, a material is scraped in and at least one further partially formed functional layer or further partially formed layer is formed.

5. Method according to one of claims 1 to 4,
**characterised in that**,
the at least one further partially formed layer is formed by the first layer (3m) and/or at least one coloured positive or negative photoresistant lacquer layer (12, 12', 12", 12"') and/or by at least one optically variable layer with an angle-dependently different optical effect and/or by at least one metallic reflective layer and/or by at least one dielectric reflective layer (3m').

6. Method according to one of claims 1 to 5,
**characterised in that**,
the structured first layer (3m) is at least partially removed and replaced by the at least one partially formed functional layer and/or the at least one further partially formed layer.

7. Method according to one of claims 1 to 6,
**characterised in that**,
the at least one partially formed functional layer is arranged, as seen from perpendicular to the plane of the carrier layer (1), alternating or with an equal gap to the at least one further partially formed layer.

8. Method according to one of claims 1 to 7,
**characterised in that**,
at least one first transparent spacer layer (2') is arranged between the at least one partially formed functional layer and the at least one further partially formed layer, that at least one second transparent spacer layer is arranged between at least two further partially formed layers, and that the first and/or the second spacer layer is formed locally in at least two different layer thicknesses.

9. Multilayer body, obtainable according to claim 1 or claim 1 in conjunction with one of the relevant claims 2 to 8, having at least one partially formed functional layer in register with at least one further partially formed layer, wherein a first layer is formed on a carrier layer (1) with a patterned structure in the form of a first photoresistant lacquer layer (12), and that, by using the structured first layer as a mask layer, the at least one partially formed functional layer and/or the at least one further partially formed layer is formed,
**characterised in that**,
the at least one partially formed functional layer and/or the at least one further partially formed layer is a second positive or negative photoresistant lacquer layer (12') with colourant added.

10. Multilayer body according to claim 9,
**characterised in that**,
the at least one partially formed functional layer and the at least one further partially formed layer complement one another to form a decorative and/or informative geometric, alphanumeric, visual, graphic or figurative coloured design.

11. Multilayer body according to one of claims 9 or 10,
**characterised in that**,
at least the at least one partially formed functional layer and/or at least the at least one further partially formed layer is designed as at least one line with a line width in the region of <50µm, in particular in the region of 0.5 to 10µm, and/or is designed as at least one pixel with a pixel diameter in the region of <50µm, in particular in the region of 0.5 to 10µm.

12. Multilayer body according to one of claims 9 to 11,
**characterised in that**,
the at least one partially formed functional layer is a layer containing liquid crystals or is formed by a thin-film reflective layer stack with angle-dependent interference colour effect, and the at least one further partially formed layer is the second photoresistant lacquer layer, or vice versa.

13. Multilayer body according to one of claims 9 to 11,
**characterised in that**,
the at least one partially formed functional layer is the first photoresistant lacquer layer and the at least one further partially formed layer is the second photoresistant lacquer layer with colourant added, wherein the first and the second photoresistant lacquer layers are coloured differently.

14. Multilayer body according to one of claims 9 to 13,
**characterised in that**,
the at least one partially formed functional layer and the at least one further partially formed layer are each designed in a line in such a way that the lines cross over without lateral displacement into one another.

15. Multilayer body according to one of claims 9 to 14,
**characterised in that**,
a first transparent spacer layer (2') is formed between the at least one partially formed functional layer and the at least one further partially formed layer, that a second transparent spacer layer is formed between at least two further partially formed layers, and that the at least one partially formed functional layer and the at least one further partially formed layer are formed in such a way that at least one optical carry-over effect occurs, which is, if necessary, angle-dependent.

## Revendications

1. Procédé servant à fabriquer un corps multicouche (100v) avec au moins une couche fonctionnelle partiellement formée dans le registre, par rapport à une autre couche partiellement formée, sachant qu'une première couche se présentant sous la forme d'une première couche de peinture de résine photosensible (12) est formée sur une couche de support (1) et est partiellement éclairée, que la première couche éclairée est développée et structurée, et qu'immédiatement après la couche fonctionnelle partiellement formée au moins au nombre de une et/ou l'autre couche partiellement formée, sont formées en utilisant la première couche structurée comme une couche de masque,
**caractérisé en ce que**
la couche fonctionnelle partiellement formée au moins au nombre de une ou l'autre couche partiellement formée au moins au nombre de une sont formées **en ce qu'**on applique une deuxième couche de peinture de résine photosensible (12') positive ou négative mélangée avec un colorant, **en ce que** la deuxième couche de peinture de résine photosensible (12') est éclairée à travers la première couche structurée, et **en ce qu'**une structuration de la deuxième couche de peinture de résine photosensible (12') éclairée est effectuée.

2. Procédé selon la revendication 1,
**caractérisé en ce que**
la première ou la deuxième couche de peinture de résine photosensible (12, 12') constituent la couche fonctionnelle partiellement formée au moins au nombre de une.

3. Procédé selon l'une quelconque des revendications 1 ou 2,
**caractérisé en ce que**
la couche de support (1) est immédiatement après réalisée partiellement en diffusant un colorant sous la forme d'une couche fonctionnelle partiellement formée ou sous la forme d'une autre couche partiellement formée, sachant qu'au moins la première et/ou la deuxième couche de peinture de résine photosensible (12, 12') font office de barrière de diffusion.

4. Procédé selon l'une quelconque des revendications 1 à 3,
**caractérisé en ce que**
un matériau est introduit par raclage dans des zones dégagées de la couche de support (1), lesquelles sont, vu de manière perpendiculaire par rapport au plan de la couche de support (1), entourées par une couche fonctionnelle partiellement formée ou par une autre couche partiellement formée, et **en ce qu'**au moins une autre couche fonctionnelle partiellement formée ou une autre couche partiellement formée sont formées.

5. Procédé selon l'une quelconque des revendications 1 à 4,
**caractérisé en ce que**
l'autre couche partiellement formée au moins au nombre de une est formée par la première couche (3m) et/ou au moins par une couche de peinture de résine photosensible (12, 12', 12", 12"') colorée positive ou négative et/ou par au moins une couche à variation optique présentant un effet optique différent selon l'angle de vue et/ou par au moins une couche réfléchissante métallique et/ou par au moins une couche réfléchissante (3m') diélectrique.

6. Procédé selon l'une quelconque des revendications 1 à 5,
**caractérisé en ce que**
la première couche (3m) structurée est supprimée au moins en partie et est remplacée par la couche fonctionnelle partiellement formée au moins au nombre de une et/ou par l'autre couche partiellement formée au moins au nombre de une.

7. Procédé selon l'une quelconque des revendications 1 à 6,
**caractérisé en ce que**
la couche fonctionnelle partiellement formée au moins au nombre de une est, vu de manière perpendiculaire par rapport au plan de la couche de support (1), disposée de manière à alterner ou à une distance homogène par rapport à au moins une autre couche partiellement formée.

8. Procédé selon l'une quelconque des revendications 1 à 7,
**caractérisé en ce que**
au moins une première couche d'espacement (2') transparente est disposée entre la couche fonctionnelle partiellement formée au moins au nombre de une et l'autre couche partiellement formée au moins au nombre de une, **en ce qu'**au moins une deuxième couche d'espacement transparente est disposée entre au moins deux autres couches partiellement formées, et **en ce que** la première et/ou la deuxième couche d'espacement sont réalisées localement avec au moins deux épaisseurs de couche différentes.

9. Corps multicouche, obtenu selon la revendication 1 ou selon la revendication 1, en lien avec l'une quelconque des revendications associées 2 à 8, comprenant au moins une couche fonctionnelle partiellement formée dans le registre par rapport au moins à une autre couche partiellement formée, sachant qu'une première couche se présentant sous la forme d'une première couche de peinture de résine photosensible (12) est structurée sur une couche de support (1) de manière à présenter une forme de motif, et en ce que la couche fonctionnelle partiellement formée au moins au nombre de une et/ou l'autre couche partiellement formée au moins au nombre de une sont réalisées en utilisant la première couche structurée en tant qu'une couche de masque,
**caractérisé en ce que**
la couche fonctionnelle partiellement formée au moins au nombre de une et/ou l'autre couche partiellement formée au moins au nombre de une est une deuxième couche de peinture de résine photosensible (12') positive ou négative mélangée à un colorant.

10. Corps multicouche selon la revendication 9, **caractérisé en ce que**
la couche fonctionnelle partiellement formée au moins au nombre de une et l'autre couche partiellement formée au moins au nombre de une se complètent mutuellement pour former une représentation décorative et/ou géométrique informative, alphanumérique, imagée, graphique ou colorée figurative.

11. Corps multicouche selon l'une quelconque des revendications 9 ou 10,
**caractérisé en ce que**
au moins la couche fonctionnelle partiellement formée au moins au nombre de une et/ou au moins l'autre couche partiellement formée au moins au nombre de une sont réalisées sous la forme au moins d'une ligne présentant une largeur de ligne comprise dans la plage < 50 µm, en particulier comprise dans la plage allant de 0,5 à 10 µm, et/ou sont réalisées sous la forme au moins d'un pixel présentant un diamètre de pixel compris dans la plage < 50 µm, en particulier compris dans la plage allant de 0,5 à 10 µm.

12. Corps multicouche selon l'une quelconque des revendications 9 à 11,
**caractérisé en ce que**
la couche fonctionnelle partiellement formée au moins au nombre de une est une couche contenant un cristal liquide ou est formée par un empilement de couches réfléchissantes à couches minces présentant un effet de couleurs par interférence dépendant de l'angle de vue, et **en ce que** l'autre couche partiellement formée au moins au nombre de une est la deuxième couche de peinture de résine photosensible, ou inversement.

13. Corps multicouche selon l'une quelconque des revendications 9 à 11,
**caractérisé en ce que**
la couche fonctionnelle partiellement formée au moins au nombre de une est la première couche de peinture de résine photosensible, et **en ce que** l'autre couche partiellement formée au moins au nombre de une est la deuxième couche de peinture de résine photosensible mélangée à un colorant, sachant que la première et la deuxième couche de peinture de résine photosensible sont colorées de manière différente.

14. Corps multicouche selon l'une quelconque des revendications 9 à 13,
**caractérisé en ce que**
la couche fonctionnelle partiellement formée au moins au nombre de une et l'autre couche partiellement formée au moins au nombre de une sont réalisées de manière à présenter une forme linéaire respectivement de telle manière que les lignes s'enchevêtrent les unes dans les autres sans décalage latéral.

15. Corps multicouche selon l'une quelconque des revendications 9 à 14,
**caractérisé en ce que**
une première couche d'espacement (2') transparente est réalisée entre la couche fonctionnelle partiellement formée au moins au nombre de une et l'autre couche partiellement formée au moins au nombre de une, **en ce qu'**une deuxième couche d'espacement transparente est réalisée entre au moins deux autres couches partiellement formées, et **en ce que** la couche fonctionnelle partiellement formée au moins au nombre de une et l'autre couche partiellement formée au moins au nombre de une sont réalisées de telle manière qu'apparaît au moins un effet optique de superposition, dépendant éventuellement de l'angle de vue.
